(19) **Europäisches Patentamt / European Patent Office / Office européen des brevets**

(11) **EP 4 317 511 A1**

(12) **EUROPEAN PATENT APPLICATION**
published in accordance with Art. 153(4) EPC

(43) Date of publication:
**07.02.2024 Bulletin 2024/06**

(21) Application number: **22779091.2**

(22) Date of filing: **31.03.2022**

(51) International Patent Classification (IPC):
$C22C\ 38/02^{(2006.01)}$     $C22C\ 38/04^{(2006.01)}$
$C22C\ 38/06^{(2006.01)}$     $C22C\ 38/12^{(2006.01)}$
$C22C\ 38/14^{(2006.01)}$     $C21D\ 1/26^{(2006.01)}$
$C21D\ 8/02^{(2006.01)}$

(52) Cooperative Patent Classification (CPC):
**C21D 1/26; C21D 8/02; C22C 38/02; C22C 38/04;
C22C 38/06; C22C 38/12; C22C 38/14**

(86) International application number:
**PCT/CN2022/084518**

(87) International publication number:
**WO 2022/206911 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2021  CN 202110360131
02.04.2021  CN 202110360562
02.04.2021  CN 202110360528
02.04.2021  CN 202110360154**

(71) Applicant: **BAOSHAN IRON & STEEL CO., LTD.
Shanghai 201900 (CN)**

(72) Inventors:
• **LI, Jun**
**Shanghai 201900 (CN)**
• **WANG, Jian**
**Shanghai 201900 (CN)**
• **LIU, Geng**
**Shanghai 201900 (CN)**
• **WANG, Junfei**
**Shanghai 201900 (CN)**
• **MAO, Zhanhong**
**Shanghai 201900 (CN)**
• **DU, Xiaofeng**
**Shanghai 201900 (CN)**

(74) Representative: **Kuhnen & Wacker
Patent- und Rechtsanwaltsbüro PartG mbB
Prinz-Ludwig-Straße 40A
85354 Freising (DE)**

(54) **LOW-CARBON LOW-ALLOY Q&P STEEL OR HOT-DIP GALVANIZED Q&P STEEL WITH TENSILE STRENGTH GREATER THAN OR EQUAL TO 1180 MPA, AND MANUFACTURING METHOD THEREFOR**

(57)    Provided are a low-carbon low-alloy Q&P steel or hot-dip galvanized Q&P steel with a tensile strength greater than or equal to 1180 MPa, and a manufacturing method therefor. The steel comprises the chemical components by mass percent: C: 0.16-0.23%, Si: 1.1-2.0%, Mn: 1.6-3.0%, P ≤ 0.015%, S ≤ 0.005%, Al: 0.02-0.05%; and the steel can further comprise one or two of Cr, Mo, Ti, Nb and V, and Cr + Mo + Ti + Nb + V ≤ 0.5%, and the balance being Fe and other unavoidable impurities. The manufacturing method comprises the processes of smelting, casting, hot rolling, cold rolling, and a rapid heat treatment or a rapid heat treatment hot dip process. By controlling a rapid heating process, short-time temperature maintaining process and rapid cooling process in a rapid heat treatment process, a recovery process, recrystallization process and austenite phase change process of deformed structures are changed; and by inhibiting the recrystallization of ferrite, a microstructure of an equiaxed fine crystal complex phase is obtained, the final obtained steel has a metallographic structure of a polyphase structure of martensite, residual austenite and ferrite, the grain size is 1-3 μm, the mechanical property is optimized and improved, and the material performance interval range is expanded.

EP 4 317 511 A1

## Description

### Technical Field

The present disclosure relates to the field of rapid heat treatment of materials, and in particular relates to a low-carbon low-alloy Q&P steel or a low-carbon low-alloy hot-dip galvanized Q&P steel with tensile strength $\geq$ 1180Mpa and a manufacturing method for the same.

### Background Art

With the gradual improvement of people's awareness of energy conservation and material service safety, the use of high-strength steel, especially advanced high-strength steel, is increasing, which also makes steel enterprises and scientific research institutes pay more and more attention to the development of advanced high-strength steel. In order to further improve the product of strength and elongation of steel products, the development of the third generation of advanced high-strength steel represented by Q&P (Quenching and Partitioning of carbon) steel has received more and more attention.

Q&P heat treatment process is a new type of continuous heat treatment process technology proposed by Speer et al. at the beginning of the 21st century, which mainly includes four steps:

First, heating the strip steel to austenitizing temperature and holding;
Second, rapidly cooling the sample to a certain temperature between $M_s \sim M_f$ to obtain a dual-phase structure mainly comprising martensite and residual austenite;
Third, heating the strip to a temperature not higher than $M_s$ and holding, so that the carbon element diffuses and partitions from supersaturated martensite to austenite, reduces the carbon content and hardness in martensite, improves its plasticity, and increases the carbon content in austenite and its stability;
Fourth, cooling the strip to room temperature. In this process, if the stability of residual austenite is not enough, part of the austenite will convert to martensite, then the amount of residual austenite obtained at room temperature will be reduced.

Q&P steel is essentially a martensitic steel, but it is different from traditional tempered martensitic steel. The plasticity of Q&P steel is greatly improved under the same strength as tempered martensitic steel. This is due to the presence of residual austenite in the structure of Q&P steel, which is transformed into martensite during deformation, resulting in the so-called TRIP effect and greatly improving the plasticity of steel.

At present, there are two development methods for Q&P process. One is to improve the inhibitory ability of alloying elements on carbide precipitation in steel by adding alloying elements. The other is to optimize the process, find out the optimal temperature and time, and change the microstructure properties of Q&P steel by adjusting the temperature and time of the quenching and partitioning process in the Q&P process.

The U.S. patent application US2003/027825 proposes the general process of Q&P steel production process, in which the austenitization process is limited to be performed at high temperature and the material structure needs to be fully austenitized. For the actual production process, this temperature is too high (850-950 °C), and the time is long (usually the austenitization process of steel plate is required to be heat preserved for 2~5min), the equipment requirements are high and the manufacturing cost is also high.

Chinese patent CN1081931138B discloses "A 980MPa grade automotive cold-rolled high-strength Q&P steel and a manufacturing method thereof". The steel comprises the following chemical components in mass percentage: C: 0.18-0.24%, Si: 0.6~1.3%, Mn: 1.6~2.4%, P: 0.02~0.04%, S≤0.005%, Nb: 0.04-0.07%, N≤0.006%, Als: 0.5~1.0%, with a balance of Fe and other unavoidable impurity elements. The final rolling temperature of the hot rolling process is 870~910 °C, and the coiling temperature is 660~710 °C. The cold rolling reduction rate of the cold rolling process is $\geq$ 45%. The holding temperature of the soaking section in the continuous annealing process is 770~840 °C, the holding temperature of the over-aging section is 300~440 °C, the holding time of the soaking section is 60~225s, and the holding time of the over-aging section is 300~1225s. The skin pass elongation of the skin pass process is 0.3~0.9%. The resultant steel plate has a yield strength of greater than 550MPa, a tensile strength of greater than 980MPa, and an elongation after break of greater than 18%.

The main feature of the steel is that the result of a good matching of strength and plasticity is obtained by traditional Q&P process. Due to the traditional heat treatment method, the soaking time and partitioning time are very long, and the alloy content is relatively high, which will also increase the manufacturing cost and reduce the manufacturing flexibility.

Chinese patent application CN109136779A discloses "A manufacturing method of martensitic matrix 1100MPa grade rare earth Q&P steel". The steel in this invention comprises the following chemical components in mass percentage:

C: 0.15~0.22%, Si: 0.6~1.7%, Mn: 1.1~2.4%, Mo: 0.1~0.5%, Al: 0.1~0.5%, V: 0.05~0.11%, Y: 0.01~0.05%, P: 0.02~0.04%, S≤0.005%, Nb: 0.04~0.07%, N≤0.006%, B: 0.001~0.006%, with a balance of Fe and other unavoidable impurity elements. The resulting steel plate has a tensile strength of about 1 100MPa and an elongation after break of about 20%.

The main feature of the steel in this invention is that by adding rare earth Y and alloying elements such as Mo, V, Nb, etc., at the same time for refining grains, the content of Mn element is reduced to improve welding performance. Its manufacturing process requires two castings. Smelting process: according to the ingredient formula given in the invention, the components are subjected to converter smelting, secondary refining in vacuum furnace and casting to obtain a casting billet. Trace element melting process: trace alloying element powder(s) (Mo, Al, V, Y, Nb, N, B, etc.) is added to the arc melting furnace to obtain a secondary casting billet. Hot rolling process: a heating furnace is used to heat the casting billet to 1100-1150°C and held for 1-3h, followed by hot rolling. The final rolling temperature is 820-880°C and the coiling temperature is 550-650°C. The resultant steel plate having a thickness of 1.5-3.0mm is then water-quenched to room temperature. Cold rolling process: the steel plate is subjected to multi-pass cold rolling after pickling to obtain a steel plate with a thickness of 1.2-1.5mm.

The entire annealing process is divided into three parts:

First time: Manganese partitioning process in dual-phase zone: the material is heated to a certain temperature between $A_{C3}$ and Aci (dual-phase region) at 10-30°C/s and held for 3-15min, then water-quenched to room temperature;

Second time: primary carbon partitioning process: the material is held at a certain temperature $T_0$ between Ms and Mf for 10-300s, and then the material is water-quenched to room temperature;

Third time: secondary carbon partitioning process: the material is subjected to a secondary carbon partitioning at a certain temperature $T_1$ ($T_1$ is slightly lower than $T_0$) between Ms and Mf for 10-300s, and then the material is water-quenched to room temperature.

The invention has complex manufacturing process, high energy consumption, high alloy content and complexity, and multiple water quenching treatments, which involves the removal of the oxide layer on the surface of the material and brings many problems in the environment and energy consumption, resulting in increased manufacturing costs and reduced manufacturing flexibility.

Chinese patent application CN108431248A discloses "A method for manufacturing high-strength steel plates with improved ductility and formability and the steel plates obtained therefrom". The steel in this invention comprises the following chemical components in mass percentage: C: 0.15~0.23%, Mn: 2.0~2.8%, Si: 1.0~2.1%, Al: 0.02~1.0%, Al+Si: 1.0~2.1%, Nb: 0-0.035%, Mo≤0.3%, Cr≤0.04%, with a balance of Fe and other unavoidable impurity elements. The steel plate is annealed at annealing temperature TA to obtain a structure containing at least 65% austenite and up to 35% ferrite. The steel plate is quenched from a temperature of at least 600 °C to a quenching temperature QT of Ms-170 °C to Ms-80 °C at a cooling rate of at least 20 °C/s, heated to a partitioning temperature PT of 350 °C to 450 °C, and held at the partitioning temperature for a partitioning time Pt of 80-440s, and then immediately cooled to room temperature. The obtained steel plate has a tensile strength of greater than 1180MPa and an elongation after break of greater than 12%.

The main feature of the steel in this invention is that by using high Mn, high Si and high Al components in traditional Q&P process, the proportion of each phase in the final structure is controlled, so as to obtain a good matching of strength and plasticity. Due to the traditional heat treatment method, the soaking time and partitioning time are very long, which increases the manufacturing cost and reduces the manufacturing flexibility.

Chinese patent application CN109182923A discloses "A heat treatment method for low-carbon microalloyed cold-rolled TRIP980 steel with high product of strength and elongation". The steel in this invention comprises the following chemical components in mass percentage: C: 0.18~0.23%, Si: 1.6~1.8%, Mn: 1.5~2.0%, Nb: 0.025~0.045%, Ti: 0.08~0.15%, P≤0.015%, S≤0.005%, with a balance of Fe and other unavoidable impurity elements. The main manufacturing steps of the steel are as follows:

1) the casting billet with a certain chemical composition is forged into a forged billet, which is subjected to reheating and hot rolling, followed by water cooling and coiling to obtain hot-rolled strip;
2) the hot-rolled strip is cold-rolled after pickling into a cold-rolled strip;
3) the cold-rolled strip is completely austenitized and held for a period of time, and then water-cooled to room temperature to produce pre-quenched strip with a full martensitic structure;
4) the pre-quenched strip is subjected to surface descaling to remove iron oxide layer and decarburization layer, then annealed by reheating and held for a period of time, and then cooled to a certain temperature with a salt bath and held for a certain period of time, water-cooled to room temperature to obtain the final finished strip.

In Step 1), the reheating temperature of the forged billet is in the range of 1100-1200 °C, the holding time is 3-5h, the initial hot rolling temperature is 1050-1150 °C, and the final rolling temperature is 850-900 °C. A 4-roller reversible rolling mill for 7 passes of reciprocating rolling with a reduction rate of 30-50% in the first two passes and a reduction rate of 20-30% in the last five passes is used in hot rolling. Then the steel is water cooled to 650-750 °C and then asbestos is put for heat preservation for 8-10h, so as to simulate the coiling process. The thickness of hot rolled strip steel is 4-5.5mm.

In the cold rolling of Step 2), a four-roll rolling mill is used for unidirectional rolling with 10-15 passes of rolling, including 3-5 passes of skin pass rolling. The final cold-rolled strip has a thickness of 1.0-1.5mm.

In Step 3), the austenitizing temperature of cold-rolled strip steel is 870-920 °C, and the austenitizing holding time is 5-15min.

In Step 4), the removal thickness of iron oxide scale and the decarburization layer is 50-100$\mu$m on each upper and lower bottom surface. The pre-quenched strip steel is reheated to an annealing temperature of 780-830 °C, wherein the annealing holding time is 3-8min. Then, the strip steel is cooled with the salt bath at a cooling rate of 100-200°C/s, wherein the holding temperature of the salt bath is 320-400°C and the holding time is 5-10min.

The main feature of the steel of the invention is that the grain is refined by adding more microalloying elements Nb and Ti for high elongation (A%≥24%) and high strength (≥980MPa). Compared with the traditional TRIP steel production process, this invention adopts the method of two heat treatments for cold-rolled strip steel: cold-rolled strip steel after pickling is first fully austenitized annealed, then quenched into a full martensitic structure, followed by surface scale removal and removal of the decarburized layer, and then annealed again by re-heating to finally obtain the finished strip steel. This method has problems of high added amount of microalloying elements and increased manufacturing cost and difficulty of manufacturing process caused by two annealings.

The Chinese patent application CN105543674B discloses "A manufacturing method for cold-rolled ultra-high strength dual-phase steel with high local forming performance", the chemical composition of the inventive high-strength dual-phase steel by weight percentage is: C: 0.08~0.12%, Si: 0.1~0.5%, Mn: 1.5~2.5%, Al: 0.015~0.05%, with a balance of Fe and other unavoidable impurities. The chemical composition is selected as a raw material and smelted into a casting slab. The casting slab is heated at 1150~1250 °C for 1.5-2 hours and then hot rolled. The initial rolling temperature for hot rolling is 1080~1150 °C, and the final rolling temperature is 880~930 °C. After rolling, the steel is cooled to 450~620 °C at a cooling rate of 50~200 °C/s for coiling, to obtain a hot-rolled steel plate with bainite as the main structure. The hot-rolled steel plate is cold-rolled, and then heated to 740~820°C at a speed of 50~300 °C/s for annealing with a holding time of 30s~3min, and cooled to 620~680°C at a cooling rate of 2~6°C/s, and then cooled to 250~350°C at a cooling rate of 30~100°C/s for over ageing treatment for 3~5min, thereby obtaining an ultra-high strength dual-phase steel with ferritic + martensitic dual-phase structure. The ultra-high strength dual phase steel has a yield strength of 650~680MPa, a tensile strength of 1023~1100MPa, an elongation of 12.3-13%, and it does not crack when bends 180° in the rolling direction.

The most important feature of the patent is the combination of the control of cooling conditions after hot rolling with rapid heating in the continuous annealing process, that is, by controlling the cooling process after hot rolling, the banded structure is eliminated to homogenize the structure; and rapid heating is adopted in the subsequent continuous annealing process to achieve structure refinement on the basis of ensuring structure uniformity. It can be seen that the patented technology adopts rapid heating annealing with a proviso that the hot-rolled raw material with bainite as the main structure is obtained after hot rolling. Its purpose is mainly to ensure the uniformity of the structure and avoid the appearance of banded structure which leads to insufficient local deformation.

The main shortcomings of this patent are:

First, to obtain hot-rolled raw materials with bainite structure, the hot-rolled raw materials is required to have high strength and large deformation resistance, which brings great difficulties to the subsequent pickling and cold rolling production;
Second, its understanding of rapid heating is limited to the level of shortening the heating time and refining grains. Its heating rate is not differed according to the changes of material microstructure in different temperature sections. But all are heated at a rate of 50-300°C/s, resulting in an increase in the production cost of rapid heating;
Third, the soaking time is 30s-3min. The increase of soaking time will inevitably weaken a part of the refinement grain effect produced by rapid heating, which is not conducive to the improvement of material strength and toughness;
Fourth, it is necessary to carry out 3-5 minutes of over aging treatment in the patent and it is actually too long and unnecessary for rapid heat treatment of DP steel. Moreover, the increase of soaking time and over-ageing time is not conducive to saving energy, reducing unit equipment investment and unit floor space, and is not conducive to the stable operation of strip at high-speed in the furnace, which is obviously not a rapid heat treatment process in the strict sense.

Chinese patent application 201711385126.5 discloses "a 780MPa grade low carbon low alloy TRIP steel". It has a chemical composition by mass percentage of: C: 0.16-0.22%, Si: 1.2-1.6%, Mn: 1.6-2.2%, with a balance of Fe and other unavoidable impurity elements, which is obtained by the following rapid heat treatment process:the strip steel is rapidly heated from room temperature to 790~830 °C of austenitic and ferritic dual-phase zone with a heating rate of 40~300 °C/s. The residence time in the heating target temperature range of the dual-phase zone is 60~100s. The strip steel is rapidly cooled from the temperature of the dual-phase zone to 410~430°C at a cooling rate of 40~100°C/s, and held in this temperature range for 200~300s. The strip steel is quickly cooled to room temperature from 410~430 °C. It is characterized in that: the metallographic structure of TRIP steel is a three-phase structure of bainite, ferrite and austenite. The TRIP steel has significantly refined average grain size, a tensile strength of 950~1050MPa, an elongation of 21~24% and a maximum product of strength and elongation up to 24GPa%.

The shortcomings of this patent are mainly as follows:

First, the patent discloses a 780MPa grade low-carbon low-alloy TRIP steel product and its process technology. But the tensile strength of the TRIP steel product is 950~1050MPa, which is too high for a 780MPa grade product since its use effect by the users may be not good, and too low for a 980MPa grade product since it cannot well meet the user's strength requirements;
Second, the patent adopts one-stage rapid heating, and the same rapid heating rate is adopted in the entire heating temperature range, which is not treated differently according to the requirement of material structure changes in different temperature sections. All heated rapidly at a rate of 40~300 °C/s will inevitably lead to an increase in the production cost of the rapid heating process;
Third, the soaking time in the patent is set at 60~100s, which is similar to the soaking time of the traditional continuous annealing, and the increase of the soaking time inevitably partially weakens the refinement grain effect produced by rapid heating and is very unfavorable to the improvement of material strength and toughness;
Fourth, it is required to perform bainite isothermal treatment for 200~300s in this patent, which is actually too long and unnecessary for rapidly heat-treated products since it does not work as it should. Moreover, the increase of soaking time and isothermal treatment time is not conducive to saving energy, reducing unit equipment investment and unit floor space, and is not conducive to the stable operation of strip steel at high-speed in the furnace, which is obviously not a rapid heat treatment process in the strict sense.

Chinese patent application CN107794357B and US patent application US2019/0153558A1 disclose "A method for producing ultra-high strength martensitic cold-rolled steel plate by ultra-fast heating process". The high-strength dual-phase steel has a chemical composition by weight percentage of: C: 0.10~0.30%, Mn: 0.5~2.5%, Si: 0.05~0.3%, Mo: 0.05~0.3%, Ti: 0.01~0.04%, Cr: 0.10~0.3%, B: 0.001~0.004%, P≤0.02%, S≤0.02%, with a balance of Fe and other unavoidable impurities. Its mechanical properties of the dual-phase steel are as follows: a yield strength $Rp_{0.2}$ of greater than 1 100MPa, a tensile strength $R_m$=1800-2300MPa, a maximum elongation of 12.3%, and a uniform elongation of 5.5~6%. The invention provides an ultra-rapid heating production process for ultra-high-strength martensitic cold-rolled steel plate, which comprises process characteristics of first heating the cold-rolled steel plate to 300~500°C at 1~10°C/s, and then reheating it to single-phase austenite zone of 850~950°C at a heating rate of 100~500°C/s; then immediately water-cooling the steel plate to room temperature after heat preservation for no more than 5s to obtain an ultra-high strength cold-rolled steel plate.

The deficiencies of the process described in the patent include:

First, the annealing temperature of the inventive steel has entered the ultra-high temperature range of the single-phase austenitic zone, and it also contains more alloying elements and has a yield strength and a tensile strength of more than 1000MPa. It brings great difficulties to the heat treatment process, the process before heat treatment and subsequent use by users;
Second, the ultra-rapid heating annealing method of the invention adopts a holding time of no more than 5s, which not only has poor controllability of heating temperature, but also leads to uneven distribution of alloying elements in the final product, resulting in uneven and unstable microstructure properties of the product;
Third, the final fast cooling for cooling to room temperature is performed by water quenching without necessary tempering treatment, so that the microstructure and performance of the final product and the distribution of alloying elements in the final structure cannot provide the product with optimized strength and toughness, resulting in excess strength of the final product, but insufficient plasticity and toughness;
Fourth, the method of the invention will cause problems such as poor steel plate shape and surface oxidation due to too high cooling rate of water quenching. Therefore, the patented technology has no or little practical application value.

Chinese patent CN1081931138B discloses "A 980MPa grade cold-rolled high-strength Q&P steel for automobiles and a manufacturing method thereof". The steel has a chemical composition by mass percentage of: C: 0.18~0.24%, Si: 0.6~1.3%, Mn: 1.6~2.4%, P: 0.02~0.04%, S≤0.005%, Nb: 0.04~0.07%, N≤0.006%, Als: 0.5~1.0%, with a balance of Fe and other unavoidable impurities. In the hot rolling process, the final rolling temperature is 870~910 °C, and the coiling temperature is 660~710 °C. The cold rolling reduction rate of the cold rolling process is ≥ 45%. The holding temperature of the soaking section in the continuous annealing process is 770~840 °C, the holding temperature of the over-aging section is 300~440 °C, the holding time of the soaking section is 60~225s, and the holding time of the over-aging section is 300~1225s. The skin pass elongation of the skin pass process is 0.3~0.9%. The obtained steel plate has a yield strength of greater than 550MPa, a tensile strength of greater than 980MPa, and an elongation after break of greater than 18%.

The main feature of the steel in this invention is that the result of a good matching of strength and plasticity is obtained by traditional Q&P process. Due to the adoption of traditional heat treatment method, the soaking time and partitioning time are very long, and the alloy content is relatively high, which also increases the manufacturing cost and reduces the manufacturing flexibility.

Chinese patent application CN109136779A discloses "A manufacturing method of martensitic matrix 1100MPa grade rare earth Q&P steel". The steel has a chemical composition by mass percentage of: C: 0.15~0.22%, Si: 0.6~1.7%, Mn: 1.1~2.4%, Mo: 0.1~0.5%, Al: 0.1~0.5%, V: 0.05~0.11%, Y: 0.01~0.05%, P: 0.02~0.04%, S≤0.005%, Nb: 0.04~0.07%, N≤0.006%, B: 0.001~0.006%, with a balance of Fe and other unavoidable impurities. The resultant steel plate has a tensile strength of about 1 100MPa and an elongation at break of about 20%.

The main feature of the steel in this invention is that by adding rare earth Y and alloying elements such as Mo, V, Nb, etc., at the same time for refining grains, the content of Mn elements is reduced to improve welding performance. Its manufacturing process requires two castings. Smelting process: according to the ingredient formula given in the invention, the components are subjected to converter smelting, secondary refining in vacuum furnace and casting to obtain a casting billet. Trace element melting process: trace alloying element powder(s) (Mo, Al, V, Y, Nb, N, B, etc.) is added to the arc melting furnace to obtain a secondary casting billet. Hot rolling process: a heating furnace is used to heat the casting billet to 1100-1150°C and held for 1-3h, followed by hot rolling. The final rolling temperature is 820-880°C and the coiling temperature is 550-650°C. The resultant steel plate having a thickness of 1.5-3.0mm is then water-quenched to room temperature. Cold rolling process: the steel plate is subjected to multi-pass cold rolling after pickling to obtain a steel plate with a thickness of 1.2-1.5mm.

The entire annealing process is divided into three parts:

First time: Manganese partitioning process in dual-phase zone: the material is heated to a certain temperature between $A_{C3}$ and Aci (dual-phase region) at 10-30°C/s and held for 3-15min, then water-quenched to room temperature;

Second time: primary carbon partitioning process: the material is held at a certain temperature $T_0$ between Ms and Mf for 10-300s, and then the material is water-quenched to room temperature;

Third time: secondary carbon partitioning process: the material is subjected in secondary carbon partitioning at a certain temperature $T_1$ ($T_1$ is slightly lower than $T_0$) between Ms and Mf for 10-300s, and then the material is water-quenched to room temperature.

The invention has complex manufacturing process, high energy consumption, high alloy content and complexity, and multiple water quenching treatments, which involves the removal of the oxide layer on the surface of the material and brings many problems in the environment and energy consumption, resulting in increased manufacturing costs and reduced manufacturing flexibility.

Chinese patent application CN108431248A discloses "A method for manufacturing high-strength steel plates with improved ductility and formability and the steel plates obtained therefrom". The steel in this invention comprises the following chemical components in mass percentage: C: 0.15~0.23%, Mn: 2.0~2.8%, Si: 1.0~2.1%, Al: 0.02~1.0%, Al+Si: 1.0~2.1%, Nb: 0-0.035%, Mo≤0.3%, Cr≤0.04%, with a balance of Fe and other unavoidable impurity elements. The steel plate is annealed at annealing temperature TA to obtain a structure containing at least 65% austenite and up to 35% ferrite. The steel plate is quenched from a temperature of at least 600 °C to a quenching temperature QT of Ms-170 °C to Ms-80 °C at a cooling rate of at least 20 °C/s, heated to a partitioning temperature PT of 350 °C to 450 °C, and held at the partitioning temperature for a partitioning time Pt of 80-440s, and then immediately cooled to room temperature. The obtained steel plate has a tensile strength of greater than 1180MPa and an elongation after break of greater than 12%.

The main feature of the steel in this invention is that by using high Mn, high Si and high Al components in traditional Q&P process, the proportion of each phase in the final structure is controlled, so as to obtain a good matching of strength and plasticity. Due to the traditional heat treatment method, the soaking time and dispensing time are very long, which increases the manufacturing cost and reduces the manufacturing flexibility.

Chinese patent application CN109182923A discloses "A heat treatment method for low-carbon microalloyed cold-rolled TRIP980 steel with high product of strength and elongation". The steel in this invention comprises the following chemical components in mass percentage: C: 0.18~0.23%, Si: 1.6~1.8%, Mn: 1.5~2.0%, Nb: 0.025~0.045%, Ti: 0.08~0.15%, P≤0.015%, S≤0.005%, with a balance of Fe and other unavoidable impurity elements. The main manufacturing steps of the steel are as follows:

1) the casting billet with a certain chemical composition is forged into a forged billet, which is subjected to reheating and hot rolling, followed by water cooling and coiling to obtain a hot-rolled strip;
2) the hot-rolled strip is cold-rolled after pickling into a cold-rolled strip;
3) the cold-rolled strip is completely austenitized and held for a period of time, and then water-cooled to room temperature to produce pre-quenched strip with a full martensitic structure;
4) the pre-quenched strip is subjected to surface descaling to remove iron oxide layer and decarburization layer, then annealed by reheating and held for a period of time, and then cooled to a certain temperature with a salt bath and held for a certain period, water-cooled to room temperature to obtain the final finished strip.

In Step 1), the reheating temperature of the forged billet is in the range of 1100-1200 °C, the holding time is 3-5h, the initial hot rolling temperature is 1050-1150 °C, and the final rolling temperature is 850-900 °C. A 4-roller reversible rolling mill for 7 passes of reciprocating rolling with a reduction rate of 30-50% in the first two passes and a reduction rate of 20-30% in the last five passes is used in hot rolling. Then the steel is water cooled to 650-750 °C and then asbestos is put for heat preservation for 8-10h, so as to simulate the coiling process. The thickness of hot rolled strip steel is 4-5.5mm.

In the cold rolling of Step 2), a four-roll rolling mill is used for unidirectional rolling with 10-15 passes of rolling, including 3-5 passes of skin pass rolling. The final cold-rolled strip has a thickness of 1.0-1.5mm.

In Step 3), the austenitizing temperature of cold-rolled strip is 870-920 °C, and the austenitizing holding time is 5-15min.

In Step 4), the removal thickness of iron oxide scale and the decarburization layer is 50-100$\mu$m on each upper and lower bottom surface. The pre-quenched strip steel is reheated to an annealing temperature of 780-830 °C, wherein the annealing holding time is 3-8min. Then, the strip steel is cooled with the salt bath at a cooling rate of 100-200°C/s, wherein the holding temperature of the salt bath is 320-400°C and the holding time is 5-10min.

The main feature of the steel of the invention is that the grain is refined by adding more microalloying elements Nb and Ti for high elongation (A%≥24%) and high strength (≥980MPa). Compared with the traditional TRIP steel production process, this invention adopts the method of two heat treatments for cold-rolled strip: cold-rolled strip after pickling is first fully austenitized annealed, then quenched into a full martensitic structure, followed by surface scale removal and removal of the decarburized layer, and then annealed again by re-heating to finally obtain the finished strip. This method has problems of high added amount of microalloying elements and increased manufacturing cost and difficulty of manufacturing process caused by two annealings.

At present, limited by the equipment capacity of the traditional continuous annealing furnace production line, the research on cold-rolled Q&P steel products and annealing process is based on that the strip steel is slowly heated at a heating rate (5~20°C/s) of the existing industrial equipment, so that it completes the recrystallization and austenitization phase transition in sequence. Therefore, the heating time and soaking time are relatively long, energy consumption is high, and the traditional continuous annealing production line also has problems such as a large number of rolls in the high-temperature furnace section of strip steel. According to the product outline and capacity requirements, the soaking time of the traditional continuous annealing unit is generally required to be 1~3min. For the traditional production line with a unit speed of about 180 m/min, the number of rolls in the high-temperature furnace section generally varies from 20 to 40, which increases the difficulty of strip steel surface quality control.

**Summary**

One object of the present disclosure is to provide a low carbon low alloy Q&P steel having a tensile strength of ≥ 1180MPa and a low carbon low alloy hot-galvanized Q&P steel having a tensile strength of ≥ 1180MPa and a manufacturing method for the same by rapid heat treatment. The rapid heat treatment changes the recovery, recrystallization and austenite phase transition process of deformation structure, increases the nucleation rate (including recrystallization nucleation rate and austenitic phase deformation nucleation rate), shortens the grain growth time and refines the grain and increases the content of residual austenite, thereby further improving the strength and placsticity of the material in the present disclosure. The low-carbon low-alloy Q&P steel of the present disclosure has uniformly distributed matrix structure with obvious lamellar tempered martensite and having a grain size of 1~3$\mu$m. There is a uniformly distributed residual austenitic phase and ferritic phase around the martensitic reinforced phase grain. The lamellar structure has 75-90% of martensitic structure, 10~25% of residual austenitic structure and 3~10% of ferritic structure by volume.

The low carbon low alloy Q&P steel in the present disclosure has a yield strength of ≥ 660MPa, a tensile strength of ≥ 1180MPa, an elongation of ≥ 18%, a product of strength and elongation of ≥ 24GPa% and superior use performance such as a good matching of strength and toughness, formability and welding. The rapid heat treatment process improves production efficiency, reduces production costs and energy consumption by reducing alloy content in the same grade of steel, significantly reduces the number of furnace rollers and improves the surface quality of material.

To achieve the above object, the technical solution of the present disclosure is as follows:

The low carbon low alloy Q&P steel having a tensile strength of ≥ 1180MPa comprises the following chemical components in mass percentages: C: 0.16~0.23%, Si: 1.1~2.0%, Mn: 1.6~3.0%, P≤0.015%, S≤0.005%, Al: 0.02~0.05%, optionally one or two Cr, Mo, Ti, Nb, V, and Cr+Mo+Ti+Nb+V≤0.5%, with a balance of Fe and other unavoidable impurities. Preferably, the metallographic structure of the low carbon low alloy Q&P steel having a tensile strength of ≥ 1180MPa is a multiphase structure of 75~90% of martensite, 10~25% of residual austenite and 3~10% of ferrite. The matrix structure is evenly distributed, and obvious lamellar tempered martensite appears in the structure, and the grain size is 1-3$\mu$m. There is a uniformly distributed ferritic phase around the martensitic reinforced phase grains, which are mainly lamellar structure. Preferably, the austenite in the metallographic structure of the Q&P steel has good thermal stability. The austenite conversion rate at -50 °C is less than 8% and austenite conversion rate at -190 °C is less than 30%. Preferably, the Q&P steel has a yield strength of 668-1112MPa, a tensile strength of 1181~1350MPa, an elongation of 18.9~24.2%, a product of strength and elongation of 24.1~28.97GPa%.

Preferably, in the low carbon low alloy Q&P steel having a tensile strength of ≥ 1180MPa, the C content is in a range selected from a group consisting of 0.17~0.23%, 0.19~0.21% and 0.18~0.21%. Preferably, in the low carbon low alloy Q&P steel having a tensile strength of ≥ 1180MPa, the Si content is in a range selected from a group consisting of 1.1~1.7%, 1.3~1.5%, 1.4~2.0% and 1.6~1.8%. Preferably, in the low carbon low alloy Q&P steel having a tensile strength of ≥ 1180MPa, the Mn content is in a range selected from a group consisting of 1.6~2.2%, 1.8~2.0%, 2.4~3.0% and 2.6~2.8%.

Preferably, in the low carbon low alloy Q&P steel having a tensile strength of ≥ 1180MPa, the Cr content is≤0.35%, such as ≤0.25%; the Mo content is≤0.25%; the Nb content is ≤0.06%, such as ≤0.04%; the Ti content is ≤0.065%, such as ≤0.04%, for example, 0.006~0.016%; the V content is ≤0.055%, such as ≤0.035%.

Preferably, the low carbon low alloy Q&P steel having a tensile strength of ≥1180MPa according to the present disclosure is obtained by the following process:

1) Smelting, casting
wherein the above components are subjected to smelting and casting to form a slab;
2) hot rolling, coiling
wherein a coiling temperature is 550~680°C;
3) cold rolling
wherein a cold rolling reduction rate is 40~85%;
4) Rapid heat treatment

wherein the steel plate after cold rolling is rapidly heated to 770~845°C, wherein the rapid heating is performed in one stage or two stages; when the rapid heating is performed in one stage, a heating rate is 50~500 °C/s; when the rapid heating is performed in two stages, the steel plate is heated in the first stage from room temperature to 550~625°C at a heating rate of 15~500°C/s, heated in the second stage from 550~625°C to 770~845°C at a heating rate of 50~500°C/s; then soaked at a soaking temperature of 770~845 °C for a soaking time of 10~60s; wherein after soaking, the steel plate is slowly cooled to 700~770 °C at a cooling rate of 5~15°C/s, then rapidly cooled to 230~280°C at a cooling rate of 50~200°C/s, and heat preserved in this temperature range for 2-10s, then heated to 300~470 °C at a heating rate of 10~30 °C/s for tempering treatment for 10~60s; and after tempering treatment, cooled to room temperature at a cooling rate of 30~100°C/s.

Preferably, in step 2), the hot rolling finishing temperature is ≥A$_{r3}$.
Preferably, in step 2), the coiling temperature is 580~650°C.
Preferably, in step 3), the cold rolling reduction rate is 60~80%.
Preferably, in step 4), a total time of the rapid heat treatment is 71-186s.
Preferably, in step 4), when the rapid heating is performed in one stage, the heating rate is 50~300°C/s.
Preferably, in step 4), the rapid heating is performed in two stages, wherein the steel plate is heated in the first stage from room temperature to 550~625°C at a heating rate of 15~300°C/s, heated in the second stage from 550~625°C to 770~845°C at a heating rate of 50~300°C/s.
Preferably, in step 4), the rapid heating is performed in two stages, wherein the steel plate is heated in the first stage from room temperature to 550~625°C at a heating rate of 30~300°C/s, heated in the second stage from 550~625°C to 770~845°C at a heating rate of 80~300°C/s.
Preferably, in step 4), the rapid cooling rate of the steel plate is 50~150°C/s.

In some embodiments, the low carbon low alloy Q&P steel having a tensile strength of ≥ 1180MPa comprises the following chemical components in mass percentages: C: 0.17~0.23%, Si: 1.1~1.7%, Mn: 1.6~2.2%, P≤0.015%, S≤0.005%, Al: 0.02~0.05%, optionally one or two of Cr, Mo, Ti, Nb, V, and Cr+Mo+Ti+Nb+V≤0.5%, with a balance of Fe and other unavoidable impurities. Preferably, in the low carbon low alloy Q&P steel, the C content is 0.19~0.21%. Preferably, in the low carbon low alloy Q&P steel, the Si content is 1.3~1.5%. Preferably, in the low carbon low alloy Q&P steel, the Mn content is 1.8~2.0%. Preferably, the metallographic structure of the Q&P steel is a multiphase structure of 75~90% of martensite, 10~25% of residual austenite and 3~10% of ferrite. The matrix structure is evenly distributed, and obvious lamellar tempered martensite appears in the structure, and the grain size is 1-3μm. There is a uniformly distributed ferritic phase around the martensitic reinforced phase grains, which are mainly lamellar structure. Preferably, the austenite in the metallographic structure of the Q&P steel has good thermal stability. The austenite conversion rate at -50 °C is less than 8% and austenite conversion rate at -190 °C is less than 30%. Preferably, the Q&P steel has a yield strength of 668~1002MPa, a tensile strength of 1181~1296MPa, an elongation of 18.9~24.2%, a product of strength and elongation of 24.1~28.6GPa%.

In some embodiments, the low carbon low alloy Q&P steel having a tensile strength of ≥ 1180MPa comprises the following chemical components in mass percentages: C: 0.16~0.23%, Si: 1.4~2.0%, Mn: 2.4~3.0%, Ti: 0.006~0.016%, P≤0.015%, S≤0.002%, Al: 0.02~0.05%, optionally one or two of Cr, Mo, Nb, V, and Cr+Mo+Ti+Nb+V≤0.5%, with a balance of Fe and other unavoidable impurities. Preferably, the low carbon low alloy Q&P steel having a tensile strength of ≥ 1180MPa is a low carbon low alloy Q&P steel having a tensile strength of ≥ 1280MPa. Preferably, in the low carbon low alloy Q&P steel, the C content is 0.18~0.21%. Preferably, in the low carbon low alloy Q&P steel, the Si content is 1.6~1.8%. Preferably, in the low carbon low alloy Q&P steel, the Mn content is 2.6~2.8%. Preferably, the metallographic structure of the Q&P steel is a multiphase structure of 80~90% of martensite, 10~20% of residual austenite and 3~5% of ferrite. The matrix structure is evenly distributed, and obvious lamellar tempered martensite appears in the structure, and the grain size is 1-3μm. There is a uniformly distributed ferritic phase around the martensitic reinforced phase grains, which are mainly lamellar structure. Preferably, the austenite in the metallographic structure of the Q&P steel has good thermal stability. The austenite conversion rate at -50 °C is less than 8% and austenite conversion rate at -190 °C is less than 30%. Preferably, the Q&P steel has a yield strength of 754~1112MPa, a tensile strength of 1281~1350MPa, an elongation of 19-22.2%, a product of strength and elongation of 24.8~28.97GPa%.

In some embodiments, the low carbon low alloy Q&P steel having a tensile strength of ≥ 1180MPa comprises the following chemical components in mass percentages, C: 0.16~0.23%, Si: 1.1~2.0%, Mn: 1.6~3.0%, P≤0.015%, S≤0.005%, preferably≤0.002%, Al: 0.02~0.05%, optionally one or two of Cr, Mo, Ti, Nb, V, and Cr+Mo+Ti+Nb+V≤0.5%, with a balance of Fe and other unavoidable impurities. Preferably, the metallographic structure of the hot-dip galvanized Q&P steel is a three phase structure of martensite, ferrite and austenite. The matrix structure is evenly distributed, and obvious lamellar tempered martensite appears in the structure, and the grain size is 1-3μm. There is a uniformly distributed ferritic phase around the martensitic reinforced phase grains, which are mainly lamellar structure. Preferably, the metallographic structure of the Q&P steel is a three phase structure of 45~75% by volume of martensite, 15~30% by volumne of ferrite and 10~25% by volume of austenite. Preferably, the hot-dip galvanized Q&P steel has a yield strength of ≥720MPa, a tensile strength of ≥1180MPa, an elongation of ≥19%, a product of strength and elongation of ≥23.0GPa%. Preferably, the hot-dip galvanized Q&P steel has a yield strength of 721~956MPa, a tensile strength of 1184~1352MPa, an elongation of 19-22.5%, a product of strength and elongation of 23.6~28.9GPa%. Preferably, the austenite in the metallographic structure of the hot-dip galvanized Q&P steel has good thermal stability. The austenite conversion rate at -50 °C is less than 8% and austenite conversion rate at -190 °C is less than 30%.

Preferably, in the low carbon low alloy hot-dip galvanized Q&P steel having a tensile strength of ≥1180MPa, the C content is in a range selected from a group consisting of 0.17~0.23%, 0.19~0.21% and 0.18~0.21%. Preferably, in the low carbon low alloy Q&P steel having a tensile strength of ≥1180MPa, the Si content is in a range selected from a group consisting of 1.1~1.7%, 1.3~1.5%, 1.4~2.0% and 1.6~1.8%. Preferably, in the low carbon low alloy Q&P steel having a tensile strength of ≥1180MPa, the Mn content is in a range selected from a group consisting of 1.6~2.2%, 1.8~2.0%, 2.4~3.0% and 2.6~2.8%.

Preferably, in the low carbon low alloy Q&P steel having a tensile strength of ≥1180MPa, the Cr content is≤0.35%, such as ≤0.25%; the Mo content is ≤0.25%; the Nb content is ≤0.06%, such as ≤0.04%; the Ti content is ≤0.065%, such as ≤0.04%, for example, 0.006~0.016%; the V content is ≤0.055%, such as ≤0.035%.

In some embodiments, the low carbon low alloy hot-dip galvanized Q&P steel having a tensile strength of ≥1180MPa is prepared by the following process:

    1) Smelting, casting
    wherein the above components are subjected to smelting and casting to form a slab;
    2) hot rolling, coiling
    wherein a hot rolling finishing temperature is ≥A$_{r3}$; then the steel plate is cooled to 550~680°C for coiling;
    3) cold rolling

wherein a cold rolling reduction rate is 40~80%;
4) Rapid heat treatment, hot-galvanizing

wherein the steel plate after cold rolling is rapidly heated to 770~845°C, wherein the rapid heating is performed in one stage or two stages; when the rapid heating is performed in one stage, a heating rate is 50~500 °C/s; when the rapid heating is performed in two stages, the steel plate is heated in the first stage from room temperature to 550~620°C at a heating rate of 15~500°C/s, heated in the second stage from 550~625°C to 770~845°C at a heating rate of 30~500°C/s (such as 50~500°C/s); then soaked at a soaking temperature of 770~845 °C for a soaking time of 10~60s;

wherein after soaking, the steel plate is slowly cooled to 700~770 °C at a cooling rate of 5~15°C/s, then rapidly cooled to 230~280°C at a cooling rate of 50~200°C/s, and heat preserved in the temperature range for 2~10s; then the steel plate is heated to 460~470 °C at a heating rate of 10~30 °C/s for partitioning, wherein the partitioning time is 10~60s; then the steel plate is immersed in a zinc pot for hot galvanizing;

after hot galvanizing, the steel plate is rapidly cooled to room temperature at a cooling rate of 30~150°C/s to obtain a hot dip galvanized GI product; or after hot galvanizing, the steel plate is heated to 480~550°C at a heating rate of 10~300°C/s and alloyed for 5~20s; after alloying, the steel plate is rapidly cooled to room temperature at a cooling rate of 30~250°C/s to obtain an alloy galvannealed GA product.

Preferably, in step 2), the coiling temperature is 580~650°C.

Preferably, in step 3), the cold rolling reduction rate is 60~80%.

Preferably, in step 4), a total time of the rapid heat treatment and hot-galvanizing is 43~186s.

Preferably, in step 4), when the rapid heating is performed in one stage, the heating rate is 50~300°C/s.

Preferably, in step 4), the rapid heating is performed in two stages, wherein the steel plate is heated in the first stage from room temperature to 550~625°C at a heating rate of 15~300°C/s, heated in the second stage from 550~625°C to 770~845°C at a heating rate of 50~300°C/s.

Preferably, in step 4), the rapid heating is performed in two stages, wherein the steel plate is heated in the first stage from room temperature to 550~625°C at a heating rate of 30~300°C/s, heated in the second stage from 550~625°C to 770~845°C at a heating rate of 80~300°C/s.

Preferably, in step 4), the cooling rate of the strip steel or steel plate in the rapid cooling stage is 50~150°C/s.

In some embodiments, the low carbon low alloy hot-dip galvanized Q&P steel having a tensile strength of ≥ 1180MPa comprises the following chemical components in mass percentages, C: 0.17~0.23%, Si: 1.1~1.7%, Mn: 1.6~2.2%, P≤0.015%, S≤0.005%, Al: 0.02~0.05%, optionally one or two of Cr, Mo, Ti, Nb, V, and Cr+Mo+Ti+Nb+V≤0.5%, with a balance of Fe and other unavoidable impurities. Preferably, in the hot-dip galvanized Q&P steel, the C content is 0.19~0.21%. Preferably, in the hot-dip galvanized Q&P steel, the Si content is 1.3~1.5%. Preferably, in the hot-dip galvanized Q&P steel, the Mn content is 1.8~2.0%. Preferably, the metallographic structure of the hot-dip galvanized Q&P steel is a three phase structure of 45~75% by volume of martensite, 15~30% by volumne of ferrite and 10~25% by volume of austenite. The matrix structure is evenly distributed, and obvious lamellar tempered martensite appears in the structure, and the grain size is 1-3μm. There is a uniformly distributed ferritic phase around the martensitic reinforced phase grains, which are mainly lamellar structure. Preferably, the hot-dip galvanized Q&P steel has a yield strength 721~805MPa, a tensile strength of 1184~1297MPa, an elongation of 19.1~22.4%, a product of strength and elongation of 23.6~28GPa%. Preferably, the austenite in the metallographic structure of the hot-dip galvanized Q&P steel has good thermal stability. The austenite conversion rate at -50 °C is less than 8% and austenite conversion rate at -190 °C is less than 30%.

In some embodiments, the low carbon low alloy hot-dip galvanized Q&P steel having a tensile strength of ≥ 1180MPa comprises the following chemical components in mass percentages, C: 0.16~0.23%, Si: 1.4~2.0%, Mn: 2.4~3.0%, Ti 0.006~0.016%, P≤0.015%, S≤0.002%, Al: 0.02~0.05%, optionally one or two of Cr, Mo, Ti, Nb, V, and Cr+Mo+Ti+Nb+V≤0.5%, with a balance of Fe and other unavoidable impurities. Preferably, the low carbon low alloy hot-dip galvanized Q&P steel having a tensile strength of ≥ 1180MPa is a low carbon low alloy hot-dip galvanized Q&P steel having a tensile strength of ≥ 1280MPa. Preferably, in the hot-dip galvanized Q&P steel, the C content is 0.18~0.21%%. Preferably, in the hot-dip galvanized Q&P steel, the Si content is 1.6~1.8%. Preferably, in the hot-dip galvanized Q&P steel, the Mn content is 2.6~2.8%. Preferably, the metallographic structure of the hot-dip galvanized Q&P steel is a three phase structure of martensite, ferrite and austenite (75~90% by volume of martensite, 10~25% by volumne of residual austenite and 3~10% by volume of ferrite). The matrix structure is evenly distributed, and obvious lamellar tempered martensite appears in the structure, and the grain size is 1-3μm. There is a uniformly distributed ferritic phase around the martensitic reinforced phase grains, which are mainly lamellar structure. Preferably, the hot-dip galvanized Q&P steel has a yield strength 802~956MPa, a tensile strength of 1280~1352MPa, an elongation of 19-22.5%, a product of strength and elongation of 25.2~28.9GPa%. Preferably, the austenite in the metallographic structure of the hot-dip galvanized Q&P steel has good thermal stability. The austenite conversion rate at -50 °C is less than 8% and austenite conversion rate at -190 °C is less than 30%.

In the composition and process design of the steel according to the present disclosure:

C: Carbon is the most common strengthening element in steel. Carbon increases the strength of steel and decreases its plasticity. However, the forming steel requires low yield strength, high uniform elongation and high total elongation. Therefore, the carbon content should not be too high. Carbon in steel exists in two phases: ferrite and cementite. The carbon content has a great influence on the mechanical properties of steel. With the increase of carbon content, the number of strengthening phases such as martensite and pearlite will increase, so that the strength and hardness of steel will be greatly improved, but its plasticity and toughness will be significantly reduced. If the carbon content is too high, obvious network carbides will appear in steel, and the presence of network carbides will significantly reduce its strength, plasticity and toughness. The strengthening effect produced by the increase of carbon content in steel will also be significantly weakened, and the process performance of steel will be deteriorated. Therefore, the carbon content should be reduced as much as possible on the premise of ensuring strength.

For Q&P steel, carbon is one of the most effective strengthening elements of martensitic matrix. It is solid-soluble in austenite, expands austenite phase region, greatly improves the stability of austenite, shifts the conversion C curve of pearlite and bainite to the right, delays the transition of pearlite and bainite, and reduces the temperature of the Ms point. Too low carbon content will reduce the stability of residual austenite, and too high carbon content will cause twin martensite, reduce the plasticity, toughness and weldability of steel. Comprehensively considering the above factors, the carbon content is limited in the range of 0.16~0.23%. In some embodiments, the C content is 0.18~0.21%. In some other embodiments, the C content is 0.19~0.21%.

Mn: Manganese can form a solid solution with iron, thereby improving the strength and hardness of ferrite and austenite in carbon steel, and providing finer pearlite with higher strength in the steel during the cooling process after hot rolling, and the content of pearlite will also increase with the increase of Mn content. Manganese is also a carbide-forming element, and the carbide of manganese can dissolve into the cementite, thereby indirectly enhancing the strength of strengthening phases such as martensite and pearlite. Manganese can also strongly enhance the hardenability of steel, thereby further improving its strength. In some embodiments, the content of Mn is 1.8~2.0%. In other embodiments, the content of Mn is 2.6~2.8%.

For Q&P steel, the addition of manganese can reduce the martensite transition temperature Ms, increase the content of residual austenite and improve the stability of residual austenite, and manganese has little effect on the toughness of steel. However, when the manganese content is relatively high, there is a tendency to coarsen the grains in the steel and the overheating sensitivity of the steel is increased, and when the cooling is improper after smelting pouring and hot rolling, it is easy to produce white spots in the carbon steel. The manganese content is designed in the range of 1.6~3.0% in the present disclosure.

Si: Silicon forms a solid solution in ferrite or austenite, thereby enhancing the yield strength and tensile strength of steel. Silicon can increase the cold working deformation hardening rate of steel and is a beneficial element in alloy steel. In addition, silicon has obvious enrichment phenomenon on the surface of silicon-manganese steel along the crystal fracture, and the segreration of silicon at the grain boundary can alleviate the distribution of carbon and phosphorus along the grain boundary, thereby improving the embrittlement state of the grain boundary. Silicon can improve the strength, hardness and wear resistance of steel and will not significantly reduce the plasticity of steel within a certain range. Silicon has a strong deoxidation capacity and is a commonly used deoxidation agent in steelmaking. Silicon can also increase the fluidity of molten steel, so generally the steel contains silicon. But when the content of silicon in steel is too high, its plasticity and toughness will be significantly reduced. For Q&P steels,

First, silicon is not a carbide forming element and has extremely low solubility in carbide. In the QP steel isothermal process, it can inhibit the formation of $Fe_3C$, enrich carbon in the untransformed austenite, thereby greatly improving the stability of austenite, so that it can be retained at room temperature;

Second, silicon is a ferrite-forming element, which can improve the stability of residual austenite and play a role in solution strengthening, thereby improving the strength of steel;

Third, silicon has the effect of reducing the austenite phase region and increasing the activity of C element in ferrite.

Higher silicon content is conducive to obtaining more residual austenite, but too high silicon content will result in hard oxide layer, poor surface properties of steel, and reduce the wettability and surface quality of hot-rolled steel plate. Silicon has no obvious effect on the growing rate of austenite, but has a significant effect on the morphology and distribution of austenite. The increase of silicon content will increase the manufacturing difficulty of high-strength steel in the process before heat treatment. The silicon content should be controlled in the range of 1.1~2.0% in the present disclosure. In some embodiments, the content of Si is 1.3~1.5%. In other embodiments, the content of Si is 1.6~1.8%.

Cr: The main function of chromium in steel is to improve the hardenability, so that the steel has good comprehensive mechanical properties after quenching and tempering. Chromium and iron form a continuous solid solution and the austenitic phase area is reduced. Chromium and carbon form a variety of carbides and its affinity with carbon is greater than that of iron and manganese. Chromium and iron can form an intermetallic σ phase (FeCr), which reduces the concentration of carbon in pearlite and the solubility limit of carbon in austenite. Chromium slows down the decomposition rate of austenite and significantly improves the hardenability of steel. However, it also has a tendency of increasing temper brittleness of steel. The improvement of the strength and hardness of steel by chromium is more significant when other alloying elements are added. Since Cr improves the quenching ability of steel during air cooling, it has an adverse effect on the welding performance of steel. However, when the chromium content is less than 0.3%, the adverse effect on weldability can be ignored. When it is greater than 0.3%, it is easy to produce defects such as cracks and slag inclusions during welding. When Cr and other alloying elements exist at the same time (such as coexisting with V), the adverse effect of Cr on weldability is greatly reduced. For example, when Cr, Mo, V and other elements exist in steel at the same time, even if the Cr content reaches 1.7%, there is no significant adverse effect on the welding performance of steel. In the present disclosure, the Cr element is a beneficial and inessential element. Considering the cost and other factors, the added amount of Cr should not be too much. In some embodiments, the Cr content is ≤ 0.35%, such as ≤ 0.25%.

Mo: Molybdenum inhibits the self-diffusion of iron and the diffusion rate of other elements. The radius of Mo atom is larger than that of α-Fe atom. When Mo is dissolved in α solid solution, the solid solution has strong lattice distortion. Meanwhile, Mo can increase the lattice atomic bond attraction and increase the recrystallization temperature of α ferrite. Mo has a significant strengthening effect in pearlitic, ferritic, martensitic steels, and even in high-alloy austenitic steel. The benifical role of Mo in steel also depends on the interaction with other alloying elements in steel. When strong carbide-forming elements V, Nb and Ti are added to the steel, the solid-solution strengthening effect of Mo is more significant. This is because when the strong carbide-forming element combines with C to form a stable carbide, it can promote Mo to dissolve into the solid solution more efficiently, which is more conducive to the improvement of the hot strength of steel. The addition of Mo can also increase the hardenability of steel, but the effect was not as significant as C and Cr. Mo can inhibit the transition of pearlite region and accelerate the transition in the medium temperature zone, so that a certain amount of bainite can be formed in Mo-containing steel in the case of a large cooling rate and the formation of ferrite is eliminated. That is one of the reasons why Mo has a favorable effect on the hot strength of low alloy heat-resistant steel. Mo can also significantly reduce the hot embrittlement tendency of steel and reduce the spheroidization rate of pearlite. When the Mo content is no more than 0.15%, there is no adverse effect on the welding performance of steel. In the present disclosure, the Mo element is a beneficial and inessential element. Considering the cost and other factors, the added amount of Mo should not be too much. In some embodiments, the Mo content is ≤0.25%.

Nb: Nb is a forming element of carbonide and nitride and can meet the requirement at relatively low concentrations. At room temperature, most of Nb in the steel exists in the form of carbide, nitride and carbonitride, and a small part is dissolved in ferrite. The addition of Nb can prevent the growth of austenite grains and increase the coarsening temperature of steel grains. Nb form very stable NbC with carbon. The addition of trace amount of Nb element to steel can improve the strength of the matrix by virtue of its precipitation strengthening effect. Nb has obvious hindering effect on the growth of ferrite recrystallization and the growth of austenite grains, which can refine the grains and improve the strength and toughness of steel. Nb can affect grain boundary mobility and also have an impact on phase transition behavior and carbide formation. Nb can increase the carbon content in the residual austenite, hinder the formation of bainite, promote martensite nucleation, obtain dispersed martensite structure and improve the stability of residual austenite. Dual-phase steel having a certain strength can be obtained by adding Nb elements to improve the strength of dual-phase stee under the conditions of low martensite content and low C content, thereby improving the strength and toughness of the dual-phase steel. At the same time, another benefit of adding Nb is that the strength of the steel can be improved over a wide annealing temperature range. In the present disclosure, the Nb element is a benifical and inessential element. Considering the cost and other factors, the added amount of Nb should not be too much. In some embodiments, in the dual-phase steel or hot-dip galvanized dual-phase steel, Nb is ≤ 0.06%, such as ≤ 0.04%.

Ti: Ti is a microalloying element that belongs to the ferritic forming element in the closed γ zone. It can increase the critical point of steel. Ti and C in steel can form very stable TiC. In the austenitization temperature range of commom heat treatment, it is extremely difficult to dissolve TiC. Due to the refinement of austenite grains by TiC particles, the opportunity for the formation of new phase nuclei increases when austenite decomposes and transforms, which accelerates austenite transformation. In addition, Ti can form TiC, TiN precipitation phase with C, N, which is more stable than the carbonitride of Nb and V. It significantly reduces the diffusion rate of C in austenite and greatly reduces the formation rate of austenite. The formed carbonitride precipitates in the matrix, nails to the grain boundary of austenite, and hinders the growth of austenite grains. During the cooling process, the precipitated TiC has a precipitation strengthening effect. In the tempering process, Ti slows down the diffusion of C in α phase, alleviates the precipitation and growth of carbides of Fe and Mn and others, increases the tempering stability and can play a secondary hardening role by precipitating TiC. The high-temperature strength of steel can be improved by microalloying of Ti. Adding a trace amount of Ti to steel, on one hand, can improve the strength while reducing the carbon equivalent content, and improve the welding performance of steel. On the other hand, impure substances such as oxygen, nitrogen, sulfur, etc. are fixed, so as to improve the weldability of steel. In addition, due to the action of its microparticles, such as the unsolubility of TiN at high temperature, it can prevent the coarsening of grains in the heat-affected zone, improve the toughness of the heat-affected zone, and thus improve the welding performance of steel. In some embodiments, the Ti content is ≤ 0.065%, such as ≤0.04%. In some embodiments, when Ti is added, the added amount may be in the range of 0.006~0.016%.

Micryalloying element V: V is a stablizing element of ferrite and a strong carbide-forming element, which has a strong grain refinement effect and can provide dense structure of steel. The addition of V to steel can improve the strength, plasticity and toughness of steel at the same time. Vanadium can also improve the high-temperature strength of structural steel. Vanadium does not improve hardenability. Adding a trace amount of microalloying element V to steel can ensure that the steel has good weldability and other properties by dispersing and precipitating its carbide and nitride particles (particle size less than 5nm) and solid solution of V to refine grains, greatly improve the strength and toughness (especially low temperature toughness) of steel under the condition of low carbon equivalent. Adding a trace amount of V to steel, on one hand, can improve the strength while reducing the carbon equivalent content, and improve the welding performance of steel. On the other hand, impure substances such as oxygen, nitrogen, sulfur, etc. are fixed, so as to improve the weldability of steel. In addition, due to the action of its microparticles, such as the unsolubility of V (CN) at high temperature, it can prevent the coarsening of grains in the heat-affected zone, improve the toughness of the heat-affected zone, and thus improve the welding performance of steel. In the present disclosure, the microalloying element is a beneficial and inessential element. Considering the cost and other factors, the added amount should not be too much. In some embodiments, the V content is ≤ 0.055%, such as ≤0.035%.

Adding a trace amount of microalloying elements Nb, V, Ti to steel can ensure that grains are refined by dispersion precipitation of its carbide, nitride particles (size less than 5nm) and solid solution of Nb, V and Ti under the condition of low carbon equivalent, so that the strength, toughness, especially low-temperature toughness of steel is greatly improved. Thus, the steel has good weldability and usability. Nb, V, Ti are carbide and nitride forming elements, which can meet the requirement at relatively low concentrations. Nb, V, Ti are strong carbide forming elements, most of which are present in the form of carbide, nitride, carbonitride with a small amount solid soluble in ferrite at room temperature. For Q&P steels, the addition of these microalloying elements is able to strengthen the ferrite matrix through grain refinement and precipitation. The formation of ferrite leads to carbon enrichment of residual austenite, which delays the transformation of austenite to bainite, while fine diffused carbonitride inhibits bainite nucleation, thereby delaying bainite formation. The addition of Nb, V, Ti can prevent the growth of austenite grains and increase the coarsening temperature of steel, which is because their carbide, nitride dispersed small particles can fix the austenite grain boundaries, hinder the migration of austenite grain boundaries, increase the austenite recrystallization temperature and expand the uncrystallized zone, i.e., preventing the growth of austenite grains.

In the present disclosure, the recovery of deformed structure of rolled hard strip steel during heat treatment, recrystallization and phase change process are accurately controlled by rapid heat treatment process (including rapid heating, short-term heat preservation and rapid cooling process) and fine, uniform, dispersed distribution of various structures and a good matching of strength and plasticity are finally obtained.

The specific principle is that different heating rates are used at different temperature stages of the heating process. The recovery of deformed structure mainly occurs in the low temperature section, and a relatively low heating rate can be used to reduce energy consumption. The recrystallization and grain growth of different phase structures mainly occur in the high temperature section and it is necessary to use relatively high heating rate to shorten the residence time of the structure in the high temperature zone to ensure grain refinement. By controlling the heating rate in the heating process, the recovery of deformed structure and the ferrite recrystallization process during heating are suppressed, so that the recrystallization process overlaps with the austenite phase transition process. The nucleation points of recrystallized grains and austenite grains are increased and finally the grains are refined. By short-term heat preservation and rapid cooling, the grain growth time of the material in the soaking process is shortened and the grain structure is small and evenly distributed.

In the heat treatment process disclosed in the Chinese patent application CN107794357B and the US patent application US2019/0153558A1, the heating process is also in stages: the steel is heated to 300-500 °C at a heating rate of 1-10 °C/s, and then heated to 850-950°C in single-phase austenitic region at a heating rate of 100-500 °C /s, held for no more than 5s and then water quenched to room temperature. The treatment process requires that the steel plate must be heated to the high-temperature zone of single-phase austenite, which improves the high temperature resistance requirements of the equipment, increases the manufacturing difficulty. At the same time, it adopts a cooling manner of water-cooling. Although the extremely high cooling rate can greatly reduce the growth time of the grain structure in the high temperature zone, it will inevitably bring about uneven distribution of alloying elements in the final product, resulting in uneven and unstable microstructures and properties of the product. Too high cooling rate of water quenching will also lead to a series of problems such as poor steel plate shape and surface oxidation and the like.

A product having an optimal matching of strength and toughness only can be obtained by integratedly controlling the whole heat treatment, including rapid heating (controlling heating rate in stages), short-term soaking and rapid cooling process to provide finely controlled optimal grain size and evenly distributed alloying elements and phase structures.

The Q&P steel obtained by the rapid heat treatment method according to the present disclosure has a main phase structure of martensite (75~90% by volume) and residual austenite (10~25% by volume), and contains a very small amount of ferrite (3~10% by volume). Strictly speaking, its phase structure is a multiphase structure having uniformly distributed matrix structure with obvious lamellar tempered martensite and having a grain size of 1~3µm. There is a uniformly distributed ferritic phase around the martensitic reinforced phase grains, which are mainly lamellar structure.

The manufacturing process of the low carbon low alloy Q&P steel having a tensile strength of ≥1180MPa according to the present disclosure comprises the following steps:

1) Smelting, casting
wherein the above components are subjected to smelting and casting to form a slab;
2) hot rolling, coiling
wherein and a coiling temperature is 550~680°C;
3) cold rolling
wherein a cold rolling reduction rate is 40~85% and a rolled hard strip steel or steel plate is obtained;
4) Rapid heat treatment

a) rapid heating
wherein the strip steel or steel plate after cold rolling is rapidly heated to 770~845°C, wherein the rapid heating is performed in one stage or two stages; when the rapid heating is performed in one stage, a heating rate is 50~500 °C/s; when the rapid heating is performed in two stages, the steel plate is heated in the first stage from room temperature to 550~625°C at a heating rate of 15~500°C/s, heated in the second stage from 550~625°C to 770~845°C at a heating rate of 50~500°C/s;
b) soaking
wherein the strip steel or steel plate is soaked at a temperature of 750~845 °C, which is the target temperature of the dual phase region of austenite and ferrite for 10~60s;
c) cooling
wherein after soaking, the strip steel or steel plate is slowly cooled to 700~770 °C (such as 720~770 °C) at a cooling rate of 5~15°C/s, then rapidly cooled to 230~280 °C at a cooling rate of 50~200°C/s (such as 50~150°C/s); and heat preserved in the temperature range for 2-10s;
d) tempering
wherein after heat preservation, the strip or steel plate is heated to 300~470 °C at a heating rate of 10~30 °C/s for tempering treatment, wherein the tempering time is 10~60s;
e) after tempering, the strip or steel plate is cooled to room temperature at a cooling rate of 30~100°C/s.

In the manufacturing process of the low carbon low alloy Q&P steel, preferably, in step 2), the hot rolling finishing temperature is ≥$A_{r3}$. Preferably, in step 2), the coiling temperature is 580~650°C. Preferably, in step 3), the cold rolling reduction rate is 60~80%. Preferably, in step 4), a total time of the rapid heat treatment is 71-186s. Preferably, in step 4), when the rapid heating is performed in one stage, the heating rate is 50~300°C/s. Preferably, in step 4), the rapid heating is performed in two stages, wherein the strip steel or the steel plate is heated in the first stage from room temperature to 550~625°C at a heating rate of 15~300°C/s, heated in the second stage from 550~625°C to 770~845°C at a heating rate of 50~300°C/s. Preferably, in step 4), the rapid heating is performed in two stages, wherein the steel plate is heated in the first stage from room temperature to 550~625°C at a heating rate of 30~300°C/s, heated in the second stage from 550~625°C to 770~845°C at a heating rate of 80~300°C/s. Preferably, in step 4), the final temperature after rapid heating is 790~845°C. Preferably, in step 4), the rapid cooling rate of the strip steel or the steel plate is 50~150°C/s. Preferably, in the soaking process of step 4), after the strip steel or steel plate is heated to the target temperature of dual phase region of austenite and ferrite, the temperature is kept unchanged for soaking. Preferably, in the soaking process of step 4), the strip steel or steel plate is slightly heated up or cooled down in the soaking time, wherein the temperature after heating is no more than 845°C and the temperature after cooling is no less than 770°C. Preferably, the soaking time is 10~40s.

The manufacturing process by rapid heat treatment and hot galvanization of the low carbon low alloy hot galvanized Q&P steel having a tensile strength of ≥1180MPa according to the present disclosure comprises the following steps:

1) Smelting, casting
wherein the above components are subjected to smelting and casting to form a slab;
2) Hot rolling, coiling
wherein a hot rolling finishing temperature is ≥$A_{r3}$; and a coiling temperature is 550~680°C;
3) Cold rolling
wherein a cold rolling reduction rate is 40~80%, thereby obtaining a rolled hard strip steel or steel plate;

4) Rapid heat treatment, hot-galvanizing

a) rapid heating

wherein the strip steel or steel plate after cold rolling is rapidly heated from room temperature to 770~845°C, which is the target temperature of the dual phase region of austenite and ferrite, wherein the rapid heating is performed in one stage or two stages;
when the rapid heating is performed in one stage, a heating rate is 50~500 °C/s;
when the rapid heating is performed in two stages, the strip steel or steel plate is heated in the first stage from room temperature to 550~625°C at a heating rate of 15~500°C/s, heated in the second stage from 550~625°C to 770~845°C at a heating rate of 30~500°C/s (such as 50~500°C/s);

b) Soaking
wherein the strip steel or steel plate is soaked at a temperature of 770~845 °C, which is the target temperature of the dual phase region of austenite and ferrite, for a soaking time of 10~60s;
c) Cooling,
wherein after soaking, the strip steel or steel plate is slowly cooled to 720~770 °C at a cooling rate of 5~15°C/s, then rapidly cooled to 230~280°C at a cooling rate of 50~200°C/s (such as 50~150°C/s) and heat preserved in this temperature range for 2~10s, such as 2~8s;
d) partitioning
wherein, after heat preservation, the strip or steel plate is heated to 460~470 °C at a heating rate of 10~30 °C/s for partitioning, wherein the partitioning time is 10~60s;
e) hot-galvanizing
wherein, after partitioning, the strip or steel plate is immersed in a zinc pot for hot galvanizing;
f) after hot galvanizing, the strip steel or steel plate is rapidly cooled to room temperature at a cooling rate of 30~150°C/s to obtain a hot dip galvanized GI product; or
after hot galvanizing, the strip steel or steel plate is heated to 480~550°C at a heating rate of 10~300°C/s and alloyed for 5~20s; after alloying, the strip steel or steel plate is rapidly cooled to room temperature at a cooling rate of 30~250°C/s to obtain an alloy galvannealed GA product.

In the manufacturing process by rapid heat treatment and hot galvanization of the low carbon low alloy hot galvanized Q&P steel, preferably, a total time of the rapid heat treatment and hot-galvanizing is 43~186s. Preferably, in step 2), the coiling temperature is 580~650°C. Preferably, in step 3), the cold rolling reduction rate is 60~80%. Preferably, in step 4), when the rapid heating is performed in one stage, the heating rate is 50~300°C/s. Preferably, in step 4), the rapid heating is performed in two stages, wherein the strip steel or steel plate is heated in the first stage from room temperature to 550~625°C at a heating rate of 15~300°C/s, heated in the second stage from 550~625°C to 770~845°C at a heating rate of 50~300°C/s. Preferably, in step 4), the rapid heating is performed in two stages, wherein the strip steel or steel plate is heated in the first stage from room temperature to 550~625°C at a heating rate of 30~300°C/s, heated in the second stage from 550~625°C to 770~845°C at a heating rate of 80~300°C/s. Preferably, in step 4), the final temperature after rapid heating is 790~845°C. Preferably, in step 4), the cooling rate in the rapid cooling stage is 50~150°C/s. Preferably, in the soaking process of step 4), after the strip steel or steel plate is heated to the target temperature of dual phase region of austenite and ferrite, the temperature is kept unchanged for soaking. Preferably, in the soaking process of step 4), the strip steel or steel plate is slightly heated up or cooled down in the soaking time, wherein the temperature after heating is no more than 845°C and the temperature after cooling is no less than 770°C. Preferably, the soaking time is 10~40s. Preferably, in step 4), after hot galvanizing, the strip steel or steel plate is heated to 480~550°C at a heating rate of 30~200°C/s and alloyed for 5~20s; after alloying, the strip steel or steel plate is rapidly cooled to room temperature at a cooling rate of 30~200°C/s to obtain an alloy galvannealed GA product.
In the manufacturing process of low carbon low alloy Q&P steel and low carbon low alloy hot galvanized Q&P steel having a tensile strength of ≥1180MPa according to the present disclosure:

1. **Heating rate control**

The recrystallization kinetics of the continuous heating process can be quantitatively described by the relationship affected by the heating rate. The function of the volume fraction of ferrite recrystallization and the temperature T during continuous heating process is:

$$X(T) = 1 - \exp[-n/\beta^n \int_{T_{star}}^{T} b(T)(T - T_{star})^{n-1} dT]$$

where X(t) is the volume fraction of ferrite recrystallization; n is the Avram index, which is related to the phase transition mechanism, depending on the decay period of the recrystallization nucleation rate, generally 1~4; T is the heat treatment temperature; $S_{tar}$ is the recrystallization starting temperature; β is the heating rate wherein b(T) is obtained by:

$$b = b_0 \exp(-Q/RT)$$

From the above formula and relevant experimental data, it can be concluded that with the increase of heating rate, the recrystallization starting temperature ($T_{atar}$) and finishing temperature ($T_{fin}$) increase. When the heating rate is equal to or more than 50°C/s, the austenite phase transition overlaps the recrystallization process, and the recrystallization temperature increases to the dual-phase zone temperature. The faster the heating rate, the higher the ferrite recrystallization temperature.

Under the condition of traditional slow heat treatment, the deformed matrix recovers, recrystallizes and the grain grows sequentially. Then the phase transition from ferrite to austenite occurs. The nucleus point of the phase transition is mainly enriched at the grain boundary of the ferrite that has grown up and the nucleation rate is low. The final resultant grain structure is relatively coarse.

Under the condition of rapid heating, the deformed matrix begins to recrystallize before it fully recovers, and the phase transformation from ferrite to austenite begins before the recrystallization is completed or the grain growth has not yet begun. Because the grain is fine and the grain boundary area is large at this time, the phase deformation nucleation rate is significantly increased and the grain is significantly refined. Especially when the ferrite recrystallization overlaps with the austenite phase transition process, because a large number of crystal defects such as dislocations and the like are retained in the ferrite crystal, a large number of nucleation points are provided for austenite, so that the austenite nucleation is explosive and the austenite grains are further refined. Meanwile, the retained high-density dislocational line defects also become channels for the high-rate diffusion of carbon atoms to allow each austenite grain to be quickly generated and grow up, so the volume fraction of austenite increases.

By accurately controlling the microstructure evolution, alloying elements and phase component distribution during the rapid heating process, it provides a good basis for the subsequent austenite microstructure growth in the soaking process, as well as the distribution of each alloy component and phase transition from austenite to martensitie in the rapid cooling process. The final product structure with refined grains, reasonable elements and phase distribution can be obtained finally. Comprehensively considering the effect of rapid heating and grain refinement, manufacturing cost and manufacturability, the heating rate is set at 50~500 °C/s for one-stage rapid heating, and 15~500 °C/s when two-stage rapid heating is adopted in the present disclosure.

Due to the different effects of rapid heating on the microstructure evolution processsuch as material recovery, recrystallization and grain growth in different temperature zones, in order to obtain optimal microstructure control, the preferred heating rate is different in different heating temperature zones: The heating rate has the greatest impact on the recovery process from 20 °C to 500~625 °C and the heating rate is controlled at 15~300 °C/s, and further preferably 50~300 °C/s. When the heating temperature is from 500~625 °C to austenitizing temperature 770~845 °C, the heating rate had the greatest effect on the recrystallization nucleation rate and phase transition nucleation and grain growth process. The heating rate is controlled at 50~300 °C/s, further preferably 80~300 °C/s.

2. Soaking temperature control

The selection of soaking temperature should be combined with the control of material microstructure evolution at each temperature stage of the heating process, and the evolution and control of the subsequent rapid cooling process should be considered, so as to finally obtain the preferred structure and distribution.

The soaking temperature depends on the C content. In the traditional process, the soaking temperature is generally set at 30~50 °C higher than $A_{C3}$. The present disclosure uses rapid heating technology to form a large number of dislocations in the ferrite, providing nucleation power for austenite transformation. Thus, the temperature is only required to be raised between Aci and $A_{C3}$ by heating. The C content of the Q&P steel in the present disclosure is 0.16~0.23%, and the $A_{C1}$ and $A_{C3}$ of the steel are about 730 °C and 870 °C, respectively. There are a large number of undissolved fine uniformly distributed carbides in Q&P steel, which mechanically impedes the growth of austenite grains during soaking process, and is conducive to refining the grain size of alloy steel. However, if the soaking temperature is too high, the number of undissolved carbides will be greatly reduced, weaken this impedance, increase the growth tendency of grains, and thereby reduce the strength of steel. When the number of undissolved carbides is too large, it may cause aggregation, resulting in uneven local distribution of chemical components, and when the carbon content at the aggregation is too high, it will also cause local overheating. Therefore, ideally, a small quantity of fine granular undissolved carbides should be evenly distributed in the steel, which can not only prevent the abnormal growth of austenite grains, but also increase the content of each alloying element in the matrix accordingly, so as to improve the mechanical properties such as strength and toughness of alloy steel.

The selection of soaking temperature should also be aimed at obtaining fine and uniform austenite grains, so that the purpose of obtaining uniform and fine martensitic structure having relatively high-volume fraction after cooling can be achieved. Too high soaking temperature will make the austenite grains coarse, the workpiece is prone to cracking during quenching and the martensitic structure obtained after quenching will also be coarse, resulting in poor mechanical properties of steel. It will also reduce the amount of residual austenite and reduce the hardness and wear resistance of workpiece. Too low soaking temperature also makes the content of dissolved carbon and alloying elements in austenite insufficient, so that the concentration of alloying elements in austenite is unevenly distributed, which greatly reduces the hardenability of steel and adversely affects the mechanical properties of alloy steel. The soaking temperature of hypoeutectoid steel should be $A_{c3}+30\sim50°C$. For ultra-high-strength steels, the presence of carbide-forming elements will impede the transformation of carbides, so the soaking temperature can be appropriately increased. Based on the above factors, the soaking temperature is selected to be 770~845 °C in the present disclosure and it is expected to obtain a reasonable quenching process and ideal structure performance.

**3. Soaking time control**

Since rapid heating is adopted in the present disclosure, the material in the dual-phase region contains a large number of dislocations, which provide a large number of nucleation points for austenite formation, and provide a rapid diffusion channel for carbon atoms, so that austenite can be formed extremely quickly. The shorter the soaking time, the shorter the diffusion distance of carbon atoms, the greater the carbon concentration gradient in austenite, and the more residual austenite carbon content is retained at the end. However, if the soaking time is too short, the distribution of alloying elements in the steel will be uneven, resulting in insufficient austenitization. If the soaking time is too long, it is easy to lead to coarse austenite grains. The soaking time is also related to the content of carbon and alloying elements in steel. When the content of carbon and alloying elements in steel increases, it will not only lead to a decrease in thermal conductivity of steel, but also significantly delay the microstructure transformation of steel because the diffusion rate of alloying elements is slower than carbon element, and it is necessary to appropriately extend the holding time at this time. Therefore, the control of soaking time needs to be determined by strictly combining with soaking temperature and comprehensively considering rapid cooling and rapid heating process, in order to finally obtain the ideal structure and element distribution. In summary, the soaking time is set to be 10~60s in the present disclosure.

**4. Rapid cooling rate control**

In order to obtain martensite, the cooling rate of the specimen upon rapid cooling must be greater than the critical cooling rate to obtain martensite structure. The critical cooling rate mainly depends on the material composition. The Si content in the present disclosure is 1.1~2.0%. The Mn content is 1.6~3.0%. The content is relatively high. Thus, Si and Mn greatly strengthen the hardenability of Q&P steel and reduces the critical cooling rate. The selection of cooling rate also needs to comprehensively consider the microstructure evolution of heating process and soaking process and alloy diffusion distribution results, so as to finally obtain a reasonable distribution of each phase and alloying elements. Too low cooling rate cannot provide martensitic structure. It will lead to a decrease in strength and thus the mechanical properties cannot meet the requirements. Too high cooling rate will produce large quenching stress (i.e. structure stress and thermal stress), resulting in very poor plate shape, especially when cooling is uneven, and it is even easy to lead to serious deformation and cracking of the sample. Therefore, the rapid cooling rate is set at 50~200 °C/s in the present disclosure.

5. Tempering temperature control

Usually, when the alloy steel is tempered at ≤ 150 °C, the alloying elements cannot diffuse due to too low temperature, only the carbon element has a certain diffusion ability. Although the low-temperature tempered steel has high hardness, it has too large brittleness, very poor toughness, and cannot meet the use performance requirements of the workpiece. When tempering is carried out at a temperature of ≥ 200 °C, the carbon elements and other alloying elements contained in martensite will begin to precipitate in large quantities, so that the residual stress will be reduced until it disappears, and the hardness of the tempered steel will gradually decrease with the increase of the tempering temperature, but the toughness will increase. When the tempering temperature reaches about 500 °C, the decomposition of martensite ends, cementite gradually accumulates and grows, the α phase begins to undergo a recovery process. As the temperature continues to increase, the α phase begins to recrystallize to form polygonal ferrite, and the strength decreases significantly. The higher the tempering temperature, the coarser the α phase and the cementite phase, the lower the hardness of the tempered steel. The ultimate purpose of the present disclosure is to obtain better strength and plasticity at the same time. Thus, the tempering temperature is set at 300~470 °C in the present disclosure.

6. Tempering time control

In the tempering process of steel, the tempering time plays three roles: (1) to ensure that the structure transformation is sufficient; (2) to reduce or eliminate internal stress; (3) to cooperate with the tempering temperature to provide the workpiece with required performance. In the steel of the present disclosure, the austenite grains are refined by the use of rapid heating technology, so that the distance between residual austenite and martensite generated after one rapid cooling is shortened, the efficiency of the diffusion and partitioning of carbon atoms from supersaturated martensite to residual austenite is improved, so the time required for the tempering process is also greatly reduced. However, if the tempering time is too short, it is hard to eliminate the internal stress and the brittle hardness of the workpiece will be reduced. After comprehensive consideration, the tempering time is set at 10~60s in the present disclosure.

7. Partitioning temperature control

Usually, Q&P steel with higher alloy content is subjected to carbon partitioning (tempering) at ≤150 °C. Because the temperature is too low, alloying elements cannot diffuse and only carbon elements also have a certain diffusion capacity. Although the low-temperature partitioning steel has high hardness, it has too large brittleness, very poor toughness and cannot meet the use performance requirements of workpiece. When partitioning is carried out at a temperature of ≥ 200 °C, the carbon elements and other alloying elements contained in martensite will begin to precipitate in large quantities, so that the residual stress will be reduced until it disappears, and the hardness of the partitioning steel will gradually decrease with the increase of the partitioning temperature. When the partitioning temperature reaches about 500 °C, the decomposition of martensite ends, cementite gradually accumulates and grows, the α phase begins to undergo a recovery process. As the temperature continues to increase, the α phase begins to recrystallize to form polygonal ferrite. The higher the partitioning temperature, the coarser the α phase and the cementite phase, the lower the hardness of the partitioning steel. The ultimate purpose of the partitioning process in the present disclosure is to diffuse carbon that has been already obtained in martensite into residual austenite that has not yet undergone martensite transformation, so that the carbon in martensite reduces and the plasticity increases, at the same time the carbon concentration diffused into residual austenite increases to enhance its stability, thereby providing the final product with both better strength and plasticity, i.e., a good matching of strength and plasticity. Combining with the hot-dip galvanizing temperature, the partitioning temperature is set at 460~470 °C in the present disclosure.

8. Partitioning time control

In the partitioning process of steel, the partitioning time plays three roles: (1) to ensure that the structure transformation is sufficient; (2) to reduce or eliminate internal stress; (3) to cooperate with the partitioning temperature to provide the workpiece with required performance. In the present disclosure, the austenite grains are refined by the use of rapid heating technology, so that the distance between residual austenite and martensite generated after one rapid cooling is shortened, the efficiency of the diffusion and partitioning of carbon atoms from supersaturated martensite to residual austenite is improved, so the time required for the partitioning process is also greatly reduced. However, if the partitioning time is too short, it is hard to eliminate the internal stress and the brittle hardness of the workpiece will be reduced. After comprehensive consideration, the partitioning time is set at 10~60s in the present disclosure.

10. **Hot-dip galvanizing and alloying control**

For high-strength hot-dip galvanized products, the rapid heat treatment process reduces the residence time of the strip steel in the high-temperature furnace, so the enrichment of alloying elements on the surface of the high-strength strip steel is significantly reduced during the heat treatment process, which is conducive to improving the platability of high-strength hot-dip galvanized products, reducing surface skip plating defects and improving corrosion resistance, thereby improving the yield rate.

The process of the present disclosure can reduce the alloy content in the same grade of steel, refine grains and provide good soft and hard phase structure composition and a matching of strength and toughness. At the same time, by modifying the rapid heating and rapid cooling process of traditional continuous hot-dip galvanizing unit to realize the rapid heat treatment process, the length of the heating and soaking section of the annealing furnace can be greatly shortened (at least one-third shorter than the traditional continuous annealing furnace), the production efficiency of the traditional continuous hot-dip galvanizing unit can be improved, the production cost and energy consumption can be reduced, and the number of continuous annealing furnace rollers, especially the number of rollers in high-temperature furnace section can be significantly reduced, which can reduce energy consumption and equipment investment.

At the same time, by establishing a new continuous annealing hot-dip galvanizing unit with rapid heat treatment hot-dip galvanizing process technology, the purpose of providing a short and compact unit with flexible material transition and strong control ability can be realized. For materials, strip grains can be refined to further improve material strength, reduce alloy cost and manufacturing difficulty in the process before heat treatment hot-dip galvanizing process, and improve the use performance of materials such as forming and welding.

The present disclosure realizes the rapid heat treatment process by modifying the rapid heating and rapid cooling process of traditional continuous annealing unit, which can greatly shorten the length of the heating and soaking section of the annealing furnace (at least one-third shorter than the traditional continuous annealing furnace), improve the production efficiency of the traditional continuous annealing unit, reduce the production cost and energy consumption, and significantly reduce the number of continuous annealing furnace rollers, especially the number of rollers in high-temperature furnace section, which can improve the strip surface quality control ability and obtain strip products with high surface quality.

At the same time, by establishing a new continuous annealing unit with rapid heat treatment process technology, the purpose of providing a short and compact unit with flexible material transition and strong control ability can be realized. For product materials, strip grains can be refined to further improve material strength and plasticity, reduce alloy cost and manufacturing difficulty in the process before heat treatment process, and improve the use performance of materials such as forming and welding.

Advantages of the present disclosure over traditional techniques are as follows:

(1) In the present disclosure, the recovery of deformed structure and ferrite recrystallization during heat treatment process is inhibited by rapid heat treatment, so that the recrystallization overlaps with the austenite phase transition. It increases the nucleation points of the recrystallized grain and austenite grain, shortens the grain growth time and refines the grain. The metallographic structure of resultant Q&P steel is a multiphase structure comprising 75~90% of martensite, 10~25% of residual austenite, and 3~10% of ferrite. The metallographic structure of resultant hot-dip galvanized Q&P steel is a refined three-phase structure of martensite, ferrite and austenitie, preferably 45~75% by volume of martensite, 10~25% by volume of residual austenite, 15~30% by volumne of ferrite. The resultant Q&P steel and hot-dip galvanized Q&P steel have uniformly distributed matrix structure with obvious lamellar tempered martensite and having a grain size of 1~3$\mu$m. There is a uniformly distributed ferritic phase around the martensitic strengthening phase grains, which are mainly lamellar structure. The austenite in the structure has a variety of forms such as block, strip, granular, etc., with good thermal stability. The austenite conversion rate at -50 °C is less than 8% and austenite conversion rate at -190 °C is less than 30%. TRIP effect can continue to occur under different strain conditions, so the product has excellent mechanical properties and user performance.

(2) Compared with the Q&P steel obtained by traditional heat treatment, the alloying component of the Q&P steel obtained in the present disclosure is greatly reduced, the grain size of the steel is reduced by 40-80%, and the performance is excellent. The yield strength is 668~1112MPa, the tensile strength is 1181~1350MPa, the elongation is 18.9~24.2% and the product of strength and elongation is 24.1~28.97GPa%. Compared with the hot galvanized Q&P steel obtained by the traditional continuous annealing hot galvanizing method, under the premise of unchanged manufacturing conditions in the previous process, the average grain size of Q&P steel obtained by rapid heat treatment in the present disclosure is 1-3$\mu$m, and the average grain size is reduced by 10~40%, and a good fine grain strengthening effect can be obtained. The yield strength is ≥720MPa, the tensile strength is ≥1180MPa, the elongation is ≥19%, and the product of strength and elongation is ≥23.0GPa%. Preferably, the hot galvanized Q&P steel has a yield strength of 721~956MPa, a tensile strength of 1184~1352MPa, an elongation of 19~22.5% and a product of strength and elongation of 23.6~28.9GPa%.

(3) According to the rapid heat treatment process of low carbon low alloy Q&P steel having a tensile strength of ≥1180MPa and the rapid heat treatment process of low carbon low alloy hot galvanized Q&P steel described in the present disclosure, the total time of heat treatment can be shortened to 71~186s and 43~186s respectively, which greatly reduces the time of the entire heat treatment process (the time of traditional continuous annealing process is usually 5~8min), significantly improves production efficiency and reduces energy consumption and production costs.

(4) Compared with the traditional Q&P steel and its heat treatment process, the heating section time and soaking section time of the rapid heat treatment process of the present disclosure are shortened by 60~80%. The entire heat treatment process time are shortened to 71~186s. Compared with the traditional hot galvanized Q&P steel and its heat treatment process, the rapid heat treatment method of the present disclosure shortens the length and time of the heating section and the soaking section of the continuous hot galvanizing annealing furnace (compared with the traditional continuous hot galvanizing annealing furnace, the length of the heating section and the soaking section is shortened by up to 60~80%) and the entire heat treatment process time. Thus, the present disclosure can conserve energy, reduce emission and energy consumption, significantly reduce the one-time investment of furnace equipment and the like, and significantly reduce the cost of production operation and equipment maintenance. In addition, the production of products with the same strength grade through rapid heat treatment can reduce the alloy content, the production cost of heat treatment and the process before heat treatment, and the manufacturing difficulty of each process before heat treatment.

(5) Compared with the Q&P steel, hot galvanized Q&P steel obtained by the traditional process and the heat treatment process, the adoption of rapid heat treatment process technology reduces the time of heating process and soaking process, shortens the length of the furnace, and reduces the number of furnace rolls, so that the probability of surface defects generated in the furnace is reduced and thus the surface quality of the product is significantly improved. In addition, due to the refinement of the product grain and the reduction of alloy content in the material, the workability and forming properties such as the hole-expanding performance and bending performance of the Q&P steel obtained by the technology of the present disclosure and the use performance such as welding performance have also been improved.

For high-strength hot galvanized products, the rapid heat treatment process reduces the residence time of the strip in the high-temperature furnace, so the enrichment of alloying elements on the surface of high-strength strip steel is significantly reduced during the heat treatment process, which is conducive to improving the platability of high-strength hot galvanized products, reducing surface skip plating defects and improving corrosion resistance, thereby improving the yield rate.

The low carbon low alloy Q&P steel having a tensile strength of ≥1180MPa obtained by the present disclosure are of great value to the development of a new generation of lightweight automobiles, trains, ships, aircrafts and other vehicles and the healthy development of corresponding industries and advanced manufacturing industries.

## Description of the Drawings

Fig. 1 is a microstructure photo of a Q&P steel produced from test steel A of Example I according to Example 1 of the present disclosure.

Fig. 2 is a microstructure photo of a Q&P steel produced from test steel A of Example I according to Traditional process 1 of the present disclosure.

Fig. 3 is a microstructure photo of a Q&P steel produced from test steel K of Example I according to Example 7 of the present disclosure.

Fig. 4 is a microstructure photo of a Q&P steel produced from test steel R of Example I according to Example 8 of the present disclosure.

Fig. 5 is a microstructure photo of a Q&P steel produced from test steel P of Example I according to Example 22 of the present disclosure.

Fig. 6 is a microstructure photo of a Q&P steel produced from test steel S of Example I according to Example 23 of the present disclosure.

Fig. 7 is a microstructure photo of a Q&P steel produced from test steel A of Example II according to Example 1 of the present disclosure.

Fig. 8 is a microstructure photo of a Q&P steel produced from test steel A of Example II according to Traditional process 1 of the present disclosure.

Fig. 9 is a microstructure photo of a Q&P steel produced from test steel K of Example II according to Example 7 of the present disclosure.

Fig. 10 is a microstructure photo of a Q&P steel produced from test steel R of Example II according to Example 8 of the present disclosure.

Fig. 11 is a microstructure photo of a Q&P steel produced from test steel P of Example II according to Example 22 of the present disclosure.

Fig. 12 is a microstructure photo of a Q&P steel produced from test steel S of Example II according to Example 23 of the present disclosure.

Fig. 13 is a microstructure photo of a hot-dip galvanized Q&P steel produced from test steel A of Example III according to Example 1 of the present disclosure.

Fig. 14 is a microstructure photo of a hot dip galvanized Q&P steel (GI) produced from test steel A of Example III according to Traditional process 1 of the present disclosure.

Fig. 15 is a microstructure photo of an alloy galvannealed dual-phase steel (GA) produced from test steel I of Example III according to Example 17 of the present disclosure.

Fig. 16 is a microstructure photo of a hot dip galvanized dual-phase steel (GI) produced from test steel D of Example III according to Example 22 of the present disclosure.

Fig. 17 is a microstructure photo of an alloy galvannealed dual-phase steel (GA) produced from test steel I of Example III according to Example 34 of the present disclosure.

Fig. 18 is a microstructure photo of a hot dip galvanized Q&P steel (GI) produced from test steel A of Example IV according to Example 1 of the present disclosure.

Fig. 19 is a microstructure photo of a hot dip galvanized Q&P steel (GI) produced from test steel A of Example IV according to Traditional process 1 of the present disclosure.

Fig. 20 is a microstructure photo of an alloy galvannealed dual-phase steel (GA) produced from test steel I of Example IV according to Example 17 of the present disclosure.

Fig. 21 is a microstructure photo of a hot dip galvanized dual-phase steel (GI) produced from test steel D of Example IV according to Example 22 of the present disclosure.

Fig. 22 is a microstructure photo of an alloy galvannealed dual-phase steel (GA) produced from test steel I of Example IV according to Example 34 of the present disclosure.

**Detailed Description**

The present disclosure is further explained below in reference to the Examples and the accompanying drawings. The Examples are implemented in accordance with the technical solution of the present disclosure. Detailed embodiments and specific operation process are provided, but the protection scope of the present disclosure is not limited to the Examples described below.

In the Examples, yield strength, tensile strength and elongation were tested on P7 specimen transversely according to GB/T228.1-2010 Metallic materials-Tensile testing-Part 1: Method of test at room temperature.

Example I

The composition of the test steel of this Example is shown in Table 1. The specific parameters of the present example and the traditional processes are shown in Table 2 and Table 3. The main performances of the steel prepared from the test steel composition of this example according to the examples and the traditional processes are listed in Table 4 and Table 5.

It can be seen from Table 1-Table 5 that the process of the present disclosure can reduce the alloy content in the same grade of steel, refine grains, and obtain a matching of material structure and composition with strength and toughness. The Q&P steel obtained by the process of the present disclosure has a yield strength of 668~1002MPa, a tensile strength of 1181~1296MPa, an elongation of 18.9~24.2%, a product of strength and elongation of 24.1~28.6GPa%.

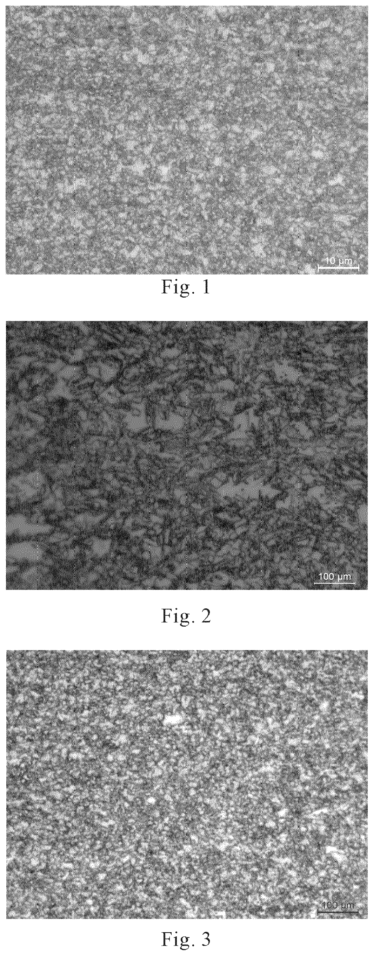

Figure 1 is a structure photo of A steel having a typical composition obtained by Example 1, and Figure 2 is a structure photo of A steel having a typical composition obtained by traditional process 1. It can be seen from the figures that there are very large differences in the material structures treated by different heat treatment methods. The microstructure of A steel obtained after the treatment of this example is mainly composed of a fine, uniform austenitic structure and a small amount of carbide dispersed in martensite matrix (Fig. 1). The grain structure of austenite and martensite and carbide are very fine and evenly distributed in the matrix, which is very beneficial to the improvement of the strength and plasticity of the material. The A steel obtained by the traditional process treatment has a relatively uneven distribution (Fig. 2). There is a small number of large pieces of white ferritic structure and black martensitic and austenitic structure is distrbuted on the grain boundary of the ferrite structure. The microstructure treated by the traditional process is characterized in that the grain is relatively coarse, and there is a certain uneven distribution of structure.

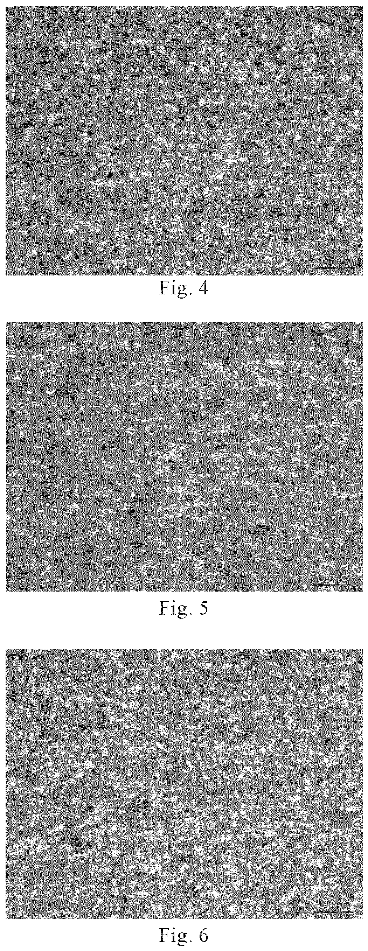

Figure 3 is a structure photo of K steel having a typical composition obtained by Example 7, and Figure 4 is a structure photo of R steel having a typical composition obtained by Example 8. Figure 5 is a structure photo of P steel having a typical composition obtained by Example 22, and Figure 6 is a structure photo of S steel having a typical composition obtained by Example 23. Examples 7, 8, 22, 23 all adopt processes with short heat treatment cycles. It can be seen from the figures that rapid annealing treatment for a short time in the process of the present disclosure can provide more uniform, fine, dispersed distribution of each phase structure. Therefore, the manufacturing process of the present disclosure can refine grains, and make the structure of each phase of the material evenly distributed in the matrix, thereby improving the material structure and the material properties.

Table 1 (unit: mass percentage)

|  | C | Si | Mn | Cr | Mo | Ti | Nb | V | P | S | Al |
|---|---|---|---|---|---|---|---|---|---|---|---|
| A | 0.171 | 1.70 | 2.20 | / | / | / | / | / | 0.0132 | 0.0014 | 0.0399 |
| B | 0.192 | 1.22 | 2.00 | / | / | / | / | / | 0.0140 | 0.0017 | 0.0366 |
| C | 0.201 | 1.35 | 1.92 | / | / | / | / | / | 0.0132 | 0.0023 | 0.0406 |
| D | 0.230 | 1.50 | 1.96 | / | / | / | / | / | 0.0112 | 0.0022 | 0.0398 |
| E | 0.195 | 1.61 | 1.60 | 0.23 | / | / | / | / | 0.0127 | 0.0021 | 0.0200 |
| F | 0.188 | 1.23 | 1.84 | / | 0.19 | / | / | / | 0.0124 | 0.0033 | 0.0409 |
| G | 0.202 | 1.10 | 1.75 | / | / | 0.040 | / | / | 0.0103 | 0.0021 | 0.0393 |
| H | 0.227 | 1.52 | 1.66 | / | / | / | 0.043 | / | 0.0144 | 0.0019 | 0.0388 |
| I | 0.203 | 1.30 | 1.84 | / | / | / | / | 0.038 | 0.0131 | 0.0018 | 0.0385 |
| J | 0.175 | 1.68 | 1.55 | 0.25 | 0.21 | / | / | / | 0.0121 | 0.0049 | 0.0347 |
| K | 0.186 | 1.41 | 1.66 | 0.22 | / | 0.035 | / | / | 0.0143 | 0.0022 | 0.0423 |
| L | 0.193 | 1.45 | 1.76 | 0.19 | / | / | 0.05 | / | 0.0116 | 0.0031 | 0.0385 |
| M | 0.212 | 1.59 | 1.65 | 0.23 | / | / | / | 0.027 | 0.0113 | 0.0029 | 0.0414 |
| N | 0.191 | 1.68 | 1.80 | / | 0.16 | 0.033 | / | / | 0.0125 | 0.0021 | 0.0401 |
| O | 0.208 | 1.13 | 1.71 | / | 0.17 | / | 0.026 |  | 0.0108 | 0.0025 | 0.0353 |
| P | 0.225 | 1.37 | 2.11 | / | 0.15 | / | / | 0.051 | 0.0131 | 0.0033 | 0.0351 |
| Q | 0.213 | 1.28 | 2.03 | / | / | 0.025 | 0.033 | / | 0.0117 | 0.0041 | 0.0383 |
| R | 0.190 | 1.62 | 1.83 | / | / | 0.0350 | / | 0.031 | 0.0150 | 0.0021 | 0.0423 |
| S | 0.202 | 1.70 | 1.65 | / | / | / | 0.035 | 0.040 | 0.0120 | 0.0018 | 0.0500 |

Table 2

| | Hot rolling coiling °C | Cold rolling reduction rate % | Rapid heating rate (one stage) °C/s | Soaking | | Slow cooling | | Rapid cooling | | Heat preserving time s | reheating rate °C/s | Tempering | | Cooling rate after tempering °C/s | Total time for rapid heat treatment s |
|---|---|---|---|---|---|---|---|---|---|---|---|---|---|---|---|
| | | | | Soaking Temperature °C | Soaking Time s | Cooling rate °C/s | Temperature after cooling °C | Cooling rate °C/s | Temperature after cooling °C | | | Tempering temperature °C | Tempering Time s | | |
| Ex.1 | 680 | 85 | 50 | 770 | 60 | 15 | 700 | 50 | 230 | 10 | 20 | 310 | 50 | 80 | 156.69 |
| Ex.2 | 650 | 75 | 80 | 790 | 50 | 12 | 720 | 80 | 235 | 3 | 30 | 325 | 40 | 75 | 121.59 |
| Ex.3 | 620 | 65 | 150 | 800 | 40 | 11 | 730 | 110 | 260 | 4 | 15 | 350 | 55 | 60 | 126.34 |
| Ex.4 | 590 | 70 | 300 | 830 | 30 | 9 | 750 | 200 | 280 | 5 | 20 | 470 | 45 | 50 | 112.44 |
| Ex.5 | 550 | 40 | 500 | 845 | 10 | 13 | 770 | 170 | 250 | 3 | 10 | 340 | 35 | 90 | 71.03 |
| Ex.6 | 640 | 50 | 250 | 835 | 35 | 5 | 720 | 140 | 238 | 2 | 22 | 355 | 10 | 30 | 93.19 |
| Ex.7 | 600 | 68 | 350 | 795 | 45 | 8 | 710 | 130 | 252 | 2 | 25 | 345 | 15 | 35 | 91.37 |
| Ex. 8 | 570 | 60 | 200 | 780 | 35 | 10 | 735 | 110 | 270 | 4 | 28 | 360 | 35 | 70 | 94.60 |
| Ex.9 | 630 | 80 | 230 | 815 | 25 | 14 | 740 | 150 | 245 | 3 | 25 | 300 | 45 | 85 | 90.61 |
| Ex.10 | 660 | 77 | 100 | 830 | 28 | 7 | 730 | 120 | 265 | 5 | 30 | 420 | 55 | 95 | 123.64 |
| Ex.11 | 580 | 55 | 180 | 820 | 20 | 6 | 710 | 140 | 255 | 6 | 18 | 450 | 60 | 100 | 127.16 |
| Ex.12 | 585 | 73 | 400 | 835 | 15 | 11 | 725 | 70 | 248 | 8 | 13 | 380 | 40 | 55 | 98.55 |
| Traditional process 1 | 680 | 85 | 11 | 770 | 160 | 10 | 675 | 100 | 230 | | 16 | 300 | 290 | 50 | 542.11 |
| Traditional process 2 | 650 | 75 | 10 | 790 | 130 | 9 | 675 | 80 | 250 | | 10 | 350 | 260 | 50 | 501.69 |
| Traditional process 3 | 610 | 65 | 11 | 810 | 110 | 10 | 675 | 75 | 240 | | 20 | 390 | 230 | 50 | 446.02 |

Rapid heat treatment (one stage)

(continued)

| | Hot rolling coiling °C | Cold rolling reduction rate % | Rapid heat treatment (one stage) | | | | | | | | | | | | | Total time for rapid heat treatment s |
| | | | Rapid heating rate (one stage) °C/s | Soaking | | Slow cooling | | Rapid cooling | | Heat preserving time s | reheating rate °C/s | Tempering | | Cooling rate after tempering °C/s | |
| | | | | Soaking Temperature °C | Soaking Time s | Cooling rate °C/s | Temperature after cooling °C | Cooling rate °C/s | Temperature after cooling °C | | | Tempering temperature °C | Tempering Time s | | |
|---|---|---|---|---|---|---|---|---|---|---|---|---|---|---|---|
| Traditional process 4 | 580 | 55 | 13 | 830 | 90 | 8 | 675 | 60 | 260 | | 30 | 440 | 160 | 50 | 353.00 |
| Traditional process 5 | 550 | 40 | 15 | 845 | 70 | 12 | 675 | 50 | 280 | | 12 | 470 | 180 | 50 | 346.10 |

Table 3

| | Hot rolling coiling, °C | Cold rolling reduction rate, % | Rapid heating (two-stage) | | | Soaking | | Slow cooling | | Rapid cooling | | Heat pre-serving time, s | reheat-ing rate, °C/ s | Tempering | | Cooling rate after temper-ing, °C/s | Total time for rapid heat treat-ment, s |
| | | | heating rate in the first stage, °C/s | Temperature after heating in the first stage, °C | Heating rate in the sec-ond stage, °C/s | Soaking temperature, °C | Soaking time, s | cooling rate, °C/s | Temperature after cooling, °C | cooling rate, °C/s | Temperature after cooling, °C | | | Tempering temperature, °C | Tem-pering time, s | | |
|---|---|---|---|---|---|---|---|---|---|---|---|---|---|---|---|---|---|
| Ex.13 | 680 | 85 | 15 | 550 | 500 | 770 | 60 | 15 | 700 | 50 | 240 | 2 | 10 | 330 | 60 | 60 | 185.81 |
| Ex.14 | 650 | 75 | 30 | 560 | 300 | 790 | 50 | 13 | 710 | 60 | 230 | 10 | 20 | 310 | 50 | 80 | 150.55 |
| Ex. 15 | 620 | 65 | 80 | 570 | 150 | 800 | 40 | 11 | 720 | 80 | 235 | 3 | 30 | 325 | 40 | 75 | 111.81 |
| Ex.16 | 590 | 70 | 150 | 600 | 80 | 830 | 30 | 9 | 730 | 100 | 260 | 4 | 15 | 350 | 55 | 60 | 123.05 |
| Ex.17 | 550 | 40 | 300 | 625 | 50 | 845 | 10 | 6 | 770 | 120 | 280 | 5 | 20 | 470 | 45 | 50 | 101.50 |
| Ex.18 | 640 | 50 | 500 | 615 | 100 | 835 | 20 | 5 | 750 | 150 | 250 | 3 | 10 | 340 | 35 | 90 | 94.28 |
| Ex.19 | 600 | 68 | 250 | 590 | 400 | 795 | 55 | 12 | 720 | 140 | 238 | 2 | 22 | 355 | 10 | 30 | 95.97 |
| Ex.20 | 570 | 60 | 300 | 580 | 300 | 780 | 45 | 8 | 715 | 130 | 252 | 2 | 25 | 345 | 15 | 35 | 89.23 |
| Ex.21 | 630 | 80 | 200 | 610 | 250 | 815 | 35 | 10 | 735 | 110 | 270 | 4 | 28 | 360 | 35 | 70 | 98.07 |
| Ex.22 | 660 | 77 | 180 | 620 | 150 | 830 | 25 | 14 | 740 | 150 | 245 | 3 | 25 | 300 | 45 | 85 | 92.96 |
| Ex.23 | 560 | 55 | 100 | 600 | 150 | 820 | 30 | 7 | 730 | 120 | 265 | 5 | 30 | 420 | 55 | 95 | 123.38 |
| Ex.24 | 580 | 85 | 280 | 610 | 200 | 835 | 20 | 6 | 760 | 200 | 255 | 6 | 18 | 450 | 60 | 100 | 119.37 |
| Traditional process 6 | 650 | 75 | 11 | 150 | 8 | 770 | 160 | 10 | 675 | 100 | 230 | | 16 | 300 | 290 | 50 | 563.24 |
| Traditional process 7 | 610 | 65 | 10 | 150 | 7 | 790 | 130 | 9 | 675 | 80 | 250 | | 10 | 350 | 260 | 50 | 529.12 |
| Traditional process 8 | 580 | 55 | 12 | 180 | 6 | 810 | 110 | 10 | 675 | 75 | 240 | | 20 | 390 | 230 | 50 | 492.53 |

(continued)

| | | Rapid heating (two-stage) | | | Soaking | | Slow cooling | | Rapid cooling | | | | Tempering | | | |
| Hot rolling coiling, °C | Cold rolling reduction rate, % | heating rate in the first stage, °C/s | Temperature after heating in the first stage, °C | Heating rate in the second stage, °C/s | Soaking temperature, °C | Soaking time, s | cooling rate, °C/s | Temperature after cooling, °C | cooling rate, °C/s | Temperature after cooling, °C | Heat preserving time, s | reheating rate, °C/s | Tempering temperature, °C | Tempering time, s | Cooling rate after tempering, °C/s | Total time for rapid heat treatment, s |
|---|---|---|---|---|---|---|---|---|---|---|---|---|---|---|---|---|
| 550 | 40 | 13 | 210 | 5 | 830 | 90 | 8 | 675 | 60 | 260 | | 30 | 440 | 160 | 50 | 429.31 |
| 680 | 85 | 15 | 250 | 5 | 845 | 70 | 12 | 675 | 50 | 280 | | 12 | 470 | 180 | 50 | 425.43 |

Rapid heat treatment (two-stage)

Traditional process 9

Traditional process 10

Table 4

| No. | Test steel | Main process parameters (Rapid heating-one stage) | Yield strength MPa | Tensile strength MPa | Elongation % | Product of strength and elongation MPa% |
|---|---|---|---|---|---|---|
| 1 | A | Traditional process 1 | 690 | 1063 | 20.9 | 22216.7 |
| 2 | A | Ex.1 | 718 | 1222 | 20.5 | 25051 |
| 3 | B | Traditional process 2 | 677 | 1070 | 21 | 22470 |
| 4 | B | Ex.2 | 716 | 1220 | 21.5 | 26230 |
| 5 | C | Traditional process 3 | 688 | 1057 | 20.3 | 21457.1 |
| 6 | C | Ex.3 | 801 | 1211 | 20.7 | 25067.7 |
| 7 | D | Traditional process 4 | 674 | 1068 | 21.6 | 23068.8 |
| 8 | D | Ex.4 | 914 | 1247 | 20.1 | 25064.7 |
| 9 | E | Traditional process 5 | 684 | 1069 | 19.8 | 21166.2 |
| 10 | E | Ex.5 | 883 | 1254 | 19.7 | 24703.8 |
| 11 | O | Ex.6 | 894 | 1225 | 19.9 | 24377.5 |
| 12 | O | Traditional process 4 | 703 | 1046 | 21.4 | 22384.4 |
| 13 | L | Ex.7 | 889 | 1223 | 20.6 | 25193.8 |
| 14 | L | Traditional process 3 | 676 | 1066 | 21.1 | 22492.6 |
| 15 | H | Ex.4 | 869 | 1253 | 20.6 | 25811.8 |
| 16 | H | Traditional process 4 | 672 | 1068 | 20.2 | 21573.6 |
| 17 | Q | Ex.2 | 890 | 1256 | 20.1 | 25245.6 |
| 18 | Q | Traditional process 2 | 686 | 1066 | 21.6 | 23025.6 |
| 19 | I | Ex.3 | 834 | 1245 | 19.7 | 24526.5 |
| 20 | J | Ex.4 | 883 | 1233 | 20.5 | 25276.5 |
| 21 | N | Ex.5 | 880 | 1250 | 20.2 | 25250 |
| 22 | F | Ex.6 | 776 | 1283 | 19.2 | 24633.6 |
| 23 | K | Ex.7 | 784 | 1277 | 18.9 | 24135.3 |
| 24 | R | Ex.8 | 785 | 1267 | 19.6 | 24833.2 |
| 25 | G | Ex.9 | 1002 | 1210 | 20.3 | 24563 |
| 26 | P | Ex.10 | 840 | 1224 | 20.2 | 24724.8 |
| 27 | S | Ex.11 | 831 | 1218 | 21.9 | 26674.2 |
| 28 | M | Ex.12 | 866 | 1239 | 19.6 | 24284.4 |

Table 5

| No. | Test steel | Main process parameters (Rapid heating-two stage) | Yield strength MPa | Tensile strength MPa | Elongation % | Product of strength and elongation MPa% |
|---|---|---|---|---|---|---|
| 1 | A | Traditional process 6 | 637 | 1057 | 23.4 | 24733.8 |
| 2 | A | Ex.13 | 668 | 1230 | 21.07 | 25916.1 |
| 3 | B | Traditional process 7 | 552 | 1059 | 22.3 | 23615.7 |

(continued)

| No. | Test steel | Main process parameters (Rapid heating-two stage) | Yield strength MPa | Tensile strength MPa | Elongation % | Product of strength and elongation MPa% |
|---|---|---|---|---|---|---|
| 4 | B | Ex.14 | 672 | 1250 | 22.9 | 28625 |
| 5 | C | Traditional process 8 | 553 | 1067 | 18.4 | 19632.8 |
| 6 | C | Ex.15 | 661 | 1225 | 232 | 28420 |
| 7 | D | Traditional process 9 | 567 | 1073 | 19 | 20387 |
| 8 | D | Ex.16 | 711 | 1181 | 24.2 | 28580.2 |
| 9 | E | Traditional process 10 | 665 | 1071 | 21.1 | 22598.1 |
| 10 | E | Ex.17 | 716 | 1246 | 19.5 | 24297 |
| 11 | O | Ex.18 | 707 | 1289 | 21.7 | 27971.3 |
| 12 | O | Traditional process 9 | 645 | 1078 | 20.2 | 21775.6 |
| 13 | L | Ex.19 | 716 | 1296 | 22.1 | 28641.6 |
| 14 | L | Traditional process 8 | 648 | 1077 | 21.2 | 22832.4 |
| 15 | H | Ex.16 | 693 | 1291 | 21.2 | 27369.2 |
| 16 | H | Traditional process 9 | 621 | 1091 | 21.8 | 23783.8 |
| 17 | Q | Ex.14 | 694 | 1288 | 21.5 | 27692 |
| 18 | Q | Traditional process 7 | 584 | 1089 | 20.3 | 22106.7 |
| 19 | I | Ex.15 | 687 | 1286 | 21.5 | 27649 |
| 20 | J | Ex.16 | 692 | 1238 | 22.1 | 27359.8 |
| 21 | N | Ex.17 | 765 | 1242 | 21.8 | 27075.6 |
| 22 | F | Ex.18 | 842 | 1219 | 22.2 | 27061.8 |
| 23 | K | Ex.19 | 862 | 1248 | 21.8 | 27206.4 |
| 24 | R | Ex.20 | 857 | 1250 | 20.8 | 26000 |
| 25 | G | Ex.21 | 866 | 1235 | 22.7 | 28034.5 |
| 26 | P | Ex.22 | 914 | 1230 | 22.1 | 27183 |
| 27 | S | Ex.23 | 872 | 1238 | 21.8 | 26988.4 |
| 28 | M | Ex.24 | 794 | 1254 | 22.2 | 27838.8 |

Example II

The composition of the inventive test steel is shown in Table 6. The specific parameters of the present example and the traditional processes are shown in Table 7 and Table 8. The main performances of the steel prepared from the test steel composition of the present disclosure according to the examples and the traditional processes are listed in Table 9 and Table 10.

It can be seen from Table 6-Table 9 that the process of the present disclosure can reduce the alloy content in the same grade of steel, refine grains, and obtain a good matching of material structure and composition with strength and toughness. The Q&P steel obtained by the process of the present disclosure has a yield strength of 754~1112MPa, a tensile strength of 1281~1350MPa, an elongation of 19-22.2%, a product of strength and elongation of 24.8~28.97GPa%.

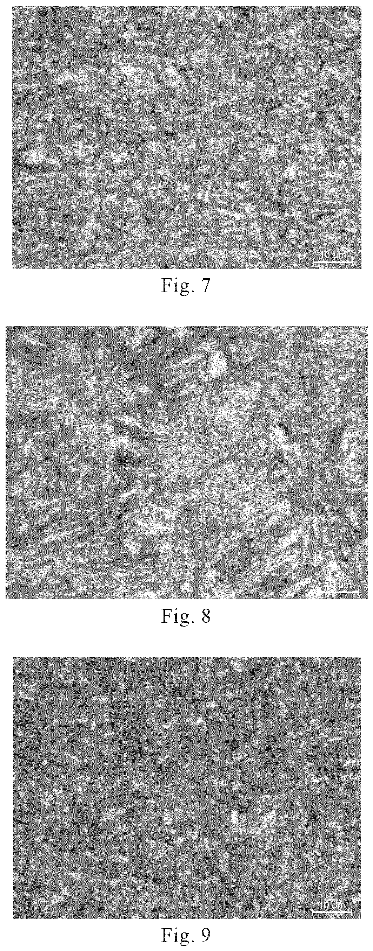

Figure 7 is a structure photo of A steel having a typical composition obtained by Example 1, and Figure 8 is a structure photo of A steel having a typical composition obtained by traditional process 1. It can be seen from the figures that there are very large differences in the material structures treated by different heat treatment methods. The microstructure of the steel obtained after the treatment of this example in the present disclosure is mainly composed of fine, uniform martensitic structure and a small amount of carbide dispersed in ferrite. The grain structure of martensite and a small amount of carbide are very fine and evenly distributed in the ferritic matrix, which is very beneficial to the improvement of the strength and plasticity of the material. In the microstructure of steel treated by the traditional process, the distribution is relatively uneven, the martensitic grain is relatively coarse and a small amount of residual austenite and carbide structure is unevenly distributed on the martensitic grain boundaries. The microstructure treated by the traditional process is characterized in that the grain is relatively coarse, and there is a certain uneven distribution of structure.

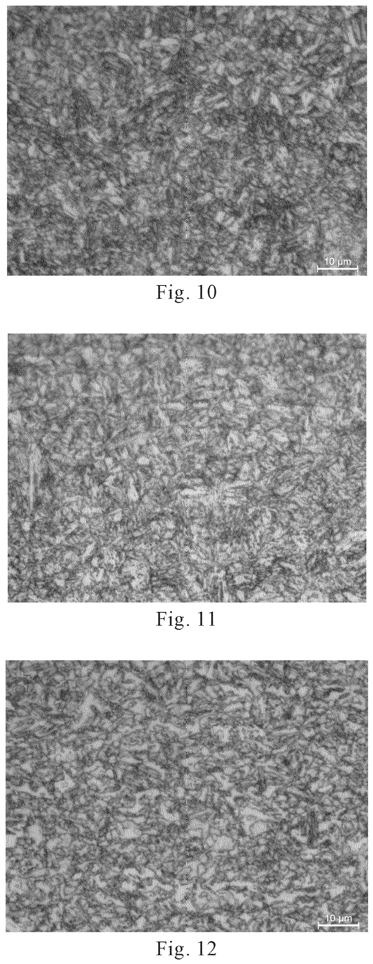

Figure 9 is a structure photo of K steel having a typical composition obtained by Example 7, and Figure 10 is a structure photo of R steel having a typical composition obtained by Example 8. Figure 11 is a structure photo of P steel having a typical composition obtained by Example 22, and Figure 12 is a structure photo of S steel having a typical composition obtained by Example 23. Examples 7, 8, 22, 23 all adopt processes with short heat treatment cycles. It can be seen from the figures that the rapid annealing treatment for a short time in the process of the present disclosure can provide more uniform, fine, dispersed distribution of each phase structure. Therefore, the manufacturing process of the steel of the present disclosure can refine grains, and make the structure of each phase of the material evenly distributed in the matrix, thereby improving the material structure and the material properties.

Table 6 (unit: mass percentage)

| Test steel | C | Si | Mn | Cr | Mo | Ti | Nb | V | P | S | Al |
|---|---|---|---|---|---|---|---|---|---|---|---|
| A | 0.160 | 200 | 300 | / | / | 0.016 | / | / | 0.0085 | 0.0018 | 0.0286 |
| B | 0.182 | 1.82 | 2.82 | / | / | 0.0153 | / | / | 0.0094 | 0.0015 | 0.0279 |
| C | 0.202 | 1.65 | 2.62 | / | / | 0.006 | / | / | 0.0095 | 0.0015 | 0.0285 |
| D | 0.230 | 1.40 | 2.40 | / | / | 0.0157 | / | / | 0.0089 | 0.002 | 0.0338 |
| E | 0.189 | 1.81 | 2.62 | 0.25 | / | 0.0152 | / | / | 0.0150 | 0.0016 | 0.0374 |
| F | 0.179 | 1.73 | 2.84 | / | 0.21 | 0.0151 | / | / | 0.0130 | 0.0010 | 0.0200 |
| G | 0.211 | 1.56 | 2.55 | / | / | 0.0160 | / | / | 0.0096 | 0.0004 | 0.0328 |
| H | 0.228 | 1.52 | 2.66 | / | / | 0.0099 | 0.045 | / | 0.0086 | 0.0008 | 0.050 |
| I | 0.213 | 1.62 | 2.54 | / | / | 0.0156 | / | 0.042 | 0.0117 | 0.0011 | 0.0412 |
| J | 0.187 | 1.88 | 2.75 | 0.24 | 0.23 | 0.0098 | / | / | 0.0074 | 0.0014 | 0.0325 |
| K | 0.198 | 1.91 | 2.66 | 0.25 | / | 0.0139 | / | / | 0.0074 | 0.0015 | 0.0388 |
| L | 0.203 | 1.75 | 2.76 | 0.21 | / | 0.0093 | 0.031 | / | 0.0109 | 0.0015 | 0.0322 |
| M | 0.222 | 1.69 | 2.65 | 0.25 | / | 0.0127 | / | 0.037 | 0.0100 | 0.0014 | 0.0267 |
| N | 0.211 | 1.68 | 2.82 | / | 0.23 | 0.0142 | / | / | 0.0121 | 0.0013 | 0.0345 |
| O | 0.228 | 1.73 | 2.71 | / | 0.25 | 0.0118 | 0.036 | / | 0.0074 | 0.0007 | 0.0371 |
| P | 0.215 | 1.67 | 2.11 | / | 0.32 | 0.0147 | / | 0.049 | 0.0074 | 0.0006 | 0.0323 |
| Q | 0.203 | 1.78 | 300 | / | / | 0.0127 | 0.035 | / | 0.0074 | 0.0010 | 0.0293 |
| R | 0.210 | 1.62 | 2.83 | / | / | 0.0157 | / | 0.035 | 0.0093 | 0.0007 | 0.0392 |
| S | 0.212 | 1.72 | 2.65 | / | / | 0.0115 | 0.038 | 0.042 | 0.0082 | 0.0006 | 0.0347 |

Table 7

| | Hot rolling coiling temperature °C | Cold rolling reduction rate % | Rapid heat treatment (one stage) | | | | | | | | | | | | total time for rapid heat treatment s |
| | | | Rapid heating rate (one stage) °C/s | Soaking | | Slow cooling | | Rapid cooling | | Heat preserving time s | reheating rate °C/s | Tempering | | Cooling rate after tempering °C/s | |
| | | | | Soaking temperature °C | Soaking time s | cooling rate °C/s | Temperature after cooling °C | cooling rate °C/s | Temperature after cooling °C | | | Tempering temperature °C | Tempering time s | | |
|---|---|---|---|---|---|---|---|---|---|---|---|---|---|---|---|
| Ex.1 | 680 | 85 | 50 | 770 | 60 | 15 | 700 | 50 | 230 | 10 | 20 | 310 | 50 | 80 | 156.69 |
| Ex.2 | 650 | 75 | 80 | 790 | 50 | 12 | 720 | 80 | 235 | 3 | 30 | 325 | 40 | 75 | 121.59 |
| Ex.3 | 620 | 65 | 150 | 800 | 40 | 11 | 730 | 110 | 260 | 4 | 15 | 350 | 55 | 60 | 126.34 |
| Ex.4 | 590 | 70 | 300 | 830 | 30 | 9 | 750 | 200 | 280 | 5 | 20 | 470 | 45 | 50 | 112.44 |
| Ex.5 | 550 | 40 | 500 | 845 | 10 | 13 | 770 | 170 | 250 | 3 | 10 | 340 | 35 | 90 | 71.03 |
| Ex.6 | 640 | 50 | 250 | 835 | 35 | 5 | 720 | 140 | 238 | 2 | 22 | 355 | 10 | 30 | 93.19 |
| Ex.7 | 600 | 68 | 350 | 795 | 45 | 8 | 710 | 130 | 252 | 2 | 25 | 345 | 15 | 35 | 91.37 |
| Ex.8 | 570 | 60 | 200 | 780 | 35 | 10 | 735 | 110 | 270 | 4 | 28 | 360 | 35 | 70 | 94.60 |
| Ex.9 | 630 | 80 | 230 | 815 | 25 | 14 | 740 | 150 | 245 | 3 | 25 | 300 | 45 | 85 | 90.61 |
| Ex.10 | 660 | 77 | 100 | 830 | 28 | 7 | 730 | 120 | 265 | 5 | 30 | 420 | 55 | 95 | 123.64 |
| Ex.11 | 580 | 55 | 180 | 820 | 20 | 6 | 710 | 140 | 255 | 6 | 18 | 450 | 60 | 100 | 127.16 |
| Ex.12 | 585 | 73 | 400 | 835 | 15 | 11 | 725 | 70 | 248 | 8 | 13 | 380 | 40 | 55 | 98.55 |
| Traditional process 1 | 680 | 85 | 11 | 770 | 160 | 10 | 675 | 100 | 230 | | 16 | 300 | 290 | 50 | 542.11 |
| Traditional process 2 | 650 | 75 | 10 | 790 | 130 | 9 | 675 | 80 | 250 | | 10 | 350 | 260 | 50 | 501.69 |
| Traditional process 3 | 610 | 65 | 11 | 810 | 110 | 10 | 675 | 75 | 240 | | 20 | 390 | 230 | 50 | 446.02 |

| | Hot rolling coiling temperature °C | Cold rolling reduction rate % | Rapid heat treatment (one stage) | | | | | | | | | | | | total time for rapid heat treatment s |
|---|---|---|---|---|---|---|---|---|---|---|---|---|---|---|---|---|
| | | | Rapid heating rate (one stage) °C/s | Soaking | | Slow cooling | | Rapid cooling | | Heat preserving time s | reheating rate °C/s | Tempering | | Cooling rate after tempering °C/s | |
| | | | | Soaking temperature °C | Soaking time s | cooling rate °C/s | Temperature after cooling °C | cooling rate °C/s | Temperature after cooling °C | | | Tempering temperature °C | Tempering time s | | |
| Traditional process 4 | 580 | 55 | 13 | 830 | 90 | 8 | 675 | 60 | 260 | | 30 | 440 | 160 | 50 | 353.00 |
| Traditional process 5 | 550 | 40 | 15 | 845 | 70 | 12 | 675 | 50 | 280 | | 12 | 470 | 180 | 50 | 346.10 |

EP 4 317 511 A1

Table 8

| | Hot rolling coiling temperature °C | Cold rolling reduction rate % | Rapid heat treatment (two-stage) | | | | | | | | | | | | | | total time for rapid heat treatment s |
|---|---|---|---|---|---|---|---|---|---|---|---|---|---|---|---|---|---|---|
| | | | Rapid heating (two-stage) | | | Soaking | | Slow cooling | | Rapid cooling | | Heat preserving time s | reheating rate °C/s | Tempering | | Cooling rate after tempering °C/s | |
| | | | Heating rate in the first stage °C/s | Temperature after heating in the first stage °C | Heating rate in the second stage °C/s | Soaking temperature °C | Soaking time s | Cooling rate °C/s | Temperature after cooling °C | cooling rate °C/s | Temperature after cooling °C | | | Tempering temperature °C | Tempering time s | | |
| Ex.13 | 680 | 85 | 15 | 550 | 500 | 770 | 60 | 15 | 700 | 50 | 240 | 2 | 10 | 330 | 60 | 60 | 185.81 |
| Ex.14 | 650 | 75 | 30 | 560 | 300 | 790 | 50 | 13 | 710 | 60 | 230 | 10 | 20 | 310 | 50 | 80 | 150.55 |
| Ex.15 | 620 | 65 | 80 | 570 | 150 | 800 | 40 | 11 | 720 | 80 | 235 | 3 | 30 | 325 | 40 | 75 | 111.81 |
| Ex.16 | 590 | 70 | 150 | 600 | 80 | 830 | 30 | 9 | 730 | 100 | 260 | 4 | 15 | 350 | 55 | 60 | 123.05 |
| Ex.17 | 550 | 40 | 300 | 625 | 50 | 845 | 10 | 6 | 770 | 120 | 280 | 5 | 20 | 470 | 45 | 50 | 101.50 |
| Ex.18 | 640 | 50 | 500 | 615 | 100 | 835 | 20 | 5 | 750 | 150 | 250 | 3 | 10 | 340 | 35 | 90 | 94.28 |
| Ex.19 | 600 | 68 | 250 | 590 | 400 | 795 | 55 | 12 | 720 | 140 | 238 | 2 | 22 | 355 | 10 | 30 | 95.97 |
| Ex.20 | 570 | 60 | 300 | 580 | 300 | 780 | 45 | 8 | 715 | 130 | 252 | 2 | 25 | 345 | 15 | 35 | 89.23 |
| Ex.21 | 630 | 80 | 200 | 610 | 250 | 815 | 35 | 10 | 735 | 110 | 270 | 4 | 28 | 360 | 35 | 70 | 98.07 |
| Ex.22 | 660 | 77 | 180 | 620 | 150 | 830 | 25 | 14 | 740 | 150 | 245 | 3 | 25 | 300 | 45 | 85 | 92.96 |
| Ex.23 | 560 | 55 | 100 | 600 | 150 | 820 | 30 | 7 | 730 | 120 | 265 | 5 | 30 | 420 | 55 | 95 | 123.38 |
| Ex.24 | 580 | 85 | 280 | 610 | 200 | 835 | 20 | 6 | 760 | 200 | 255 | 6 | 18 | 450 | 60 | 100 | 119.37 |
| Traditional process 6 | 650 | 75 | 11 | 150 | 8 | 770 | 160 | 10 | 675 | 100 | 230 | | 16 | 300 | 290 | 50 | 563.24 |
| Traditional process 7 | 610 | 65 | 10 | 150 | 7 | 790 | 130 | 9 | 675 | 80 | 250 | | 10 | 350 | 260 | 50 | 529.12 |
| Traditional process 8 | 580 | 55 | 12 | 180 | 6 | 810 | 110 | 10 | 675 | 75 | 240 | | 20 | 390 | 230 | 50 | 492.53 |

| | Hot rolling coiling temperature °C | Cold rolling reduction rate % | Rapid heat treatment (two-stage) | | | | | | | | | | | | | | total time for rapid heat treatment s |
|---|---|---|---|---|---|---|---|---|---|---|---|---|---|---|---|---|---|
| | | | Rapid heating (two-stage) | | | Soaking | | Slow cooling | | Rapid cooling | | Heat preserving time s | reheating rate °C/s | Tempering | | Cooling rate after tempering °C/s | |
| | | | Heating rate in the first stage °C/s | Temperature after heating in the first stage °C | Heating rate in the second stage °C/s | Soaking temperature °C | Soaking time s | Cooling rate °C/s | Temperature after cooling °C | cooling rate °C/s | Temperature after cooling °C | | | Tempering temperature °C | Tempering time s | | |
| Traditional process 9 | 550 | 40 | 13 | 210 | 5 | 830 | 90 | 8 | 675 | 60 | 260 | | 30 | 440 | 160 | 50 | 429.31 |
| Traditional process 10 | 680 | 85 | 15 | 250 | 5 | 845 | 70 | 12 | 675 | 50 | 280 | | 12 | 470 | 180 | 50 | 425.43 |

Table 9

| No. | Test steel | Main process parameters (Rapid heating-one stage) | Yield strength MPa | Tensile strength MPa | Elongation % | Product of strength and elongation MPa% |
|---|---|---|---|---|---|---|
| 1 | A | Traditional process 1 | 754 | 1249 | 16.7 | 20858.3 |
| 2 | A | Ex.1 | 856 | 1299 | 19.8 | 25720.2 |
| 3 | B | Traditional process 2 | 786 | 1297 | 17.6 | 22827.2 |
| 4 | B | Ex.2 | 903 | 1290 | 20.2 | 26058 |
| 5 | C | Traditional process 3 | 850 | 1250 | 17.8 | 22250 |
| 6 | C | Ex.3 | 1022 | 1305 | 19 | 24795 |
| 7 | D | Traditional process 4 | 856 | 1235 | 16.7 | 20624.5 |
| 8 | D | Ex.4 | 944 | 1291 | 20.2 | 26078.2 |
| 9 | E | Traditional process 5 | 852 | 1238 | 16.8 | 20798.4 |
| 10 | E | Ex. 5 | 1025 | 1241 | 21.1 | 26185.1 |
| 11 | O | Ex.6 | 858 | 1332 | 20.7 | 27572.4 |
| 12 | O | Traditional process 4 | 852 | 1248 | 15.8 | 19718.4 |
| 13 | L | Ex.7 | 898 | 1332 | 20.1 | 26773.2 |
| 14 | L | Traditional process 3 | 919 | 1222 | 16.1 | 19674.2 |
| 15 | H | Ex.4 | 985 | 1302 | 20.1 | 26170.2 |
| 16 | H | Traditional process 4 | 754 | 1154 | 20.2 | 23310.8 |
| 17 | Q | Ex.2 | 835 | 1286 | 20.5 | 26363 |
| 18 | Q | Traditional process 2 | 942 | 1219 | 17.2 | 20966.8 |
| 19 | I | Ex.3 | 912 | 1292 | 21.1 | 27261.2 |
| 20 | J | Ex.4 | 979 | 1308 | 20.3 | 26552.4 |
| 21 | N | Ex.5 | 1031 | 1235 | 20.8 | 25688 |
| 22 | F | Ex.6 | 922 | 1290 | 21.2 | 27348 |
| 23 | K | Ex.7 | 872 | 1328 | 21.5 | 28552 |
| 24 | R | Ex. 8 | 831 | 1305 | 21.3 | 27796.5 |
| 25 | G | Ex. 9 | 879 | 1328 | 21.3 | 28286.4 |
| 26 | P | Ex.10 | 1022 | 1331 | 20.4 | 27152.4 |
| 27 | S | Ex.11 | 868 | 1298 | 21.8 | 28296.4 |
| 28 | M | Ex.12 | 1112 | 1328 | 20.2 | 26825.6 |

Table 10

| No. | Test steel | Main process parameters (Rapid heating-two stage) | Yield strength MPa | Tensile strength MPa | Elongation % | Product of strength and elongation MPa% |
|---|---|---|---|---|---|---|
| 1 | A | Traditional process 6 | 888 | 1183 | 22.1 | 26144.3 |
| 2 | A | Ex. 13 | 880 | 1297 | 21 | 27237 |
| 3 | B | Traditional process 7 | 908 | 1205 | 16 | 19280 |

(continued)

| No. | Test steel | Main process parameters (Rapid heating-two stage) | Yield strength MPa | Tensile strength MPa | Elongation % | Product of strength and elongation MPa% |
|---|---|---|---|---|---|---|
| 4 | B | Ex.14 | 919 | 1350 | 20.2 | 27270 |
| 5 | C | Traditional process 8 | 925 | 1192 | 17 | 20264 |
| 6 | C | Ex.15 | 1022 | 1325 | 19 | 25175 |
| 7 | D | Traditional process 9 | 799 | 1158 | 22 | 25476 |
| 8 | D | Ex.16 | 754 | 1281 | 21.2 | 27157.2 |
| 9 | E | Traditional process 10 | 775 | 1143 | 22 | 25146 |
| 10 | E | Ex.17 | 852 | 1296 | 20.1 | 26049.6 |
| 11 | O | Ex.18 | 757 | 1289 | 21.7 | 27971.3 |
| 12 | O | Traditional process 9 | 826 | 1173 | 21 | 24633 |
| 13 | L | Ex.19 | 850 | 1306 | 21.1 | 27556.6 |
| 14 | L | Traditional process 8 | 757 | 1242 | 20 | 24840 |
| 15 | H | Ex.16 | 856 | 1291 | 21.2 | 27369.2 |
| 16 | H | Traditional process 9 | 733 | 1191 | 21 | 25011 |
| 17 | Q | Ex.14 | 754 | 1288 | 21.5 | 27692 |
| 18 | Q | Traditional process 7 | 744 | 1189 | 19 | 22591 |
| 19 | I | Ex.15 | 942 | 1286 | 21.5 | 27649 |
| 20 | J | Ex.16 | 919 | 1338 | 20.1 | 26893.8 |
| 21 | N | Ex.17 | 757 | 1282 | 21.8 | 27947.6 |
| 22 | F | Ex.18 | 942 | 1299 | 22.2 | 28837.8 |
| 23 | K | Ex.19 | 852 | 1298 | 21.8 | 28296.4 |
| 24 | R | Ex.20 | 850 | 1320 | 20.8 | 27456 |
| 25 | G | Ex.21 | 856 | 1335 | 21.7 | 28969.5 |
| 26 | P | Ex.22 | 944 | 1330 | 21.1 | 28063 |
| 27 | S | Ex.23 | 852 | 1338 | 20.8 | 27830.4 |
| 28 | M | Ex.24 | 754 | 1284 | 22.2 | 28504.8 |

According to the result of Example I and II, it can be seen that by modifying the traditional continuous annealing unit by rapid heating and rapid cooling process to realize the rapid heat treatment process, the length of the heating and soaking section of the traditional continuous annealing furnace can be greatly shortened, the production efficiency of the traditional continuous annealing unit can be improved, the production cost and energy consumption can be reduced, and the number of continuous annealing furnace rollers can be significantly reduced, so as to obtain strip products with high surfact quality. At the same time, by establishing a new continuous annealing unit with rapid heat treatment process technology, the purpose of providing a short and compact unit with flexible material transition and strong control ability of the continuous heat treatment unit can be realized. For materials, strip grains can be refined to further improve material strength, reduce alloy cost as well as manufacturing cost and difficulty in the process before heat treatment process, and improve the use performance of materials such as welding.

In summary, the present disclosure has greatly promoted the technological progress of continuous annealing process of cold-rolled strip steel by adopting the rapid heat treatment process. The austenitization of cold-rolled strip steel from room temperature to the final completion can be expected to be completed in tens of seconds, more than ten seconds or even a few seconds, which greatly shortens the length of the heating section of the continuous annealing furnace. It is convenient to improve the speed and production efficiency of the continuous annealing unit, and significantly reduces the number of rolls in the furnace of the continuous annealing unit. For the rapid heat treatment production line with a unit speed of about 180 m/min, the number of rollers in the high-temperature furnace section does not exceed 10, which can significantly improve the quality of the strip steel surface. At the same time, the rapid heat treatment process can complete the recrystallization and austenitization in a very short time. It will also provide a more flexible microstructure design method of high-strength steel, so as to improve the material structure and the material properties without changing the alloy composition and pre-process conditions such as rolling process.

Advanced high-strength steel represented by Q&P steel has broad application prospects. The rapid heat treatment technology has great development value. Their combination will surely provide more space for the development and production of Q&P steel.

Example III

The composition of the test steel of this Example is shown in Table 11. The specific parameters of the present example and the traditional processes are shown in Table 12 (heating in one stage) and Table 13 (heating in two stages). The main performances of the resultant GI and GA hot-galvanized QP steel product prepared from the test steel composition in Table 12 and Table 13 of the present disclosure according to the examples and the traditional processes are listed in Table 14 and Table 15.

It can be seen from Table 11-Table 15 that the process of the present disclosure can reduce the alloy content in the same grade of steel, refine grains, and obtain a matching of material structure and composition with strength and toughness. The Q&P steel obtained by the process of the present disclosure has a yield strength of 721~805MPa, a tensile strength of 1184~1297MPa, an elongation of 19.1~22.4%, a product of strength and elongation of 23.6~28GPa%.

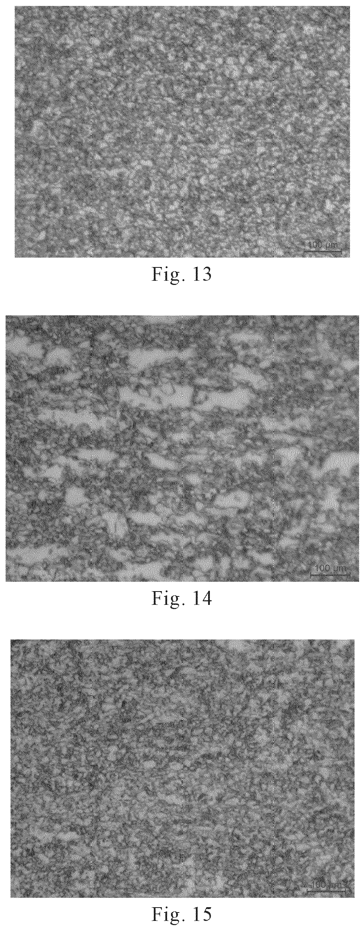

Figure 13 and Figure 14 are structure photos of A steel having a typical composition obtained by Example 1 and traditional process 1. It can be seen from the figures that there are very large differences in the structures treated by hot galvanization. In the microstructure of the A steel after the rapid heat treatment process according to the present disclosure (Fig. 13), the matrix structure is evenly distributed, and obvious lamellar tempered martensite appears in the structure, and the grain size is 1-3μm. There is a uniformly distributed ferritic phase around the martensitic reinforced phase grains. Due to the decrease in the stability of martensite formed after the growth of partial original austenite, a small amount of tempered martensite appears in the structure after heat treatment, and the remaining martensitic reinforced phase is still dominated by sheet morphology. The grain structure of ferrite and martensite and carbide are very fine and evenly distributed in the matrix, which is very beneficial to the improvement of the strength and plasticity of the material.

The steel microstructure treated by traditional process (Fig. 14) is a typical structure photo of Q&P steel with coarse slat martensite grains, austenite and carbide distributed along the martensite grain boundaries, and uneven distribution of multiphase structures.

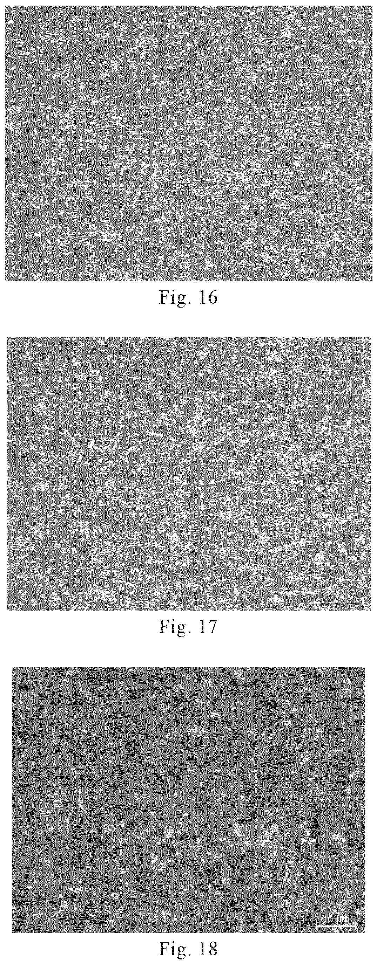

Figure 15 is a structure photo of I steel having a typical composition obtained by Example 17 (GA), and Figure 16 is a structure photo of D steel having a typical composition obtained by Example 22 (GI). Figure 17 is a structure photo of I steel having a typical composition obtained by Example 34 (GA). Examples 17, 22 and 34 all adopt processes with short heat treatment cycles. It can be seen from the figures that the process of the present disclosure can provide very uniform, fine, dispersed distribution of each phase structure. Therefore, the manufacturing process of the hot-galvanized Q&P steel of the present disclosure can refine grains, and make the structure of each phase of the material evenly distributed in the matrix, thereby improving the material structure and the material properties.

Table 11 (unit: mass percentage)

| Test steel | C | Si | Mn | Cr | Mo | Ti | Nb | V | P | S | Al |
|---|---|---|---|---|---|---|---|---|---|---|---|
| A | 0.170 | 2.00 | 2.20 | / | / | / | / | / | 0.0104 | 0.0009 | 0.0318 |
| B | 0.177 | 1.50 | 2.04 | / | / | / | / | / | 0.0096 | 0.0050 | 0.0295 |
| C | 0.198 | 1.35 | 1.85 | / | / | / | / | / | 0.0129 | 0.0013 | 0.0200 |
| D | 0.230 | 1.10 | 1.60 | / | / | / | / | / | 0.0109 | 0.0012 | 0.0335 |
| E | 0.190 | 1.65 | 1.95 | 0.35 | / | / | / | / | 0.0103 | 0.0034 | 0.0286 |
| F | 0.188 | 1.56 | 2.16 | / | 0.22 | / | / | / | 0.0095 | 0.0020 | 0.0358 |
| G | 0.223 | 1.37 | 1.77 | / | / | 0.05 | / | / | 0.0106 | 0.0019 | 0.0297 |
| H | 0.228 | 1.43 | 1.68 | / | / | 0.04 | 0.043 | | 0.0121 | 0.0003 | 0.0335 |
| I | 0.216 | 1.54 | 1.86 | / | / | 0.06 | / | 0.046 | 0.0088 | 0.0006 | 0.0233 |

(continued)

| Test steel | C | Si | Mn | Cr | Mo | Ti | Nb | V | P | S | Al |
|------------|-------|------|------|------|------|-------|-------|-------|--------|--------|--------|
| J | 0.186 | 1.67 | 2.17 | 0.26 | 0.24 | / | / | / | 0.0102 | 0.0007 | 0.0419 |
| K | 0.194 | 1.62 | 2.00 | 0.34 | / | 0.058 | / | / | 0.0099 | 0.0013 | 0.0273 |
| L | 0.208 | 1.57 | 1.74 | / | / | 0.023 | 0.056 | | 0.0107 | 0.0007 | 0.0291 |
| M | 0.210 | 1.41 | 1.67 | 0.34 | / | / | / | 0.038 | 0.0108 | 0.0029 | 0.0397 |
| N | 0.228 | 1.23 | 1.83 | / | 0.25 | 0.062 | / | / | 0.0109 | 0.0011 | 0.0305 |
| O | 0.219 | 1.27 | 1.72 | / | / | 0.043 | 0.037 | / | 0.0150 | 0.0005 | 0.0500 |
| P | 0.218 | 1.30 | 1.93 | / | 0.31 | 0.042 | / | | 0.0094 | 0.0012 | 0.0283 |
| Q | 0.209 | 1.49 | 2.20 | 0.31 | / | / | 0.039 | / | 0.0101 | 0.0008 | 0.0309 |
| R | 0.208 | 1.43 | 2.12 | / | / | 0.035 | / | 0.038 | 0.0095 | 0.0018 | 0.0349 |
| S | 0.215 | 1.38 | 1.80 | / | / | 0.043 | 0.036 | / | 0.0124 | 0.0014 | 0.03 |

Table 12

| | Hot rolling coiling °C | Cold rolling reduction rate % | Rapid heat treatment (one stage) | | | | | | | | | | | | | | Final cooling rate °C/s | Total time of rapid heat treatment and hot galvanizing s |
| | | | Rapid heating rate (one stage) °C/s | Soaking | | Slow cooling | | Rapid cooling | | Residence time after final cooling s | reheating rate °C/s | Partitioning temperature °C | Partitioning time s | Alloying treatment | | | | |
| | | | | Soaking temperature °C | Soaking time s | cooling rate °C/s | Temperature after cooling °C | cooling rate °C/s | Temperature after cooling °C | | | | | Heating rate °C/s | Temperature °C | Time s | | |
|---|---|---|---|---|---|---|---|---|---|---|---|---|---|---|---|---|---|---|
| Ex.1 | 680 | 40 | 50 | 770 | 60 | 15 | 700 | 50 | 240 | 10 | 10 | 460 | 42 | / | / | / | 100 | 167.27 |
| Ex.2 | 650 | 80 | 80 | 790 | 50 | 13 | 705 | 70 | 230 | 8 | 20 | 465 | 50 | / | / | / | 80 | 98.26 |
| Ex.3 | 610 | 70 | 150 | 800 | 40 | 11 | 710 | 80 | 235 | 6 | 30 | 470 | 40 | / | / | / | 75 | 79.15 |
| Ex.4 | 580 | 60 | 300 | 820 | 30 | 9 | 730 | 100 | 260 | 4 | 25 | 465 | 55 | / | / | / | 60 | 66.98 |
| Ex.5 | 550 | 65 | 500 | 845 | 10 | 6 | 750 | 120 | 280 | 2 | 15 | 463 | 60 | / | / | / | 50 | 54.46 |
| Ex.6 | 590 | 55 | 250 | 835 | 20 | 5 | 770 | 130 | 250 | 3 | 30 | 461 | 35 | / | / | / | 30 | 64.99 |
| Ex.7 | 640 | 45 | 350 | 795 | 55 | 12 | 715 | 140 | 238 | 7 | 25 | 468 | 20 | / | / | / | 140 | 86.69 |
| Ex.8 | 590 | 63 | 400 | 780 | 11 | 14 | 720 | 150 | 252 | 9 | 20 | 460 | 10 | / | / | / | 150 | 42.64 |
| Ex.9 | 570 | 55 | 230 | 815 | 35 | 10 | 735 | 100 | 270 | 8 | 15 | 460 | 35 | / | / | / | 120 | 75.44 |
| Ex.10 | 560 | 75 | 100 | 830 | 25 | 14 | 710 | 200 | 245 | 5 | 10 | 470 | 45 | / | / | / | 90 | 76.50 |
| Ex.11 | 600 | 72 | 180 | 820 | 30 | 15 | 745 | 170 | 235 | 4 | 26 | 465 | 55 | / | / | / | 100 | 59.74 |
| Ex.12 | 550 | 50 | 200 | 835 | 20 | 6 | 770 | 180 | 233 | 3 | 28 | 470 | 60 | / | / | / | 125 | 52.96 |
| Ex.13 | 680 | 40 | 50 | 770 | 60 | 15 | 720 | 50 | 240 | 7 | 18 | 460 | 20 | 10 | 480 | 20 | 30 | 165.82 |
| Ex.14 | 650 | 80 | 80 | 790 | 50 | 13 | 710 | 70 | 230 | 6 | 19 | 465 | 35 | 50 | 490 | 17 | 60 | 120.62 |
| Ex.15 | 610 | 70 | 150 | 800 | 40 | 11 | 740 | 80 | 235 | 3 | 15 | 470 | 45 | 100 | 510 | 15 | 90 | 98.38 |
| Ex.16 | 580 | 60 | 300 | 820 | 30 | 9 | 730 | 100 | 260 | 2 | 12 | 466 | 50 | 150 | 530 | 10 | 150 | 81.31 |
| Ex.17 | 550 | 65 | 500 | 845 | 10 | 6 | 770 | 120 | 280 | 4 | 23 | 467 | 60 | 300 | 550 | 5 | 250 | 48.05 |
| Traditional process 1 | 680 | 79 | 11 | 770 | 160 | 10 | 675 | 100 | 230 | 2 | 21 | 470 | 290 | / | / | / | 30 | 270.56 |

(continued)

| | Hot rolling coiling °C | Cold rolling reduction rate % | Rapid heat treatment (one stage) | | | | | | | | | | | | | | | Total time of rapid heat treatment and hot galvanizing s |
|---|---|---|---|---|---|---|---|---|---|---|---|---|---|---|---|---|---|---|
| | | | Rapid heating rate (one stage) °C/s | Soaking | | Slow cooling | | Rapid cooling | | Residence time after final cooling s | reheating rate °C/s | Partitioning temperature °C | Partitioning time s | Alloying treatment | | | Final cooling rate °C/s | |
| | | | | Soaking temperature °C | Soaking time s | cooling rate °C/s | Temperature after cooling °C | cooling rate °C/s | Temperature after cooling °C | | | | | Heating rate °C/s | Temperature °C | Time s | | |
| Traditional process 2 | 650 | 76 | 10 | 790 | 130 | 9 | 675 | 80 | 250 | 2 | 23 | 465 | 260 | / | / | / | 60 | 243.85 |
| Traditional process 3 | 610 | 70 | 11 | 800 | 110 | 10 | 675 | 75 | 240 | 2 | 28 | 460 | 230 | / | / | / | 90 | 213.96 |
| Traditional process 4 | 580 | 65 | 13 | 820 | 90 | 8 | 675 | 60 | 260 | 2 | 22 | 470 | 160 | / | / | / | 120 | 191.88 |
| Traditional process 5 | 550 | 60 | 15 | 845 | 70 | 12 | 675 | 50 | 280 | 2 | 16 | 470 | 180 | / | / | / | 150 | 163.94 |
| Traditional process 6 | 680 | 79 | 12 | 770 | 160 | 10 | 675 | 100 | 230 | 2 | 17 | 470 | 290 | 12 | 480 | 20 | 30 | 308.40 |
| Traditional process 7 | 650 | 76 | 14 | 790 | 130 | 9 | 675 | 80 | 250 | 2 | 15 | 465 | 270 | 16 | 490 | 17 | 60 | 258.84 |
| Traditional process 8 | 610 | 70 | 10 | 800 | 110 | 10 | 675 | 75 | 240 | 2 | 21 | 460 | 250 | 10 | 510 | 15 | 90 | 265.67 |
| Traditional process 9 | 580 | 65 | 11 | 820 | 90 | 8 | 675 | 60 | 260 | 2 | 19 | 470 | 230 | 20 | 530 | 10 | 120 | 22807 |

(continued)

| | Hot rolling coiling °C | Cold rolling reduction rate % | Rapid heating rate (one stage) °C/s | Rapid heat treatment (one stage) | | | | | | | | | | | | | | | Total time of rapid heat treatment and hot galvanizing s |
| | | | | Soaking | | Slow cooling | | Rapid cooling | | Residence time after final cooling s | reheating rate °C/s | Partitioning temperature °C | Partitioning time s | Alloying treatment | | | Final cooling rate °C/s | |
| | | | | Soaking temperature °C | Soaking time s | cooling rate °C/s | Temperature after cooling °C | cooling rate °C/s | Temperature after cooling °C | | | | | Heating rate °C/s | Temperature °C | Time s | | |
| Traditional process 10 | 550 | 60 | 15 | 845 | 70 | 12 | 675 | 50 | 280 | 2 | 20 | 470 | 200 | 25 | 550 | 5 | 150 | 177.37 |

Table 13

| | Hot rolling coiling °C | Cold rolling reduction rate % | Rapid heat treatment (two-stage) | | | | | | | | | | | | | | | | Final cooling rate °C/s | Total time of rapid heat treatment and hot galvanizing s |
| | | | Rapid heating (two-stage) | | | Soaking | | Slow cooling | | Rapid cooling | | Residence time after final cooling s | Reheating rate °C/s | Partitioning | | alloying treatment | | | | |
| | | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | | | Temperature °C | Time s | heating rate °C/s | temperature °C | times | | |
|---|---|---|---|---|---|---|---|---|---|---|---|---|---|---|---|---|---|---|---|---|
| Ex.18 | 680 | 40 | 15 | 550 | 500 | 770 | 60 | 15 | 700 | 50 | 240 | 10 | 10 | 460 | 42 | / | / | / | 100 | 185.84 |
| Ex.19 | 650 | 80 | 30 | 570 | 300 | 790 | 50 | 13 | 705 | 70 | 230 | 8 | 20 | 465 | 50 | / | / | / | 80 | 154.77 |
| Ex.20 | 610 | 70 | 80 | 600 | 150 | 800 | 40 | 11 | 710 | 80 | 235 | 6 | 30 | 470 | 40 | / | / | / | 75 | 119.40 |
| Ex.21 | 580 | 60 | 150 | 625 | 80 | 820 | 30 | 9 | 730 | 100 | 260 | 4 | 25 | 465 | 55 | / | / | / | 60 | 122.37 |
| Ex.22 | 550 | 65 | 300 | 610 | 50 | 845 | 10 | 6 | 750 | 120 | 280 | 2 | 15 | 463 | 60 | / | / | / | 50 | 115.82 |
| Ex.23 | 590 | 55 | 500 | 605 | 30 | 835 | 20 | 5 | 770 | 130 | 250 | 3 | 30 | 461 | 35 | / | / | / | 30 | 98.54 |
| Ex.24 | 640 | 45 | 250 | 590 | 200 | 795 | 55 | 12 | 715 | 140 | 238 | 7 | 25 | 468 | 20 | / | / | / | 140 | 106.14 |
| Ex.25 | 590 | 63 | 350 | 615 | 450 | 780 | 11 | 14 | 720 | 150 | 252 | 9 | 20 | 460 | 10 | / | / | / | 150 | 51.42 |
| Ex.26 | 570 | 55 | 400 | 620 | 350 | 815 | 35 | 10 | 735 | 100 | 270 | 8 | 15 | 460 | 35 | / | / | / | 120 | 107.46 |
| Ex.27 | 560 | 75 | 250 | 580 | 250 | 830 | 25 | 14 | 710 | 200 | 245 | 5 | 10 | 470 | 45 | / | / | / | 90 | 114.14 |
| Ex.28 | 600 | 72 | 100 | 590 | 150 | 820 | 30 | 15 | 745 | 170 | 235 | 4 | 26 | 465 | 55 | / | / | / | 100 | 115.23 |
| Ex.29 | 550 | 50 | 200 | 610 | 200 | 835 | 20 | 6 | 770 | 180 | 233 | 3 | 28 | 470 | 60 | / | / | / | 125 | 111.06 |
| Ex.30 | 680 | 40 | 15 | 550 | 500 | 770 | 60 | 15 | 720 | 50 | 240 | 7 | 18 | 460 | 20 | 10 | 480 | 20 | 30 | 183.93 |
| Ex.31 | 650 | 80 | 30 | 570 | 300 | 790 | 50 | 13 | 710 | 70 | 230 | 6 | 19 | 465 | 35 | 50 | 490 | 17 | 60 | 160.78 |
| Ex.32 | 610 | 70 | 80 | 600 | 150 | 800 | 40 | 11 | 740 | 80 | 235 | 3 | 15 | 470 | 45 | 100 | 510 | 15 | 90 | 144.86 |
| Ex.33 | 580 | 60 | 150 | 620 | 80 | 820 | 30 | 9 | 730 | 100 | 260 | 2 | 12 | 466 | 50 | 150 | 530 | 10 | 150 | 134.19 |
| Ex.34 | 550 | 65 | 300 | 610 | 50 | 845 | 10 | 6 | 770 | 120 | 280 | 4 | 23 | 467 | 60 | 300 | 550 | 5 | 250 | 112.78 |
| Traditional process 11 | 680 | 79 | 11 | 150 | 8 | 770 | 160 | 10 | 675 | 100 | 230 | 2 | 21 | 470 | 290 | / | / | / | 30 | 573.70 |

(continued)

| | Hot rolling coiling °C | Cold rolling reduction rate % | Rapid heating (two-stage) | | | Soaking | | Slow cooling | | Rapid cooling | | | Reheating rate °C/s | Partitioning | | alloying treatment | | | Final cooling rate °C/s | Total time of rapid heat treatment and hot galvanizing s |
|---|---|---|---|---|---|---|---|---|---|---|---|---|---|---|---|---|---|---|---|---|
| | | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | Residence time after final cooling s | | Temperature °C | Time s | heating rate °C/s | temperature °C | time s | | |
| Traditional process 12 | 650 | 76 | 10 | 150 | 7 | 790 | 130 | 9 | 675 | 80 | 250 | 2 | 23 | 465 | 260 | / | / | / | 60 | 527.70 |
| Traditional process 13 | 610 | 70 | 11 | 180 | 6 | 800 | 110 | 10 | 675 | 75 | 240 | 2 | 28 | 460 | 230 | / | / | / | 90 | 488.48 |
| Traditional process 14 | 580 | 65 | 13 | 210 | 5 | 820 | 90 | 8 | 675 | 60 | 260 | 2 | 22 | 470 | 160 | / | / | / | 120 | 425.20 |
| Traditional process 15 | 550 | 60 | 15 | 250 | 5 | 845 | 70 | 12 | 675 | 50 | 280 | 2 | 16 | 470 | 180 | / | / | / | 150 | 422.01 |
| Traditional process 16 | 680 | 79 | 11 | 150 | 8 | 770 | 160 | 10 | 675 | 100 | 230 | 2 | 17 | 470 | 290 | 12 | 480 | 20 | 30 | 605.55 |
| Traditional process 17 | 650 | 76 | 10 | 150 | 7 | 790 | 130 | 9 | 675 | 80 | 250 | 2 | 15 | 465 | 270 | 16 | 490 | 17 | 60 | 565.25 |
| Traditional process 18 | 610 | 70 | 11 | 180 | 6 | 800 | 110 | 10 | 675 | 75 | 240 | 2 | 21 | 460 | 250 | 10 | 510 | 15 | 90 | 534.10 |
| Traditional process 19 | 580 | 65 | 13 | 210 | 5 | 820 | 90 | 8 | 675 | 60 | 260 | 2 | 19 | 470 | 230 | 20 | 530 | 10 | 120 | 511.96 |

Rapid heat treatment (two-stage)

(continued)

| | Hot rolling coiling °C | Cold rolling reduction rate % | Rapid heating (two-stage) | | | Rapid heat treatment (two-stage) | | | | | | | | | | | | | | |
| | | | Heating rate in the first stage °C/s | Temperature after heating in the first stage °C | Heating rate in the second stage °C/s | Soaking | | Slow cooling | | Rapid cooling | | | | Partitioning | | alloying treatment | | | Final cooling rate °C/s | Total time of rapid heat treatment and hot galvanizing s |
| | | | | | | Soaking temperature °C | Soaking time s | Cooling rate °C/s | Temperature after cooling °C | Cooling rate °C/s | Temperature after cooling °C | Residence time after final cooling s | Reheating rate °C/s | Temperature °C | Time s | heating rate °C/s | temperature °C | time s | | |
| Traditional process 20 | 550 | 60 | 15 | 250 | 5 | 845 | 70 | 12 | 675 | 50 | 280 | 2 | 20 | 470 | 200 | 25 | 550 | 5 | 150 | 449.63 |

Table 14

| No. | Test steel | Type of Products | Main process parameters (Rapid heating-one stage) | Yield strength MPa | Tensile strength MPa | Elongation % | Product of strength and elongation MPa% |
|---|---|---|---|---|---|---|---|
| 1 | A | Hot dip galvanized GI | Traditional process 1 | 669 | 1100 | 17.9 | 19690 |
| 2 | A | | Ex.1 | 725 | 1249 | 20.2 | 25229.8 |
| 3 | B | | Traditional process 2 | 670 | 1075 | 17.1 | 18382.5 |
| 4 | B | | Ex. 2 | 726 | 1250 | 21.8 | 27250 |
| 5 | C | | Traditional process 3 | 686 | 1061 | 19.5 | 20689.5 |
| 6 | C | | Ex. 3 | 721 | 1242 | 21.2 | 26330.4 |
| 7 | D | | Traditional process 4 | 679 | 1075 | 20 | 21500 |
| 8 | D | | Ex.4 | 802 | 1238 | 21.6 | 26740.8 |
| 9 | E | | Traditional process 5 | 690 | 1078 | 20 | 21560 |
| 10 | E | | Ex. 5 | 771 | 1238 | 22.3 | 27607.4 |
| 11 | N | | Ex.6 | 753 | 1193 | 21 | 25053 |
| 12 | F | | Ex.7 | 771 | 1235 | 20.7 | 25564.5 |
| 13 | K | | Ex.8 | 800 | 1248 | 21.1 | 26332.8 |
| 14 | R | | Ex.9 | 805 | 1233 | 20.6 | 25399.8 |
| 15 | G | | Ex.10 | 805 | 1250 | 21.2 | 26500 |
| 16 | P | | Ex. 11 | 742 | 1286 | 20.3 | 26105.8 |
| 17 | S | | Ex. 12 | 804 | 1235 | 20.8 | 25688 |
| 18 | O | Alloy galvannealed GA | Ex.13 | 785 | 1249 | 21.7 | 27103.3 |
| 19 | O | | Traditional process 6 | 709 | 1090 | 20 | 21800 |
| 20 | L | | Ex.14 | 788 | 1238 | 21.8 | 26988.4 |
| 21 | L | | Traditional process 7 | 678 | 1064 | 20.2 | 21492.8 |
| 22 | H | | Ex. 15 | 778 | 1297 | 21.6 | 28015.2 |
| 23 | H | | Traditional process 8 | 683 | 1072 | 208 | 22297.6 |
| 24 | Q | | Ex.16 | 776 | 1250 | 20.2 | 25250 |
| 25 | Q | | Traditional process 9 | 709 | 1064 | 20.9 | 22237.6 |
| 26 | I | | Ex.17 | 759 | 1238 | 19.1 | 23645.8 |
| 27 | J | | Traditional process 10 | 673 | 1118 | 22.1 | 24707.8 |

Table 15

| No. | Test steel | Products | Main process parameters (Rapid heating-two stage) | Yield strength MPa | Tensile strength MPa | Elongation % | Product of strength and elongation MPa% |
|---|---|---|---|---|---|---|---|
| 1 | A | Hot dip galvanized GI | Traditional process 11 | 653 | 1110 | 19.1 | 21201 |
| 2 | A | | Ex. 19 | 725 | 1249 | 21 | 26229 |
| 3 | B | | Traditional process 12 | 665 | 1095 | 19.7 | 21571.5 |
| 4 | B | | Ex.20 | 726 | 1250 | 20.2 | 25250 |
| 5 | C | | Traditional process 13 | 655 | 1107 | 19.4 | 21475.8 |
| 6 | C | | Ex.21 | 721 | 1242 | 19 | 23598 |
| 7 | D | | Traditional process 14 | 701 | 1092 | 19.8 | 21621.6 |
| 8 | D | | Ex.22 | 749 | 1184 | 21.2 | 25100.8 |
| 9 | E | | Traditional process 15 | 706 | 1116 | 17.8 | 19864.8 |
| 10 | E | | Ex.23 | 713 | 1216 | 20.1 | 24441.6 |
| 11 | N | | Ex. 18 | 762 | 1222 | 21.5 | 26273 |
| 12 | F | | Ex.24 | 734 | 1248 | 21 | 26208 |
| 13 | K | | Ex.25 | 767 | 1219 | 22.3 | 27183.7 |
| 14 | R | | Ex.26 | 777 | 1230 | 20 | 24600 |
| 15 | G | | Ex.27 | 753 | 1219 | 22.4 | 27305.6 |
| 16 | P | | Ex.28 | 743 | 1238 | 21 | 25998 |
| 17 | S | | Ex.29 | 738 | 1250 | 21.5 | 26875 |
| 18 | O | Alloy galvannealed GA | Ex.30 | 764 | 1235 | 20 | 24700 |
| 19 | O | | Traditional process 16 | 710 | 1115 | 19.2 | 21408 |
| 20 | L | | Ex.31 | 752 | 1208 | 22.1 | 26696.8 |
| 21 | L | | Traditional process 17 | 673 | 1108 | 19.3 | 21384.4 |
| 22 | H | | Ex.32 | 761 | 1267 | 20.7 | 26226.9 |
| 23 | H | | Traditional process 18 | 713 | 1099 | 19.3 | 21210.7 |
| 24 | Q | | Ex.33 | 764 | 1231 | 21.1 | 25974.1 |
| 25 | Q | | Traditional process 19 | 669 | 1100 | 19.4 | 21340 |
| 26 | I | | Ex.34 | 745 | 1208 | 21.6 | 26092.8 |
| 27 | J | | Traditional process 20 | 656 | 1096 | 21.4 | 23454.4 |

Example IV

The composition of the test steel of this Example is shown in Table 16. The specific parameters of the present example and the traditional processes are shown in Table 17 (heating in one stage) and Table 18 (heating in two stages). The main performances of the hot galvanized GI product prepared from the test steel composition of the present disclosure according to the examples and the traditional processes are listed in Table 19 and Table 20. The main performances of the hot galvanized QP steel GI and GA prepared from the test steel composition of the present disclosure according to the examples and the traditional processes in Table 17 and Table 18 are listed in Table 19.

It can be seen from Table 16-Table 20 that the process of the present disclosure can reduce the alloy content in the same grade of steel, refine grains, and obtain a matching of material structure and composition with strength and toughness. The Q&P steel obtained by the process of the present disclosure has a yield strength of 802~956MPa, a tensile strength of 1280~1352MPa, a maximum elongation of 19~22.5%, a product of strength and elongation of 25.2~28.9GPa%.

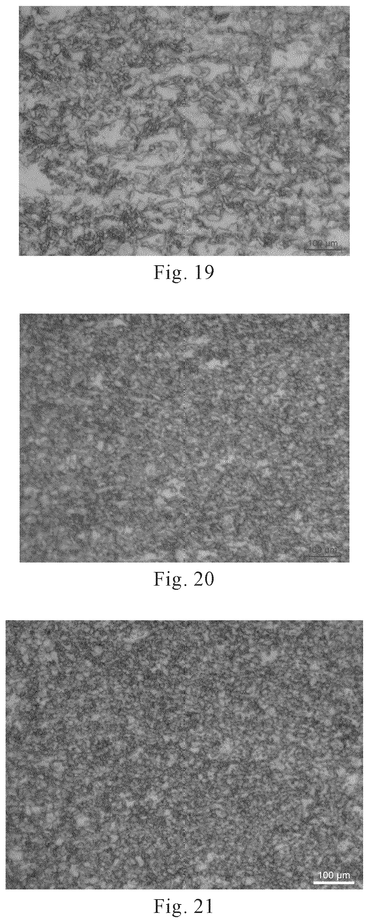

Figure 18 and Figure 19 are structure photos of A steel having a typical composition obtained by Example 1 and traditional process 1. It can be seen from the figures that there are very large differences in the structures treated by hot galvanization. In the microstructure of the A steel after the rapid heat treatment process according to the present disclosure (Fig. 18), which is composed of martensite, austenite and a small amount of ferrite and carbide, the matrix structure is evenly distributed, and obvious lamellar tempered martensite appears in the structure, and the grain size is 1-3$\mu$m. Most of the reinforced phase grains are surrounded by ferrite. Due to the decrease in the stability of martensite formed after the growth of partial original austenite, a small amount of tempered martensite appears in the structure after heat treatment, and the remaining martensitic reinforced phase is still dominated by block morphology. The grain structure of ferrite and martensite and carbide are very fine and evenly distributed in the matrix, which is very beneficial to the improvement of the strength and plasticity of the material.

The steel microstructure treated by traditional process (Fig. 19) is a typical structure photo of Q&P steel with coarse slat martensite grains, austenite and carbide distributed along the martensite grain boundaries, and uneven distribution of multiphase structures.

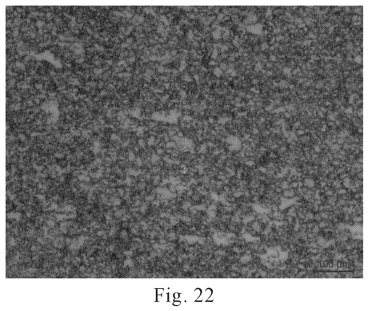

Figure 20 is a structure photo of I steel having a typical composition obtained by Example 17 (GA), and Figure 21 is a structure photo of D steel having a typical composition obtained by Example 22 (GI). Figure 22 is a structure photo of I steel having a typical composition obtained by Example 34 (GA). Examples 17, 22, 34 all adopt processes with short heat treatment cycles. It can be seen from the figures that the process of the present disclosure can provide a very uniform, fine, dispersed distribution of each phase structure. The manufacturing process of the hot- galvanized Q&P steel of the present disclosure can refine grains, and make the structure of each phase of the material evenly distributed in the matrix, thereby improving the material structure and the material properties.

Table 16 (unit: mass percentage)

| Test steel | C | Si | Mn | Cr | Mo | Ti | Nb | V | P | S | Al |
|---|---|---|---|---|---|---|---|---|---|---|---|
| A | 0.160 | 2.00 | 3.00 | / | / | 0.006 | / | / | 0.0104 | 0.0013 | 0.0272 |
| B | 0.179 | 1.82 | 2.84 | / | / | 0.008 | / | / | 0.0096 | 0.0012 | 0.0335 |
| C | 0.201 | 1.66 | 2.65 | / | / | 0.007 | / | / | 0.0129 | 0.0014 | 0.0286 |
| D | 0.229 | 1.40 | 2.40 | / | / | 0.016 | / | / | 0.0109 | 0.0020 | 0.0358 |
| E | 0.188 | 1.85 | 2.65 | 0.28 | / | 0.009 | / | / | 0.0093 | 0.0019 | 0.0297 |
| F | 0.181 | 1.76 | 2.86 | / | 0.22 | 0.010 | / | / | 0.0095 | 0.0003 | 0.0335 |
| G | 0.213 | 1.57 | 2.57 | / | / | 0.008 | / | / | 0.0106 | 0.0006 | 0.0333 |
| H | 0.229 | 1.53 | 2.68 | / | / | 0.013 | 0.044 | / | 0.0121 | 0.0007 | 0.0319 |
| I | 0.214 | 1.64 | 2.56 | / | / | 0.017 | / | 0.045 | 0.0088 | 0.0013 | 0.0200 |
| J | 0.186 | 1.87 | 2.77 | 0.26 | 0.24 | 0.007 | / | / | 0.0102 | 0.0007 | 0.0291 |
| K | 0.199 | 1.92 | 2.65 | 0.27 | / | 0.0082 | / | / | 0.0099 | 0.0009 | 0.0397 |
| L | 0.202 | 1.77 | 2.74 | 0.23 | / | 0.0143 | 0.055 | | 0.0107 | 0.0011 | 0.0305 |
| M | 0.171 | 1.71 | 2.67 | 0.24 | / | 0.0093 | / | 0.035 | 0.0108 | 0.0005 | 0.0400 |
| N | 0.213 | 1.69 | 2.83 | / | 0.25 | 0.0062 | / | / | 0.0109 | 0.0012 | 0.0283 |
| O | 0.230 | 1.74 | 2.72 | / | 0.26 | 0.0073 | 0.039 | / | 0.0136 | 0.0008 | 0.0309 |
| P | 0.216 | 1.68 | 2.13 | / | 0.31 | 0.0082 | / | 0.045 | 0.0094 | 0.0018 | 0.0349 |
| Q | 0.184 | 1.79 | 3.00 | / | / | 0.0094 | 0.038 | / | 0.0150 | 0.0014 | 0.0500 |

(continued)

| Test steel | C | Si | Mn | Cr | Mo | Ti | Nb | V | P | S | Al |
|------------|-------|------|------|----|----|--------|-------|-------|--------|--------|--------|
| R | 0.211 | 1.63 | 2.82 | / | / | 0.0150 | / | 0.038 | 0.0095 | 0.0015 | 0.0279 |
| S | 0.213 | 1.73 | 2.67 | / | / | 0.0131 | 0.035 | 0.045 | 0.0124 | 0.0006 | 0.0347 |

Table 17

| | Hot rolling coiling °C | Cold rolling reduction rate % | Rapid heat treatment (one stage) | | | | | | | | | | | | | | | Total time of rapid heat treatment and hot galvanizing s |
| | | | Rapid heating rate (one stage) °C/s | Soaking | | Slow cooling | | Rapid cooling | | Residence time after final cooling s | reheating rate °C/s | Partitioning temperature °C | Partitioning time s | alloying treatment | | | Final cooling rate °C/s | |
| | | | | Soaking temperature °C | Soaking time s | cooling rate °C/s | Temperature after cooling °C | cooling rate °C/s | Temperature after cooling °C | | | | | Heating rate °C/s | temperature °C | time s | | |
|---|---|---|---|---|---|---|---|---|---|---|---|---|---|---|---|---|---|---|
| Ex.1 | 680 | 40 | 50 | 770 | 60 | 15 | 700 | 50 | 240 | 10 | 10 | 460 | 42 | / | / | / | 100 | 167.27 |
| Ex.2 | 650 | 80 | 80 | 790 | 50 | 13 | 705 | 70 | 230 | 8 | 20 | 465 | 50 | / | / | / | 80 | 98.26 |
| Ex.3 | 610 | 70 | 150 | 800 | 40 | 11 | 710 | 80 | 235 | 6 | 30 | 470 | 40 | / | / | / | 75 | 79.15 |
| Ex.4 | 580 | 60 | 300 | 820 | 30 | 9 | 730 | 100 | 260 | 4 | 25 | 465 | 55 | / | / | / | 60 | 66.98 |
| Ex.5 | 550 | 65 | 500 | 845 | 10 | 6 | 750 | 120 | 280 | 2 | 15 | 463 | 60 | / | / | / | 50 | 54.46 |
| Ex.6 | 590 | 55 | 250 | 835 | 20 | 5 | 770 | 130 | 250 | 3 | 30 | 461 | 35 | / | / | / | 30 | 64.99 |
| Ex.7 | 640 | 45 | 350 | 795 | 55 | 12 | 715 | 140 | 238 | 7 | 25 | 468 | 20 | / | / | / | 140 | 86.69 |
| Ex.8 | 590 | 63 | 400 | 780 | 11 | 14 | 720 | 150 | 252 | 9 | 20 | 460 | 10 | / | / | / | 150 | 42.64 |
| Ex.9 | 570 | 55 | 230 | 815 | 35 | 10 | 735 | 100 | 270 | 8 | 15 | 460 | 35 | / | / | / | 120 | 75.44 |
| Ex.10 | 560 | 75 | 100 | 830 | 25 | 14 | 710 | 200 | 245 | 5 | 10 | 470 | 45 | / | / | / | 90 | 76.50 |
| Ex.11 | 600 | 72 | 180 | 820 | 30 | 15 | 745 | 170 | 235 | 4 | 26 | 465 | 55 | / | / | / | 100 | 59.74 |
| Ex.12 | 550 | 50 | 200 | 835 | 20 | 6 | 770 | 180 | 233 | 3 | 28 | 470 | 60 | / | / | / | 125 | 52.96 |
| Ex.13 | 680 | 40 | 50 | 770 | 60 | 15 | 720 | 50 | 240 | 7 | 18 | 460 | 20 | 10 | 480 | 20 | 30 | 165.82 |
| Ex.14 | 650 | 80 | 80 | 790 | 50 | 13 | 710 | 70 | 230 | 6 | 19 | 465 | 35 | 50 | 490 | 17 | 60 | 120.62 |
| Ex.15 | 610 | 70 | 150 | 800 | 40 | 11 | 740 | 80 | 235 | 3 | 15 | 470 | 45 | 100 | 510 | 15 | 90 | 98.38 |
| Ex.16 | 580 | 60 | 300 | 820 | 30 | 9 | 730 | 100 | 260 | 2 | 12 | 466 | 50 | 150 | 530 | 10 | 150 | 81.31 |
| Ex.17 | 550 | 65 | 500 | 845 | 10 | 6 | 770 | 120 | 280 | 4 | 23 | 467 | 60 | 300 | 550 | 5 | 250 | 48.05 |
| Traditional process 1 | 680 | 79 | 11 | 770 | 160 | 10 | 675 | 100 | 230 | 2 | 21 | 470 | 290 | / | / | / | 30 | 270.56 |
| Traditional process 2 | 650 | 76 | 10 | 790 | 130 | 9 | 675 | 80 | 250 | 2 | 23 | 465 | 260 | / | / | / | 60 | 243.85 |

| | Hot rolling coiling °C | Cold rolling reduction rate % | Rapid heat treatment (one stage) | | | | | | | | | | | | | | | | Total time of rapid heat treatment and hot galvanizing s |
|---|---|---|---|---|---|---|---|---|---|---|---|---|---|---|---|---|---|---|---|
| | | | Rapid heating rate (one stage) °C/s | Soaking | | Slow cooling | | Rapid cooling | | Residence time after final cooling s | reheating rate °C/s | Partitioningtemperature °C | Partitioning time s | alloying treatment | | | Final cooling rate °C/s | |
| | | | | Soakingtemperature °C | Soaking time s | cooling rate °C/s | Temperature after cooling °C | cooling rate °C/s | Temperature after cooling °C | | | | | Heating rate °C/s | temperature °C | time s | | |
| Traditional process 3 | 610 | 70 | 11 | 800 | 110 | 10 | 675 | 75 | 240 | 2 | 28 | 460 | 230 | / | / | / | 90 | 213.96 |
| Traditional process 4 | 580 | 65 | 13 | 820 | 90 | 8 | 675 | 60 | 260 | 2 | 22 | 470 | 160 | / | / | / | 120 | 191.88 |
| Traditional process 5 | 550 | 60 | 15 | 845 | 70 | 12 | 675 | 50 | 280 | 2 | 16 | 470 | 180 | / | / | / | 150 | 163.94 |
| Traditional process 6 | 680 | 79 | 12 | 770 | 160 | 10 | 675 | 100 | 230 | 2 | 17 | 470 | 290 | 12 | 480 | 20 | 30 | 308.40 |
| Traditional process 7 | 650 | 76 | 14 | 790 | 130 | 9 | 675 | 80 | 250 | 2 | 15 | 465 | 270 | 16 | 490 | 17 | 60 | 258.84 |
| Traditional process 8 | 610 | 70 | 10 | 800 | 110 | 10 | 675 | 75 | 240 | 2 | 21 | 460 | 250 | 10 | 510 | 15 | 90 | 265.67 |
| Traditional process 9 | 580 | 65 | 11 | 820 | 90 | 8 | 675 | 60 | 260 | 2 | 19 | 470 | 230 | 20 | 530 | 10 | 120 | 228.07 |
| Traditional process 10 | 550 | 60 | 15 | 845 | 70 | 12 | 675 | 50 | 280 | 2 | 20 | 470 | 200 | 25 | 550 | 5 | 150 | 177.37 |

EP 4 317 511 A1

Table 18

| | Hot rolling coiling °C | Cold rolling reduction rate % | Rapid heat treatment (two-stage) | | | | | | | | | | | | | | | | | Finale ooling rate °C/s | Total time of rapid heat treat- mentand hot gal- vanizi ng s |
|---|---|---|---|---|---|---|---|---|---|---|---|---|---|---|---|---|---|---|---|---|---|
| | | | Rapid heating (two-stage) | | | Soaking | | Slow cooling | | Rapid cooling | | Re- side nce time af- ter final coolin g s | reheati ng rate °C/s | Parti tioni ng temp eratu re °C | Parti tioni ng time s | Alloying treatment | | | | |
| | | | Heat- ing rate in the first stage °C/s | Temperatur e after heating in the first stage °C | Heating rate in the second stage °C/s | Soakin g temper ature °C | Soaki ng time s | Coolin g rate °C/s | Tempe rature after cooling °C | Cooli ng rate °C/s | Temper ature after cooling °C | | | | | Heat- ing rate °C/s | Tempera- ture °C | Ti me s | | |
| Ex.18 | 680 | 40 | 15 | 550 | 500 | 770 | 60 | 15 | 700 | 50 | 240 | 10 | 10 | 460 | 42 | / | / | / | 100 | 185.84 |
| Ex.19 | 650 | 80 | 30 | 570 | 300 | 790 | 50 | 13 | 705 | 70 | 230 | 8 | 20 | 465 | 50 | / | / | / | 80 | 154.77 |
| Ex.20 | 610 | 70 | 80 | 600 | 150 | 800 | 40 | 11 | 710 | 80 | 235 | 6 | 30 | 470 | 40 | / | / | / | 75 | 119.40 |
| Ex.21 | 580 | 60 | 150 | 625 | 80 | 820 | 30 | 9 | 730 | 100 | 260 | 4 | 25 | 465 | 55 | / | / | / | 60 | 122.37 |
| Ex.22 | 550 | 65 | 300 | 610 | 50 | 845 | 10 | 6 | 750 | 120 | 280 | 2 | 15 | 463 | 60 | / | / | / | 50 | 115.82 |
| Ex.23 | 590 | 55 | 500 | 605 | 30 | 835 | 20 | 5 | 770 | 130 | 250 | 3 | 30 | 461 | 35 | / | / | / | 30 | 98.54 |
| Ex.24 | 640 | 45 | 250 | 590 | 200 | 795 | 55 | 12 | 715 | 140 | 238 | 7 | 25 | 468 | 20 | / | / | / | 140 | 106.14 |
| Ex.25 | 590 | 63 | 350 | 615 | 450 | 780 | 11 | 14 | 720 | 150 | 252 | 9 | 20 | 460 | 10 | / | / | / | 150 | 51.42 |
| Ex.26 | 570 | 55 | 400 | 620 | 350 | 815 | 35 | 10 | 735 | 100 | 270 | 8 | 15 | 460 | 35 | / | / | / | 120 | 107.46 |
| Ex.27 | 560 | 75 | 250 | 580 | 250 | 830 | 25 | 14 | 710 | 200 | 245 | 5 | 10 | 470 | 45 | / | / | / | 90 | 114.14 |
| Ex.28 | 600 | 72 | 100 | 590 | 150 | 820 | 30 | 15 | 745 | 170 | 235 | 4 | 26 | 465 | 55 | / | / | / | 100 | 115.23 |
| Ex.29 | 550 | 50 | 200 | 610 | 200 | 835 | 20 | 6 | 770 | 180 | 233 | 3 | 28 | 470 | 60 | / | / | / | 125 | 111.06 |
| Ex.30 | 680 | 40 | 15 | 550 | 500 | 770 | 60 | 15 | 720 | 50 | 240 | 7 | 18 | 460 | 20 | 10 | 480 | 20 | 30 | 183.93 |
| Ex.31 | 650 | 80 | 30 | 570 | 300 | 790 | 50 | 13 | 710 | 70 | 230 | 6 | 19 | 465 | 35 | 50 | 490 | 17 | 60 | 160.78 |
| Ex.32 | 610 | 70 | 80 | 600 | 150 | 800 | 40 | 11 | 740 | 80 | 235 | 3 | 15 | 470 | 45 | 100 | 510 | 15 | 90 | 144.86 |
| Ex.33 | 580 | 60 | 150 | 620 | 80 | 820 | 30 | 9 | 730 | 100 | 260 | 2 | 12 | 466 | 50 | 150 | 530 | 10 | 150 | 134.19 |
| Ex.34 | 550 | 65 | 300 | 610 | 50 | 845 | 10 | 6 | 770 | 120 | 280 | 4 | 23 | 467 | 60 | 300 | 550 | 5 | 250 | 112.78 |
| Tradition- alprocess 11 | 680 | 79 | 11 | 150 | 8 | 770 | 160 | 10 | 675 | 100 | 230 | 2 | 21 | 470 | 290 | / | / | / | 30 | 573.70 |

| | Hot rolling coiling °C | Cold rolling reduction rate % | Rapid heat treatment (two-stage) | | | | | | | | | | | | | | | | Finale ooling rate °C/s | Total time of rapid heat treat-ment and hot gal-vanizi ng s |
|---|---|---|---|---|---|---|---|---|---|---|---|---|---|---|---|---|---|---|---|---|
| | | | Rapid heating (two-stage) | | | Soaking | | Slow cooling | | Rapid cooling | | Re-side nce time af-ter final cooling s | reheati ng rate °C/s | Parti tioni ng temp eratu re °C | Parti tioni ng time s | Alloying treatment | | | | |
| | | | Heat-ing rate in the first stage °C/s | Temperatur e after heating in the first stage °C | Heating rate in the second stage °C/s | Soakin g temper ature °C | Soaki ng time s | Coolin g rate °C/s | Tempe rature after cooling °C | Cooli ng rate °C/s | Temper ature after cooling °C | | | | | Heat-ing rate °C/s | Tempera-ture °C | Ti me s | | |
| Tradition-alprocess 12 | 650 | 76 | 10 | 150 | 7 | 790 | 130 | 9 | 675 | 80 | 250 | 2 | 23 | 465 | 260 | / | / | / | 60 | 527.70 |
| Tradition-alprocess 13 | 610 | 70 | 11 | 180 | 6 | 800 | 110 | 10 | 675 | 75 | 240 | 2 | 28 | 460 | 230 | / | / | / | 90 | 488.48 |
| Tradition-alprocess 14 | 580 | 65 | 13 | 210 | 5 | 820 | 90 | 8 | 675 | 60 | 260 | 2 | 22 | 470 | 160 | / | / | / | 120 | 425.20 |
| Tradition-alprocess 15 | 550 | 60 | 15 | 250 | 5 | 845 | 70 | 12 | 675 | 50 | 280 | 2 | 16 | 470 | 180 | / | / | / | 150 | 422.01 |
| Tradition-alprocess 16 | 680 | 79 | 11 | 150 | 8 | 770 | 160 | 10 | 675 | 100 | 230 | 2 | 17 | 470 | 290 | 12 | 480 | 20 | 30 | 605.55 |
| Tradition-alprocess 17 | 650 | 76 | 10 | 150 | 7 | 790 | 130 | 9 | 675 | 80 | 250 | 2 | 15 | 465 | 270 | 16 | 490 | 17 | 60 | 565.25 |
| Tradition-alprocess 18 | 610 | 70 | 11 | 180 | 6 | 800 | 110 | 10 | 675 | 75 | 240 | 2 | 21 | 460 | 250 | 10 | 510 | 15 | 90 | 534.10 |
| Tradition-alprocess 19 | 580 | 65 | 13 | 210 | 5 | 820 | 90 | 8 | 675 | 60 | 260 | 2 | 19 | 470 | 230 | 20 | 530 | 10 | 120 | 511.96 |

| | Hot rolling coiling °C | Cold rolling reduction rate % | Rapid heat treatment (two-stage) | | | | | | | | | | | | | | | | | Finale ooling rate °C/s | Total time of rapid heat treatmentand hot galvanizi ng s |
|---|---|---|---|---|---|---|---|---|---|---|---|---|---|---|---|---|---|---|---|---|---|
| | | | Rapid heating (two-stage) | | | Soaking | | Slow cooling | | Rapid cooling | | Residence time after final cooling s | reheating rate °C/s | Partitioning temperature °C | Partitioning time s | Alloying treatment | | | | | |
| | | | Heating rate in the first stage °C/s | Temperature after heating in the first stage °C | Heating rate in the second stage °C/s | Soaking temperature °C | Soaking time s | Cooling rate °C/s | Temperature after cooling °C | Cooling rate °C/s | Temperature after cooling °C | | | | | Heating rate °C/s | Temperature °C | Times s | | | |
| Traditional process 20 | 550 | 60 | 15 | 250 | 5 | 845 | 70 | 12 | 675 | 50 | 280 | 2 | 20 | 470 | 200 | 25 | 550 | 5 | 150 | 449.63 |

Table 19

| No. | Test steel | Type of the Products | Main process parameters (Rapid heating-one stage) | Yield strength MPa | Tensile strength MPa | Elongation % | Product of strength and elongation MPa% |
|---|---|---|---|---|---|---|---|
| 1 | A | Hot dip galvanized GI | Traditional process 1 | 771 | 1188 | 19.2 | 22809.6 |
| 2 | A | | Ex.1 | 837 | 1282 | 20.2 | 25896.4 |
| 3 | B | | Traditional process 2 | 753 | 1203 | 20.2 | 24300.6 |
| 4 | B | | Ex.2 | 813 | 1296 | 21.8 | 28252.8 |
| 5 | C | | Traditional process 3 | 788 | 1183 | 20.4 | 24133.2 |
| 6 | C | | Ex.3 | 861 | 1319 | 21.2 | 27962.8 |
| 7 | D | | Traditional process 4 | 807 | 1233 | 21.1 | 26016.3 |
| 8 | D | | Ex.4 | 956 | 1289 | 21.6 | 27842.4 |
| 9 | E | | Traditional process 5 | 801 | 1192 | 22.3 | 26581.6 |
| 10 | E | | Ex.5 | 939 | 1285 | 22.3 | 28655.5 |
| 11 | N | | Ex.6 | 880 | 1288 | 21 | 27048 |
| 12 | F | | Ex. 7 | 842 | 1286 | 21.5 | 27649 |
| 13 | K | | Ex. 8 | 855 | 1316 | 21.1 | 27767.6 |
| 14 | R | | Ex.9 | 905 | 1333 | 19.6 | 26126.8 |
| 15 | G | | Ex. 10 | 907 | 1341 | 21.2 | 28429.2 |
| 16 | P | | Ex.11 | 804 | 1335 | 20.7 | 27634.5 |
| 17 | S | | Ex.12 | 875 | 1352 | 20.8 | 28121.6 |
| 18 | O | Alloy galvannealed GA | Ex.13 | 825 | 1349 | 19.7 | 26575.3 |
| 19 | O | | Traditional process 6 | 721 | 1242 | 21.8 | 27075.6 |
| 20 | L | | Ex.14 | 802 | 1338 | 19.8 | 26492.4 |
| 21 | L | | Traditional process 7 | 756 | 1205 | 22 | 26510 |
| 22 | H | | Ex.15 | 878 | 1297 | 21.6 | 28015.2 |
| 23 | H | | Traditional process 8 | 767 | 1230 | 22.1 | 27183 |
| 24 | Q | | Ex. 16 | 826 | 1350 | 19.2 | 25920 |
| 25 | Q | | Traditional process 9 | 749 | 1234 | 20.2 | 24926.8 |
| 26 | I | | Ex. 17 | 819 | 1338 | 19.1 | 25555.8 |
| 27 | J | | Traditional process 10 | 782 | 1138 | 22.1 | 25149.8 |

Table 20

| No. | Test | Types of the steel Products | Main process parameters (Rapid heating-two stage) | Yield strength MPa | Tensile strength MPa | Elongation % | Product of strength and elongation MPa% |
|---|---|---|---|---|---|---|---|
| 1 | A | Hot dip galvanized GI | Traditional process 11 | 813 | 1216 | 19.8 | 24076.8 |
| 2 | A | | Ex. 19 | 860 | 1297 | 21 | 27237 |
| 3 | B | | Traditional process 12 | 837 | 1222 | 19.1 | 23340.2 |
| 4 | B | | Ex.20 | 859 | 1350 | 20.2 | 27270 |
| 5 | C | | Traditional process 13 | 800 | 1248 | 20.8 | 25958.4 |
| 6 | C | | Ex.21 | 834 | 1325 | 19 | 25175 |
| 7 | D | | Traditional process 14 | 805 | 1250 | 18.8 | 23500 |
| 8 | D | | Ex.22 | 824 | 1281 | 21.2 | 27157.2 |
| 9 | E | | Traditional process 15 | 804 | 1235 | 21.7 | 26799.5 |
| 10 | E | | Ex.23 | 822 | 1296 | 20.1 | 26049.6 |
| 11 | N | | Ex.18 | 842 | 1286 | 21.5 | 27649 |
| 12 | F | | Ex.24 | 836 | 1283 | 21 | 26943 |
| 13 | K | | Ex.25 | 833 | 1282 | 22.3 | 28588.6 |
| 14 | R | | Ex. 26 | 857 | 1282 | 20 | 25640 |
| 15 | G | | Ex.27 | 833 | 1291 | 22.4 | 28918.4 |
| 16 | P | | Ex.28 | 833 | 1291 | 21 | 27111 |
| 17 | S | | Ex.29 | 838 | 1282 | 21.5 | 27563 |
| 18 | O | Alloy galvannealed GA | Ex.30 | 844 | 1289 | 20 | 25780 |
| 19 | O | | Traditional process 16 | 802 | 1238 | 20.8 | 25750.4 |
| 20 | L | | Ex.31 | 822 | 1298 | 22.1 | 28685.8 |
| 21 | L | | Traditional process 17 | 803 | 1216 | 20.8 | 25292.8 |
| 22 | H | | Ex.32 | 817 | 1280 | 22.5 | 28800 |
| 23 | H | | Traditional process 18 | 816 | 1239 | 21.6 | 26762.4 |
| 24 | Q | | Ex.33 | 834 | 1292 | 21.1 | 27261.2 |
| 25 | Q | | Traditional process 19 | 807 | 1230 | 22.1 | 27183 |
| 26 | I | | Ex.34 | 855 | 1338 | 21.6 | 28900.8 |
| 27 | J | | Traditional process 20 | 806 | 1216 | 21.4 | 26022.4 |

The present disclosure modifies the traditional continuous annealing hot-dip plating unit by using rapid heating and rapid cooling process to realize the rapid heat treatment hot-dip galvanizing process, which can greatly shorten the length of the heating section and soaking section of the traditional continuous annealing hot-dip galvanizing furnace, improve the production efficiency of the traditional continuous annealing hot-dip galvanizing unit, reduce production costs and energy consumption, and reduce the number of rollers in the continuous annealing hot-dip galvanizing furnace. This significantly reduces surface defects such as roller prints, pockmarks, scratches, etc, thus improves the quality control ability of strip steel surface and it is easy to obtain strip steel products with high surface quality. At the same time, through the establishment of a new continuous annealing unit using the rapid heat treatment hot-dip galvanizing process technology, it can provide advantages of short and compact hot-dip galvanizing unit, flexible mateiral, and strong regulation ability. For materials, strip steel grains can be refined to further improve material strength, reduce alloy cost and manufacturing difficulty in the process before heat treatment, and improve the use performance of materials such as forming and welding.

In summary, the present disclosure has greatly promoted the technological progress of continuous annealing hot-dip galvanizing process of cold-rolled strip steel by adopting the rapid heat treatment hot-dip galvanizing process. The austenitization of cold-rolled strip steel from room temperature to the final completion can be expected to be completed in more than ten seconds or even a few seconds, which greatly shortens the length of the heating section of the continuous annealing hot-dip galvanizing furnace. It is convenient to improve the speed and production efficiency of the continuous annealing hot-dip galvanizing unit, and significantly reduces the number of rolls in the furnace of the continuous annealing hot-dip galvanizing unit. For the rapid heat treatment hot-dip galvanizing production line with a unit speed of about 180 m/min, the number of rollers in the high-temperature furnace section does not exceed 10, which can significantly improve the quality of the strip steel surface. At the same time, the rapid heat treatment hot-dip galvanizing process can complete the recrystallization and austenitization in a very short time. It will also provide a more flexible microstructure design method of high-strength steel, so as to improve the material structure and the material properties without changing the alloy composition and pre-process conditions such as rolling process.

Advanced high-strength steel represented by hot-dip galvanized Q&P steel has broad application prospects. The rapid heat treatment hot-dip galvanizing technology has great development value. Their combination will surely provide more space for the development and production of hot-dip galvanized Q&P steel.

**Claims**

1. A low carbon low alloy Q&P steel or low carbon low alloy hot-galvanized Q&P steel having a tensile strength of $\geq$ 1180MPa, which comprises the following chemical components in mass percentages: C: 0.16~0.23%, Si: 1.1~2.0%, Mn: 1.6~3.0%, P$\leq$0.015%, S$\leq$0.005%, Al: 0.02~0.05%, optionally one or two Cr, Mo, Ti, Nb, V, and Cr+Mo+Ti+Nb+V$\leq$0.5%, with a balance of Fe and other unavoidable impurities;

   preferably, the low carbon low alloy Q&P steel having a tensile strength of $\geq$ 1180MPa is obtained by the following process:

   1) Smelting, casting
   wherein the above components are subjected to smelting and casting to form a slab;
   2) hot rolling, coiling
   wherein a hot rolling finishing temperature is $\geq A_{r3}$; then the steel plate is cooled to 550~680°C for coiling;
   3) cold rolling
   wherein a cold rolling reduction rate is 40~85%;
   4) Rapid heat treatment

   wherein the steel plate after cold rolling is rapidly heated to 770~845°C, wherein the rapid heating is performed in one stage or two stages; when the rapid heating is performed in one stage, a heating rate is 50-500 °C/s; when the rapid heating is performed in two stages, the steel plate is heated in the first stage from room temperature to 550~625°C at a heating rate of 15~500°C/s, heated in the second stage from 550~625°C to 770~845°C at a heating rate of 50~500°C/s; then soaked at a soaking temperature of 770-845 °C for a soaking time of 10~60s; wherein after soaking, the steel plate is slowly cooled to 700-770 °C at a cooling rate of 5~15°C/s, then rapidly cooled to 230~280°C at a cooling rate of 50~200°C/s, and heat preserved in this temprature range for 2-10s, then heated to 300-470 °C at a heating rate of 10-30 °C/s for tempering treatment for 10~60s; and after tempering treatment, cooled to room temperature at a cooling rate of 30~100°C/s;
   preferably, low carbon low alloy hot-galvanized Q&P steel having a tensile strength of $\geq$ 1180MPa is prepared by the following process:

   1) Smelting, casting

wherein the above components are subjected to smelting and casting to form a slab;

2) hot rolling, coiling

wherein a hot rolling finishing temperature is $\geq A_{r3}$; then the steel plate is cooled to 550~680°C for coiling;

3) cold rolling

wherein a cold rolling reduction rate is 40~80%;

4) Rapid heat treatment, hot-galvanizing

wherein the steel plate after cold rolling is rapidly heated to 770~845°C, wherein the rapid heating is performed in one stage or two stages; when the rapid heating is performed in one stage, a heating rate is 50-500 °C/s; when the rapid heating is performed in two stages, the steel plate is heated in the first stage from room temperature to 550~620°C at a heating rate of 15~500°C/s, heated in the second stage from 550~625°C to 770~845°C at a heating rate of 30~500°C/s; then soaked at a soaking temperature of 770-845 °C for a soaking time of 10~60s; wherein after soaking, the steel plate is slowly cooled to 700-770 °C at a cooling rate of 5~15°C/s, then rapidly cooled to 230~280°C at a cooling rate of 50~200°C/s, and heat preserved in the temperature range for 2~10s; then the steel plate is heated to 460-470 °C at a heating rate of 10-30 °C/s for partitioning, wherein the partitioning time is 10~60s; then the steel plate is immersed in a zinc pot for hot galvanizing;

after hot galvanizing, the steel plate is rapidly cooled to room temperature at a cooling rate of 30~150°C/s to obtain a hot dip galvanized GI product; or after hot galvanizing, the steel plate is heated to 480~550°C at a heating rate of 10~300°C/s and alloyed for 5~20s; after alloying, the steel plate is rapidly cooled to room temperature at a cooling rate of 30~250°C/s to obtain an alloy galvannealed GA product.

2. The low carbon low alloy Q&P steel or low carbon low alloy hot-galvanized Q&P steel having a tensile strength of $\geq$ 1180MPa according to claim 1, wherein in the low carbon low alloy Q&P steel and low carbon low alloy hot-dip galvanized Q&P steel having a tensile strength of $\geq$1180MPa, the C content is in a range selected from a group consisting of 0.17~0.23%, 0.19~0.21% and 0.18~0.21%;

the Si content is in a range selected from a group consisting of 1.1~1.7%, 1.3~1.5%, 1.4~2.0% and 1.6-1.8%;
the Mn content is in a range selected from a group consisting of 1.6~2.2%, 1.8~2.0%, 2.4~3.0% and 2.6~2.8%;
the Cr content is$\leq$0.35%, such as $\leq$0.25%;
the Mo content is $\leq$0.25%;
the Nb content is $\leq$0.06%, such as $\leq$0.04%;
the Ti content is $\leq$0.065%, such as $\leq$0.04%, for example, 0.006~0.016%;
the V content is $\leq$0.055%, such as $\leq$0.035%.

3. The low carbon low alloy Q&P steel or low carbon low alloy hot-galvanized Q&P steel having a tensile strength of $\geq$ 1180MPa according to claim 1 or 2, wherein the coiling temperature is 580~650°C, and/or, the cold rolling reduction rate is 60~80%.

4. The low carbon low alloy Q&P steel or low carbon low alloy hot-galvanized Q&P steel having a tensile strength of $\geq$ 1180MPa according to any one of claims 1-3,

wherein a total time of the rapid heat treatment is 71~186s, wherein a total time of the rapid heat treatment and hot-galvanizing is 43~186s; and/or
wherein when the rapid heating is performed in one stage, the heating rate is 50~300°C/s; and/or
wherein the rapid heating is performed in two stages, wherein the steel plate is heated in the first stage from room temperature to 550~625°C at a heating rate of 15~300°C/s, heated in the second stage from 550~625°C to 770~845°C at a heating rate of 50~300°C/s; preferably, the steel plate is heated in the first stage from room temperature to 550~625°C at a heating rate of 30~300°C/s, heated in the second stage from 550~625°C to 770~845°C at a heating rate of 80~300°C/s; and/or
wherein the rapid cooling rate of the steel plate is 50~150°C/s.

5. The low carbon low alloy Q&P steel or low carbon low alloy hot-galvanized Q&P steel having a tensile strength of $\geq$ 1180MPa according to any one of claims 1-4,

wherein the metallographic structure of the low carbon low alloy Q&P steel is a multiphase structure of 75~90% of martensite, 10~25% of residual austenite and 3~10% of ferrite, wherein the matrix structure is evenly distributed and has lamellar tempered martensite having a grain size of 1-3$\mu$m, wherein a uniformly distributed ferritic phase is present around the martensitic strengthening phase grains; and/or

wherein the low carbon low alloy Q&P steel has an austenite conversion rate of less than 8% at -50 °C and an austenite conversion rate of less than 30% at -190 °C; and/or

wherein the low carbon low alloy Q&P steel has a yield strength of ≥660MPa, a tensile strength of ≥1180MPa, an elongation of ≥18%, a product of strength and elongation of ≥24GPa%; preferably, the low carbon low alloy Q&P steel has a yield strength of 668~1112MPa, a tensile strength of 1181~1350MPa, an elongation of 18.9~24.2%, a product of strength and elongation of 24.1~28.97GPa%.

6. The low carbon low alloy Q&P steel or low carbon low alloy hot-galvanized Q&P steel having a tensile strength of ≥ 1180MPa according to any one of claims 1-5, wherein the low carbon low alloy Q&P steel comprises the following chemical components in mass percentages: C: 0.17~0.23%, Si: 1.1~1.7%, Mn: 1.6~2.2%, P≤0.015%, S≤0.005%, Al: 0.02~0.05%, optionally one or two Cr, Mo, Ti, Nb, V, and Cr+Mo+Ti+Nb+V≤0.5%, with a balance of Fe and other unavoidable impurities;

preferably, in the low carbon low alloy Q&P steel, the C content is 0.19~0.21%, and/or the Si content is 1.3~1.5%, and/or the Mn content is 1.8~2.0%;

preferably, the metallographic structure of the low carbon low alloy Q&P steel is a multiphase structure of 75~85% of martensite, 10~25% of residual austenite and 3~10% of ferrite;

preferably, the low carbon low alloy Q&P steel has a yield strength of 668~1002MPa, a tensile strength of 1181~1296MPa, an elongation of 18.9~24.2%, a product of strength and elongation of 24.1~28.6GPa%.

7. The low carbon low alloy Q&P steel or low carbon low alloy hot-galvanized Q&P steel having a tensile strength of ≥ 1180MPa according to any one of claims 1-5, wherein the low carbon low alloy Q&P steel comprises the following chemical components in mass percentages: C: 0.16~0.23%, Si: 1.4~2.0%, Mn: 2.4~3.0%, Ti: 0.006~0.016%, P≤0.015%, S≤0.002%, Al: 0.02~0.05%, optionally one or two Cr, Mo, Nb, V, and Cr+Mo+Ti+Nb+V≤0.5%, with a balance of Fe and other unavoidable impurities;

preferably, the low carbon low alloy Q&P steel has a tensile strength of ≥1280MPa;

preferably, in the low carbon low alloy Q&P steel, the C content is 0.18~0.21%, and/or the Si content is 1.6~1.8%, and/or the Mn content is 2.6~2.8%;

preferably, the metallographic structure of the low carbon low alloy Q&P steel is a multiphase structure of 80~90% of martensite, 10~20% of residual austenite and 3~5% of ferrite;

preferably, the low carbon low alloy Q&P steel has a yield strength of 754~1112MPa, a tensile strength of 1281~1350MPa, an elongation of 19~22.2%, a product of strength and elongation of 24.8~28.97GPa%.

8. The low carbon low alloy Q&P steel or low carbon low alloy hot-galvanized Q&P steel having a tensile strength of ≥ 1180MPa according to any one of claims 1-4,

wherein the metallographic structure of the hot-galvanized Q&P steel is a three-phase structure of martensite, ferrite and austenitie, wherein the matrix structure is evenly distributed and has lamellar tempered martensite having a grain size of 1-3μm, wherein a uniformly distributed ferritic phase is present around the martensitic reinforced phase grains; preferably, the metallographic structure of the hot-galvanized Q&P steel is a three-phase structure of 45~75% by volume of martensite, 15~30% by volumne of ferrite and 10~25% by volume of austenite; and/or

wherein the hot-galvanized Q&P steel has a yield strength of ≥720MPa, a tensile strength of ≥1180MPa, an elongation of ≥19%, a product of strength and elongation of ≥23.0GPa%; preferably, the hot-galvanized Q&P steel has a yield strength of 721~956MPa, a tensile strength of 1184~1352MPa, an elongation of 19~22.5%, a product of strength and elongation of 23.6~28.9GPa%; and/or

wherein the metallographic structure of the hot-galvanized Q&P steel has an austenite conversion rate of less than 8% at -50 °C and an austenite conversion rate of less than 30% at -190 °C.

9. The low carbon low alloy Q&P steel or low carbon low alloy hot-galvanized Q&P steel having a tensile strength of ≥ 1180MPa according to any one of claims 1-4 and 8, wherein the low carbon low alloy hot-galvanized Q&P steel comprises the following chemical components in mass percentages: C: 0.17~0.23%, Si: 1.1~1.7%, Mn: 1.6~2.2%, P≤0.015%, S≤0.005%, Al: 0.02~0.05%, optionally one or two Cr, Mo, Ti, Nb, V, and Cr+Mo+Ti+Nb+V≤0.5%, with a balance of Fe and other unavoidable impurities;

preferably, in the hot-galvanized Q&P steel, the C content is 0.19~0.21%, and/or the Si content is 1.3~1.5%, and/or the Mn content is 1.8~2.0%;

preferably, the metallographic structure of the hot-galvanized Q&P steel is a three-phase structure of 45~75% by volume of martensite, 15~30% by volumne of ferrite and 10~25% by volume of austenite;

preferably, the hot-galvanized Q&P steel has a yield strength of 721~805MPa, a tensile strength of 1184~1297MPa, an elongation of 19.1~22.4%, a product of strength and elongation of 23.6~28GPa%.

10. The low carbon low alloy Q&P steel or low carbon low alloy hot-galvanized Q&P steel having a tensile strength of $\geq$ 1180MPa according to any one of claims 1-4 and 8, wherein the low carbon low alloy hot-galvanized Q&P steel comprises the following chemical components in mass percentages: C: 0.16~0.23%, Si: 1.4~2.0%, Mn: 2.4~3.0%, Ti 0.006~0.016%, P$\leq$0.015%, S$\leq$0.002%, Al: 0.02~0.05%, optionally one or two Cr, Mo, Nb, V, and Cr+Mo+Ti+Nb+V$\leq$0.5%, with a balance of Fe and other unavoidable impurities;

preferably, the low carbon low alloy hot-galvanized Q&P steel has a tensile strength of $\geq$1280MPa;
preferably, in the hot-galvanized Q&P steel, the C content is 0.18~0.21%, and/or the Si content is 1.6~1.8%, and/or the Mn content is 2.6~2.8%;
preferably, the hot-galvanized Q&P steel has a yield strength of 802~956MPa, a tensile strength of 1280~1352MPa, an elongation of 19~22.5%, a product of strength and elongation of 25.2~28.9GPa%.

11. A manufacturing process of the low carbon low alloy Q&P steel or low carbon low alloy hot-galvanized Q&P steel having a tensile strength of $\geq$ 1180MPa according to any one of claims 1-10, wherein the manufacturing process of the low carbon low alloy Q&P steel comprises the following steps:

1) Smelting, casting
wherein the above components are subjected to smelting and casting to form a slab;
2) Hot rolling, coiling
wherein a hot rolling finishing temperature is $\geq A_{r3}$; and a coiling temperature is 550~680°C;
3) Cold rolling
wherein a cold rolling reduction rate is 40~85%, thereby obtaining a rolled hard strip steel or steel plate;
4) Rapid heat treatment

a) rapid heating

wherein the strip steel or steel plate after cold rolling is rapidly heated to 770~845°C, wherein the rapid heating is performed in one stage or two stages;
when the rapid heating is performed in one stage, a heating rate is 50~500 °C/s; when the rapid heating is performed in two stages, the strip steel or steel plate is heated in the first stage from room temperature to 550~625°C at a heating rate of 15~500°C/s, heated in the second stage from 550~625°C to 770~845°C at a heating rate of 50~500°C/s;

b) Soaking
wherein the strip steel or steel plate is soaked at a temperature of 770-845 °C, which is the target temperature of the dual phase region of austenite and ferrite, for a soaking time of 10~60s;
c) Cooling,
wherein after soaking, the strip steel or steel plate is slowly cooled to 720-770 °C at a cooling rate of 5~15°C/s, then rapidly cooled to 230~280°C at a cooling rate of 50~200°C/s and heat preserved in this temperature range for 2~10s;
d) tempering
wherein after heat preservation, the strip or steel plate is heated to 300-470 °C at a heating rate of 10-30 °C/s for tempering treatment, wherein the tempering time is 10~60s;
e) after tempering, the strip or steel plate is cooled to room temperature at a cooling rate of 30~100°C/s;

wherein the manufacturing process of the low carbon low alloy hot-galvanized Q&P steel comprises the following steps:

1) Smelting, casting
wherein the above components are subjected to smelting and casting to form a slab;
2) Hot rolling, coiling
wherein a hot rolling finishing temperature is $\geq A_{r3}$; and a coiling temperature is 550~680°C;
3) Cold rolling

wherein a cold rolling reduction rate is 40~80%, thereby obtaining a rolled hard strip steel or steel plate;
4) Rapid heat treatment, hot-galvanizing

    a) rapid heating

        wherein the strip steel or steel plate after cold rolling is rapidly heated to 770~845°C, which is the target temperature of the dual phase region of austenite and ferrite, wherein the rapid heating is performed in one stage or two stages;
        when the rapid heating is performed in one stage, a heating rate is 50-500 °C/s;
        when the rapid heating is performed in two stages, the strip steel or steel plate is heated in the first stage from room temperature to 550~625°C at a heating rate of 15~500°C/s, heated in the second stage from 550~625°C to 770~845°C at a heating rate of 30~500°C/s (such as 50~500°C/s);

    b) Soaking
    wherein the strip steel or steel plate is soaked at a temperature of 770-845 °C, which is the target temperature of the dual phase region of austenite and ferrite, for a soaking time of 10~60s;
    c) Cooling,
    wherein after soaking, the strip steel or steel plate is slowly cooled to 720-770 °C at a cooling rate of 5~15°C/s, then rapidly cooled to 230~280°C at a cooling rate of 50~200°C/s and heat preserved in this temperature range for 2~10s, such as 2~8s;
    d) partitioning
    wherein, after heat preservation, the strip or steel plate is heated to 460-470 °C at a heating rate of 10-30 °C/s for partitioning, wherein the partitioning time is 10~60s;
    e) hot-galvanizing
    wherein, after partitioning, the strip or steel plate is immersed in a zinc pot for hot galvanizing;
    f) after hot galvanizing, the strip steel or steel plate is rapidly cooled to room temperature at a cooling rate of 30~150°C/s to obtain a hot dip galvanized GI product; or after hot galvanizing, the strip steel or steel plate is heated to 480~550°C at a heating rate of 10~300°C/s and alloyed for 5~20s; after alloying, the strip steel or steel plate is rapidly cooled to room temperature at a cooling rate of 30~250°C/s to obtain an alloy galvannealed GA product.

12. The process according to claim 11, wherein the coiling temperature is 580~650°C.

13. The process according to claim 10 or 11, wherein the cold rolling reduction rate is 60~80%.

14. The process according to any one of claims 11-13,

    wherein a total time of the rapid heat treatment of the low carbon low alloy Q&P steel is 71~186s, wherein a total time of the rapid heat treatment and hot-galvanizing of the low carbon low alloy hot-galvanized Q&P steel is 43~186s; and/or
    wherein when the rapid heating is performed in one stage, the heating rate is 50~300°C/s; and/or
    wherein the rapid heating is performed in two stages, wherein the steel plate is heated in the first stage from room temperature to 550~625°C at a heating rate of 15~300°C/s, heated in the second stage from 550~625°C to 770~845°C at a heating rate of 50~300°C/s; preferably, the steel plate is heated in the first stage from room temperature to 550~625°C at a heating rate of 30~300°C/s, heated in the second stage from 550~625°C to 770~845°C at a heating rate of 80~300°C/s;
    wherein the final temperature after rapid heating in the rapid heating step is 790~845°C; and/or
    wherein the cooling rate of the strip steel or steel plate in the cooling step is 50~150°C/s; and/or
    wherein, in the soaking process, after the strip steel or steel plate is heated to the target temperature of dual phase region of austenite and ferrite, the temperature is kept unchanged for soaking; and/or
    wherein in the soaking process, the strip steel or steel plate is slightly heated up or cooled down in the soaking time, wherein the temperature after heating is no more than 845°C and the temperature after cooling is no less than 770°C; and/or
    wherein the soaking time is 10~40s.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

## INTERNATIONAL SEARCH REPORT

| International application No. |
|---|
| **PCT/CN2022/084518** |

| A. | CLASSIFICATION OF SUBJECT MATTER |
|---|---|

C22C 38/02(2006.01)i;  C22C 38/04(2006.01)i;  C22C 38/06(2006.01)i;  C22C 38/12(2006.01)i;  C22C 38/14(2006.01)i;  C21D 1/26(2006.01)i;  C21D 8/02(2006.01)i

According to International Patent Classification (IPC) or to both national classification and IPC

| B. | FIELDS SEARCHED |
|---|---|

Minimum documentation searched (classification system followed by classification symbols)

C22C; C21D

Documentation searched other than minimum documentation to the extent that such documents are included in the fields searched

Electronic data base consulted during the international search (name of data base and, where practicable, search terms used)

CNABS, CNTXT, CNKI, EPODOC, DWPI, SIPOABS: Q&P钢, QP钢, 淬火配分, 碳配分, 1180MPa, 碳, 硅, 锰, 铝, Q&P steel, QP steel, quenching & partitioning steel, carbon, silicon, manganese, aluminium, aluminum, C, Si, Mn, Al

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106244923 A (BAOSHAN IRON & STEEL CO., LTD.) 21 December 2016 (2016-12-21) claims 1, 6, and 7 | 1-14 |
| A | CN 111118397 A (PANZHIHUA IRON & STEEL RESEARCH INSTITUTE, PANGANG GROUP) 08 May 2020 (2020-05-08) entire document | 1-14 |
| A | CN 111349771 A (MAANSHAN IRON & STEEL CO., LTD.) 30 June 2020 (2020-06-30) entire document | 1-14 |
| A | CN 111315908 A (ARCELORMITTAL) 19 June 2020 (2020-06-19) entire document | 1-14 |
| A | CN 110964969 A (BENGANG STEEL PLATES CO., LTD.) 07 April 2020 (2020-04-07) entire document | 1-14 |
| A | JP 2004323951 A (NIPPON STEEL CORP.) 18 November 2004 (2004-11-18) entire document | 1-14 |
| A | JP 2004308002 A (KOBE STEEL LTD.) 04 November 2004 (2004-11-04) entire document | 1-14 |

☑ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 June 2022** | **24 June 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2022/084518** |

**C.    DOCUMENTS CONSIDERED TO BE RELEVANT**

| Category* | Citation of document, with indication, where appropriate, of the relevant passages | Relevant to claim No. |
|---|---|---|
| A | JP 2004231992 A (NIPPON STEEL CORP.) 19 August 2004 (2004-08-19) entire document | 1-14 |

Form PCT/ISA/210 (second sheet) (January 2015)

**INTERNATIONAL SEARCH REPORT**
Information on patent family members

International application No.

**PCT/CN2022/084518**

| Patent document cited in search report | | | Publication date (day/month/year) | Patent family member(s) | | | Publication date (day/month/year) |
|---|---|---|---|---|---|---|---|
| CN | 106244923 | A | 21 December 2016 | EP | 3508606 | A1 | 10 July 2019 |
| | | | | JP | 2019531408 | A | 31 October 2019 |
| | | | | WO | 2018041089 | A1 | 08 March 2018 |
| | | | | US | 2019194774 | A1 | 27 June 2019 |
| | | | | KR | 20190034596 | A | 02 April 2019 |
| CN | 111118397 | A | 08 May 2020 | | None | | |
| CN | 111349771 | A | 30 June 2020 | | None | | |
| CN | 111315908 | A | 19 June 2020 | BR | 112020007515 | A2 | 06 October 2020 |
| | | | | CA | 3080680 | A1 | 16 May 2019 |
| | | | | RU | 2020117334 | A | 26 November 2021 |
| | | | | MA | 50556 | A | 16 September 2020 |
| | | | | WO | 2019092481 | A1 | 16 May 2019 |
| | | | | ZA | 202002308 | B | 31 March 2021 |
| | | | | JP | 2021502488 | A | 28 January 2021 |
| | | | | EP | 3707288 | A1 | 16 September 2020 |
| | | | | WO | 2019092578 | A1 | 16 May 2019 |
| | | | | KR | 20200064122 | A | 05 June 2020 |
| | | | | US | 2021002740 | A1 | 07 January 2021 |
| CN | 110964969 | A | 07 April 2020 | | None | | |
| JP | 2004323951 | A | 18 November 2004 | JP | 4317384 | B2 | 19 August 2009 |
| JP | 2004308002 | A | 04 November 2004 | JP | 4268079 | B2 | 27 May 2009 |
| JP | 2004231992 | A | 19 August 2004 | JP | 4714404 | B2 | 29 June 2011 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003027825 A
- CN 1081931138 B
- CN 109136779 A
- CN 108431248 A
- CN 109182923 A
- CN 105543674 B
- CN 201711385126
- CN 107794357 B
- US 20190153558 A1